(19) Europäisches Patentamt
European Patent Office
Office européen des brevets

(11) EP 2 645 725 B1

(12) **EUROPEAN PATENT SPECIFICATION**

(45) Date of publication and mention
of the grant of the patent:
**23.05.2018 Bulletin 2018/21**

(21) Application number: **12848650.3**

(22) Date of filing: **05.11.2012**

(51) Int Cl.:
***H04N 13/00*** *(2018.01)*

(86) International application number:
**PCT/JP2012/078621**

(87) International publication number:
**WO 2013/069604 (16.05.2013 Gazette 2013/20)**

(54) **IMAGE DATA TRANSMISSION DEVICE, IMAGE DATA TRANSMISSION METHOD, AND IMAGE DATA RECEIVING DEVICE**

BILDDATENÜBERTRAGUNGSVORRICHTUNG, BILDDATENÜBERTRAGUNGSVERFAHREN UND BILDDATENEMPFANGSVORRICHTUNG

DISPOSITIF DE TRANSMISSION DE DONNÉES D'IMAGE, PROCÉDÉ DE TRANSMISSION DE DONNÉES D'IMAGE ET DISPOSITIF DE RÉCEPTION DE DONNÉES D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.11.2011 JP 2011248114**
**10.04.2012 JP 2012089769**
**10.05.2012 JP 2012108961**
**02.07.2012 JP 2012148958**

(43) Date of publication of application:
**02.10.2013 Bulletin 2013/40**

(73) Proprietor: **Saturn Licensing LLC**
**New York, NY 10022-3211 (US)**

(72) Inventors:
• **TSUKAGOSHI, Ikuo**
**Tokyo 108-0075 (JP)**
• **ICHIKI, Shoji**
**Tokyo 108-0075 (JP)**

(74) Representative: **Witte, Weller & Partner**
**Patentanwälte mbB**
**Postfach 10 54 62**
**70047 Stuttgart (DE)**

(56) References cited:
EP-A1- 1 501 316          WO-A1-2007/066868
WO-A1-2009/075418      WO-A1-2009/119955
WO-A1-2010/067810      JP-A- 2009 124 768
JP-A- 2011 010 255        JP-A- 2011 223 625
US-A1- 2003 095 177      US-A1- 2008 303 893

## Description

Technical Field

The present technology relates to an image data transmission device, an image data transmission method, and an image data reception device, and particularly to an image data transmission device and the like which transmit image data for displaying stereoscopic images.

Background Art

In the related art, H.264/AVC (Advanced Video Coding) is known as a coding method of moving images (refer to NPL 1). In addition, H.264/MVC (Multi-view Video Coding) is known as an extension method of H.264/AVC (refer to NPL 2). The MVC employs a structure in which image data of multi-views is collectively coded. In the MVC, image data of multi-views is coded as image data of a single base view and image data of one or more non-base views.

In addition, H.264/SVC (Scalable Video Coding) is also known as an extension method of H.264/AVC (refer to NPL 3). The SVC is a technique of hierarchically coding an image. In the SVC, a moving image is divided into a base layer (the lowest layer) having image data which is required to decode a moving image so as to have minimum quality and an enhancement layer (a higher layer) having image data which is added to the base layer so as to increase quality of a moving image.

Citation List

Patent Literature

The following documents disclose that it is known to insert metadata, including view positional relationship, in a video data stream, including within an elementary stream:

    US-A-2003/0095177
    WO-A-2009/119955
    EP-A-1501316

Non Patent Literature

    NPL 1: "Draft Errata List with Revision-Marked Corrections for H.264/AVC", JVT-1050, Thomas Wiegand et al., Joint Video Team (JVT) of ISO/IEC MPEG & ITU-T VCEG, 2003
    NPL 2: Joint Draft 4.0 on Multiview Video Coding, Joint Video Team of ISO/IEC MPEG & ITU-T VCEG, JVT-X209, July 2007
    NPL 3: Heiko Schwarz, Detlev Marpe, and Thomas Wiegand, "Overview of the Scalable Video Coding Extension of the H.264/AVC Standard", IEEE TRANSACTIONS ON CIRCUITS AND SYSTEMS FOR VIDEO TECHNOLOGY, VOL. 17, NO. 9, SEPTEMBER 2007, pp. 1103 to 1120.

Summary of Invention

Technical Problem

In delivery circumstances in which an AVC stream and an MVC stream are dynamically changed, it is expected that a receiver corresponding to the MVC determines whether a stream includes only "Stream_Type=0x1B" or both of "Stream_Type=0x1B" and "Stream_Type=0x20", and performs switching between reception modes.

A normal AVC (2D) video elementary stream is sent using "Stream_Type=0x1B" of Program Map Table (PMT). In addition, an MVC base view video elementary stream (Base view sub-bitstream) is sent using "Stream_Type=0x1B" of the PMT in some cases.

A structure in which an AVC stream or an MVC stream can be discriminated depending on a level of the PMT which is Program Specific Information (PSI) is provided in a section of a transport stream. In other words, when a video elementary stream includes only "Stream_Type=0x1B", the stream is recognized as a 2D AVC stream. In addition, when a video elementary stream includes both of "Stream_Type=0x1B" and "Stream_Type=0x20", the stream is recognized as an MVC stream.

However, there is a case where the PMT is not necessarily dynamically updated depending on transmission side equipment. In this case, the following inconvenience is considered when delivery content is changed from a stereoscopic (3D) image to a two-dimensional (2D) image. In other words, it is considered that a receiver also continuously receives a stream of which the stream type (Stream_Type) is "0x20" along with an elementary stream of which the stream type (Stream_Type) is "0x1B" and thus continuously waits for the data.

Although an elementary stream of "0x20" is not received after the delivery content is changed to a two-dimensional (2D) image, the receiver continuously waits for the elementary stream of "0x20" to come. As a result, there is concern that correct decoding may not be performed, and normal display may not be performed. As such, in a case where the receiver determines a mode thereof using only the kind of "Stream_type" of the PMT and, there is a probability that the mode may not be correct, and a correct stream may not be received.

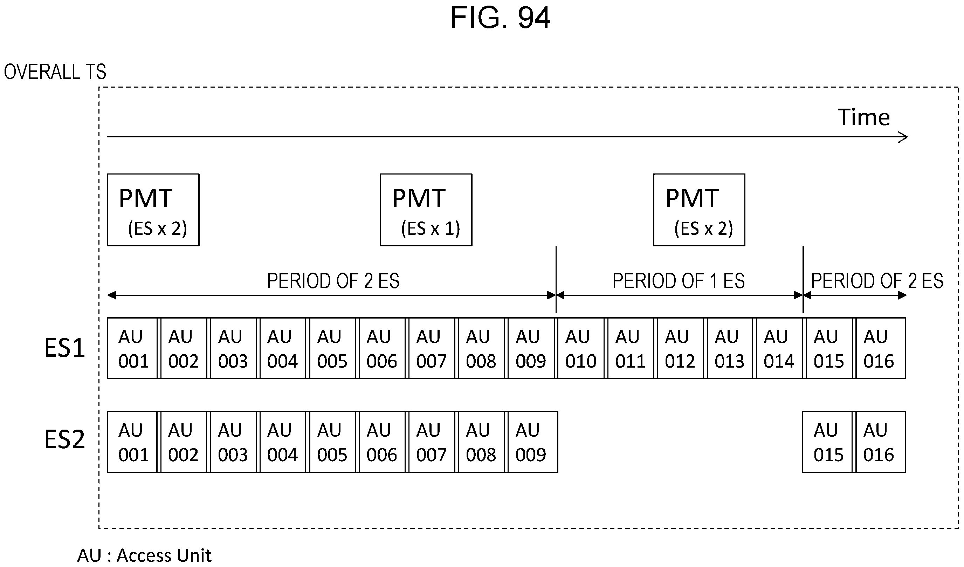

Fig. 94 shows a configuration example of a video elementary stream and a Program Map Table (PMT) in a transport stream. The period of access units (AU) of "001" to "009" of video elementary streams ES1 and ES2 is a period when two video elementary streams are present. This period is, for example, a body period of a 3D program, and the two streams form a stream of stereoscopic (3D) image data.

The period of access units of "010" to "014" of the video elementary stream ES1, subsequent thereto, is a period when only one video elementary stream is present. This period is, for example, a CM period inserted between body periods of a 3D program, and this single stream forms a stream of two-dimensional image data.

In addition, the period of access units of "015" and "016" of video elementary streams ES1 and ES2, subsequent thereto, is a period when two video elementary streams are present. This period is, for example, a body period of a 3D program, and the two streams form a stream of stereoscopic (3D) image data.

A cycle (for example, 100 msec) of updating registration of a video elementary stream in the PMT cannot track a video frame cycle (for example, 33.3 msec). In a method of informing of a dynamic variation in an elementary stream forming a transport stream by using the PMT, the elementary stream is not synchronized with a configuration of the transport stream of the PMT, and thus an accurate operation of the receive is not secured.

In addition, in the existing signal standard (MPEG), a descriptor of "MVC_extension descriptor" is essentially inserted into an MVC base view video elementary stream (Base view sub-bitstream) of "Stream_Type=0x1B" as a descriptor of the PMT. When this descriptor is present, the presence of a non-base view video elementary stream (Non-Base view sub-bitstream) can be recognized.

However, it cannot be said that a video elementary stream of "Elementary PID" indicated by "Stream_Type=0x1B" is the above-described MVC base view video elementary stream (Base view sub-bitstream). There is a case where the stream may be an AVC (in this case, broadly a high profile) stream in the related art. Particularly, in order to secure compatibility with an existing 2D receiver, there is a case where it is recommended that, even in stereoscopic (3D) image data, a base view video elementary stream maintains an AVC (2D) video elementary stream in the related art.

In this case, a stream of stereoscopic image data is formed by an AVC (2D) video elementary stream and a non-base view video elementary stream (Non-Base view sub-bitstream). In that case, a descriptor of "MVC_extension descriptor" is not correlated with a video elementary stream of "Stream_Type=0x1B". For this reason, the presence of the non-base view video elementary stream (Non-Base view sub-bitstream) other than the AVC (2D) video elementary stream corresponding to a base view video elementary stream is not recognized.

In addition, in the above description, a description has been made that it is difficult to determine whether or not an elementary stream included in the transport stream forms stereoscopic (3D) image data. Detailed description is omitted, and this inconvenience also occurs in a case where an AVC stream and the above-described SVC stream are transmitted in a time division manner.

An object of the present technology is to enable a reception side to appropriately and accurately handle a dynamic variation in delivery content so as to receive a correct stream.

Solution to Problem

The invention is set out in the independent claims; the dependent claims relate to advantageous further embodiments.

A concept of the present technology lies in an image data transmission device including a transmission unit that transmits one or a plurality of video streams including a predetermined number of image data items; and an information inserting unit that inserts auxiliary information for identifying a first transmission mode in which a plurality of image data items are transmitted and a second transmission mode in which a single image data item is transmitted, into the video stream.

In the present technology, one or a plurality of video streams including image data of a predetermined number of views are transmitted by the transmission unit. In addition, an information inserting unit inserts auxiliary information for identifying the first transmission mode in which a plurality of image data items are transmitted and the second transmission mode in which a single image data item is transmitted into the video stream. For example, the information inserting unit may insert the auxiliary information, at least with the program unit, the scene unit, the picture group unit, or the picture unit.

For example, the first transmission mode may be a stereoscopic image transmission mode in which base view image data and non-base view image data used along with the base view image data are transmitted so as to display a stereoscopic image, and the second transmission mode may be a two-dimensional image transmission mode in which two-dimensional image data is transmitted.

In addition, in this case, for example, the first transmission mode may be a stereoscopic image transmission mode in which image data of a left eye view and image data of a right eye view for displaying a stereo stereoscopic image are transmitted. Further, in this case, for example, the auxiliary information indicating the stereoscopic image transmission mode may include information indicating a relative positional relationship of each view.

Furthermore, for example, the first transmission mode may be an extension image transmission mode in which image data of the lowest layer forming scalable coded image data and image data of layers other than the lowest layer are transmitted, and the second transmission mode may be a base image transmission mode in which base image data is transmitted.

In the present technology, for example, the information inserting unit may insert auxiliary information indicating the first transmission mode into the video stream in the first transmission mode and inserts auxiliary information indicating the second transmission mode into the video stream in the second transmission mode.

In addition, in the present technology, for example, the information inserting unit may insert auxiliary information indicating the first transmission mode into the video stream in the first transmission mode and may not insert the auxiliary information into the video stream in the second transmission mode.

Further, the information inserting unit may not insert the auxiliary information into the video stream in the first transmission mode and may insert auxiliary information indicating the second transmission mode into the video stream in the second transmission mode.

In addition, in the present technology, for example, the transmission unit may transmit a base video stream including first image data and a predetermined number of additional video streams including second image data used along with the first image data in the first transmission mode, and transmit a single video stream including the first image data in the second transmission mode.

In addition, in the present technology, for example, the transmission unit may transmit a base video stream including first image data and a predetermined number of additional video streams including second image data used along with the first image data in the first transmission mode, and transmit a base video stream including first image data and a predetermined number of additional video streams substantially including image data which is the same as the first image data in the second transmission mode.

As above, in the present technology, when one or a plurality of video streams including a predetermined number of image data items are transmitted, auxiliary information for identifying the first transmission mode in which a plurality of image data items are transmitted and the second transmission mode in which a single image data item is transmitted is inserted into the video stream. For this reason, a reception side can easily understand the first transmission mode or the second transmission mode on the basis of this auxiliary information, so as to appropriately and accurately handle a variation in a stream configuration, that is, a dynamic variation in delivery content, thereby receiving a correct stream.

In addition, in the present technology, the transmission unit may transmit a container of a predetermined format including the video stream, and the image data transmission device may further include identification information inserting unit that inserts identification information for identifying whether to be in the first transmission mode or in the second transmission mode, into a layer of the container. As such, identification information is inserted into the layer of the container, and thereby a flexible operation can be performed in a reception side.

Another concept of the present technology lies in an image data reception device including a reception unit that receives one or a plurality of video streams including a predetermined number of image data items; a transmission mode identifying unit that identifies a first transmission mode in which a plurality of image data items are transmitted and a second transmission mode in which a single image data item is transmitted on the basis of auxiliary information which is inserted into the received video stream; and a processing unit that performs a process corresponding to each mode on the received video stream on the basis of the mode identification result, so as to acquire the predetermined number of image data items.

In the present technology, one or a plurality of video streams including a predetermined number of image data items are received by the reception unit. The first transmission mode in which a plurality of image data items are transmitted or the second transmission mode in which a single image data item is transmitted are identified by the transmission mode identifying unit on the basis of auxiliary information which is inserted into the received video stream.

For example, the first transmission mode may be a stereoscopic image transmission mode in which base view image data and non-base view image data used along with the base view image data are transmitted so as to display a stereoscopic image, and the second transmission mode may be a two-dimensional image transmission mode in which two-dimensional image data is transmitted. In addition, for example, the first transmission mode may be an extension image transmission mode in which image data of the lowest layer forming scalable coded image data and image data of layers other than the lowest layer are transmitted, and the second transmission mode may be a base image transmission mode in which base image data is transmitted.

In the present technology, for example, the transmission mode identifying unit may identify the first transmission mode when auxiliary information indicating the first transmission mode is inserted into the received video stream, and identify the second transmission mode when auxiliary information indicating the second transmission mode is inserted into the received video stream.

In addition, in the present technology, for example, the transmission mode identifying unit may identify the first transmission mode when auxiliary information indicating the first transmission mode is inserted into the received video stream, and identify the second transmission mode when the auxiliary information is not inserted into the received video stream.

Further, in the present technology, for example, the transmission mode identifying unit may identify the first transmission mode when the auxiliary information is not inserted into the received video stream, and identify the second transmission mode when auxiliary information indicating the second transmission mode is inserted into the received video stream.

In addition, in the present technology, for example, the reception unit may receive a base video stream including first image data and a predetermined number of additional video streams including second image data used along with the first image data in the first transmission mode, and receive a single video stream including the first image data in the second transmission mode. In this case, the processing unit may process the base video stream and the predetermined number of additional video streams so as to acquire the first image data and the second image data in the first transmission mode, and process the single video stream so as to acquire the first image data in the second transmission mode.

Further, in the present technology, for example, the reception unit may receive a base video stream including first image data and a predetermined number of additional video streams including second image data used along with the first image data in the first transmission mode, and receive a base video stream including first image data and a predetermined number of additional video streams substantially including image data which is the same as the first image data in the second transmission mode. In this case, the processing unit may process the base video stream and the predetermined number of additional video streams so as to acquire the first image data and the second image data in the first transmission mode, and process the base video stream so as to acquire the first image data without performing a process of acquiring the second image data from the predetermined number of additional video streams in the second transmission mode.

As above, in the present technology, the first transmission mode in which a plurality of image data items are transmitted or the second transmission mode in which a single image data item is transmitted are identified based on auxiliary information which is inserted into the received video stream. In addition, a process corresponding to the identified mode is performed on the received video stream so as to acquire a predetermined number of image data items. It is possible to easily understand the first transmission mode or the second transmission mode so as to appropriately and accurately handle a variation in a stream configuration, that is, a dynamic variation in delivery content, thereby receiving a correct stream.

In addition, in the present technology, for example, the reception unit may receive a container of a predetermined format including the video stream, and identification information for identifying whether to be in the first transmission mode or in the second transmission mode may be inserted into the container. In this case, the transmission mode identifying unit may identify the first transmission mode in which a plurality of image data items are transmitted or the second transmission mode in which a single image data item is transmitted on the basis of auxiliary information which is inserted into the received video stream and identification information which is inserted into the layer of the container.

Advantageous Effects of Invention

According to the present technology, a reception side can appropriately and accurately handle a configuration variation of an elementary stream, that is, a dynamic variation in delivery content, so as to favorably receive a stream.

Brief Description of Drawings

[Fig. 1] Fig. 1 is a block diagram illustrating a configuration example of an image transmission and reception system as an embodiment.

[Fig. 2] Fig. 2 is a diagram illustrating an example in which image data of each of center, left end and right end views is coded as data of a single picture.

[Fig. 3] Fig. 3 is a diagram illustrating an example in which image data of a center view is coded as data of a single picture, and image data of two left end and right end views undergoes an interleaving process so as to be coded as data of a single picture.

[Fig. 4] Fig. 4 is a diagram illustrating an example of a video stream including coded data of a plurality of pictures.

[Fig. 5] Fig. 5 is a diagram illustrating an example of a case where coded data items of three pictures are present together in a single video stream.

[Fig. 6] Fig. 6 is a diagram schematically illustrating a display unit of a receiver in a case where the number of views is 5 in a method of transmitting image data of left end and right end views and a center view located therebetween among N views.

[Fig. 7] Fig. 7 is a block diagram illustrating a configuration example of a transmission data generation unit which generates a transport stream.

[Fig. 8] Fig. 8 is a diagram illustrating a view selection state in a view selector of the transmission data generation unit.

[Fig. 9] Fig. 9 is a diagram illustrating an example of disparity data (disparity vector) of each block.

[Fig. 10] Fig. 10 is a diagram illustrating an example of a method of generating disparity data of the block unit.

[Fig. 11] Fig. 11 is a diagram illustrating a method of generating disparity data of the pixel unit through a conversion process from the block unit to the pixel unit.

[Fig. 12] Fig. 12 is a diagram illustrating a structural example of a multi-view stream configuration descriptor as identification information.

[Fig. 13] Fig. 13 is a diagram illustrating content of principal information in the structural example of the multi-view stream configuration descriptor.

[Fig. 14] Fig. 14 is a diagram illustrating a structural example of multi-view stream configuration information as view configuration information.

[Fig. 15] Fig. 15 is a diagram illustrating content of principal information in the structural example of the multi-view stream configuration information.

[Fig. 16] Fig. 16 is a diagram illustrating content of principal information in the structural example of the multi-view stream configuration information.

[Fig. 17] Fig. 17 is a diagram illustrating content of principal information in the structural example of the multi-view stream configuration information.

[Fig. 18] Fig. 18 is a diagram illustrating an example of a relationship between the number of views indicated by "view_count" and positions of two views indicated by "view_pair_position_id".

[Fig. 19] Fig. 19 is a diagram illustrating an example in which a transmission side or a reception side generates disparity data in a case of transmitting image data of a pair of two views located further inward than both ends along with image data of a pair of two views located at both ends.

[Fig. 20] Fig. 20 is a diagram illustrating an example in which the reception side interpolates and generates image data of a view located between the respective views on the basis of disparity data.

[Fig. 21] Fig. 21 is a diagram illustrating that multi-view stream configuration SEI is inserted into a "SELs" part of an access unit.

[Fig. 22] Fig. 22 is a diagram illustrating a structural example of "multiview stream configuration SEI message" and "userdata_for_multiview_stream_configuration()".

[Fig. 23] Fig. 23 is a diagram illustrating a structural example of "user_data()".

[Fig. 24] Fig. 24 is a diagram illustrating a configuration example of a case where three video streams are included in a transport stream TS.

[Fig. 25] Fig. 25 is a diagram illustrating a configuration example of a case where two video streams are included in a transport stream TS.

[Fig. 26] Fig. 26 is a diagram illustrating a configuration example of a case where a single video stream is included in a transport stream TS.

[Fig. 27] Fig. 27 is a block diagram illustrating a configuration example of a receiver forming the image transmission and reception system.

[Fig. 28] Fig. 28 is a diagram illustrating a calculation example of a scaling ratio.

[Fig. 29] Fig. 29 is a diagram schematically illustrating an example of an interpolation and generation process in a view interpolation unit.

[Fig. 30] Fig. 30 is a diagram illustrating an example of a reception stream in a case where a 3D period (when a stereoscopic image is received) and a 2D period (when a two-dimensional image is received) are alternately continued.

[Fig. 31] Fig. 31 is a diagram illustrating an example of a reception stream in a case where a 3D period (when a stereoscopic image is received) and a 2D period (when a two-dimensional image is received) are alternately continued.

[Fig. 32] Fig. 32 is a flowchart illustrating an example of process procedures of operation mode switching control in a CPU.

[Fig. 33] Fig. 33 is a diagram illustrating an example of a video stream included in a transport stream.

[Fig. 34] Fig. 34 is a diagram illustrating a case where a 3D period (a stereoscopic image transmission mode) and a 2D period (a two-dimensional image transmission mode) are alternately continued and there is no auxiliary information (multi-view stream configuration SEI message) for identifying a mode.

[Fig. 35] Fig. 35 is a diagram illustrating a case where a 3D period and a 2D period are alternately continued and there is auxiliary information (multi-view stream configuration SEI message) for identifying a mode.

[Fig. 36] Fig. 36 is a block diagram illustrating another configuration example of a receiver forming the image transmission and reception system.

[Fig. 37] Fig. 37 is a diagram illustrating a structural example (Syntax) of a multi-view view position (Multiview view position()) included in a multi-view stream configuration SEI message.

[Fig. 38] Fig. 38 is a diagram illustrating that multi-view position SEI is inserted into a "SEIs" part of an access unit.

[Fig. 39] Fig. 39 is a diagram illustrating an example of a reception stream in a case where a 3D period (when a stereoscopic image is received) and a 2D period (when a two-dimensional image is received) are alternately continued.

[Fig. 40] Fig. 40 is a diagram illustrating an example of a reception stream in a case where a 3D period (when a stereoscopic image is received) and a 2D period (when a two-dimensional image is received) are alternately continued.

[Fig. 41] Fig. 41 is a flowchart illustrating an example of process procedures of operation mode switching control in the CPU.

[Fig. 42] Fig. 42 is a diagram illustrating an example of a video stream included in a transport stream.

[Fig. 43] Fig. 43 is a diagram illustrating a case where a 3D period and a 2D period are alternately continued and there is auxiliary information (multi-view view position SEI message) for identifying a mode.

[Fig. 44] Fig. 44 is a flowchart illustrating an example of process procedures of operation mode switching control in the CPU.

[Fig. 45] Fig. 45 is a diagram illustrating a structural example (Syntax) of frame packing arrangement data (frame_packing_arrangement_data()).

[Fig. 46] Fig. 46 is a diagram illustrating a value of "arrangement_type" and the meaning thereof.

[Fig. 47] Fig. 47 is a diagram illustrating a structural example (Syntax) of "user_data()".

[Fig. 48] Fig. 48 is a diagram illustrating an example of a reception stream in a case where a 3D period (when a stereoscopic image is received) and a 2D period (when a two-dimensional image is received) are alternately continued.

[Fig. 49] Fig. 49 is a diagram illustrating a case where auxiliary information indicating a 2D mode is inserted with the scene unit or the picture group unit (GOP unit) during a 2D period.

[Fig. 50] Fig. 50 is a flowchart illustrating an example of process procedures of operation mode switching control in the CPU.

[Fig. 51] Fig. 51 is a diagram illustrating an example of a reception stream in a case where a 3D period (when a stereoscopic image is received) and a 2D period (when a two-dimensional image is received) are alternately continued.

[Fig. 52] Fig. 52 is a diagram illustrating a case where a 3D period and a 2D period are alternately continued and there is auxiliary information (an SEI message indicating a newly defined 2D mode) for identifying a mode.

[Fig. 53] Fig. 53 is a diagram illustrating an example in which image data of each view of the left eye and the right eye is coded as data of a single picture.

[Fig. 54] Fig. 54 is a block diagram illustrating another configuration example of the transmission data generation unit which generates a transport stream.

[Fig. 55] Fig. 55 is a block diagram illustrating another configuration example of the receiver forming the image transmission and reception system.

[Fig. 56] Fig. 56 is a diagram illustrating an example of a reception stream in a case where a 3D period (when a stereoscopic image is received) and a 2D period (when a two-dimensional image is received) are alternately continued.

[Fig. 57] Fig. 57 is a diagram illustrating an example of a reception stream in a case where a 3D period (when a stereoscopic image is received) and a 2D period (when a two-dimensional image is received) are alternately continued.

[Fig. 58] Fig. 58 is a diagram illustrating an example of a video stream included in a transport stream.

[Fig. 59] Fig. 59 is a diagram collectively illustrating methods of a case A, a case B and a case C for identifying a 3D period and a 2D period when a base stream and an additional stream are present in the 3D period and only a base stream is present in the 2D period.

[Fig. 60] Fig. 60 is a diagram illustrating an example of a reception stream in a case where a 3D period (when a stereoscopic image is received) and a 2D period (when a two-dimensional image is received) are alternately continued.

[Fig. 61] Fig. 61 is a diagram illustrating an example of a reception stream in a case where a 3D period (when a stereoscopic image is received) and a 2D period (when a two-dimensional image is received) are alternately continued.

[Fig. 62] Fig. 62 is a flowchart illustrating an example of process procedures of operation mode switching control in the CPU.

[Fig. 63] Fig. 63 is a diagram illustrating an example of a reception packet process when the receiver receives a stereoscopic (3D) image.

[Fig. 64] Fig. 64 is a diagram illustrating a configuration example (Syntax) of a NAL unit header (NAL unit header MVC extension).

[Fig. 65] Fig. 65 is a diagram illustrating an example of a reception packet process when the receiver receives a two-dimensional (2D) image.

[Fig. 66] Fig. 66 is a diagram illustrating an example of a video stream included in a transport stream.

[Fig. 67] Fig. 67 is a diagram illustrating a case where a 3D period (a 3D mode period) and a 2D period (a 2D mode period) are alternately continued and there is auxiliary information (multi-view view position SEI message) for identifying a mode.

[Fig. 68] Fig. 68 is a diagram illustrating an example of a reception stream in a case where a 3D period (when a stereoscopic image is received) and a 2D period (when a two-dimensional image is received) are alternately continued.

[Fig. 69] Fig. 69 is a diagram illustrating an example of a reception stream in a case where a 3D period (when a stereoscopic image is received) and a 2D period (when a two-dimensional image is received) are alternately continued.

[Fig. 70] Fig. 70 is a diagram illustrating an example of a video stream included in a transport stream.

[Fig. 71] Fig. 71 is a diagram illustrating a case where a 3D period (a 3D mode period) and a 2D period (a 2D mode period) are alternately continued and there is auxiliary information (multi-view view position SEI message) for identifying a mode.

[Fig. 72] Fig. 72 is a diagram illustrating an example of a reception stream in a case where a 3D period (when a stereoscopic image is received) and a 2D period (when a two-dimensional image is received) are alternately continued.

[Fig. 73] Fig. 73 is a diagram illustrating an example of a reception stream in a case where a 3D period (when a stereoscopic image is received) and a 2D period (when a two-dimensional image is received) are alternately continued.

[Fig. 74] Fig. 74 is a diagram illustrating an example of a video stream included in a transport stream.

[Fig. 75] Fig. 75 is a diagram illustrating a case where a 3D period and a 2D period are alternately continued and there is auxiliary information (an SEI message indicating a newly defined 2D mode) for identifying a mode.

[Fig. 76] Fig. 76 is a diagram illustrating an example of a reception stream in a case where a 3D period (when a stereoscopic image is received) and a 2D period (when a two-dimensional image is received) are alternately continued.

[Fig. 77] Fig. 77 is a diagram illustrating an example of a reception stream in a case where a 3D period (when a stereoscopic image is received) and a 2D period (when a two-dimensional image is received) are alternately continued.

[Fig. 78] Fig. 78 is a diagram illustrating an example of a video stream included in a transport stream.

[Fig. 79] Fig. 79 is a diagram collectively illustrating methods of a case D, a case E and a case F for identifying a 3D period and a 2D period when a base stream and an additional stream are present in both of the 3D period and the 2D period.

[Fig. 80] Fig. 80 is a diagram illustrating a stream configuration example 1 in which a base video stream and an additional video stream are transmitted in a 3D period (3D image transmission mode) and a single video stream (only a base video stream) is transmitted in a 2D period (2D image transmission mode).

[Fig. 81] Fig. 81 is a diagram illustrating a stream configuration example 2 in which a base video stream and an additional video stream are transmitted in both a 3D period (3D image transmission mode) and a 2D period (2D image transmission mode).

[Fig. 82] Fig. 82 is a diagram illustrating an example in which a base video stream and an additional video stream are present in both a 3D period and a 2D period, and signaling is performed using both a program loop and a video ES loop of a PMT.

[Fig. 83] Fig. 83 is a diagram illustrating a structural example (Syntax) of a stereoscopic program information descriptor (Stereoscopic_program_info_descriptor).

[Fig. 84] Fig. 84 is a diagram illustrating a structural example (Syntax) of an MPEG2 stereoscopic video descriptor.

[Fig. 85] Fig. 85 is a diagram illustrating a configuration example of a transport stream TS.

[Fig. 86] Fig. 86 is a diagram illustrating an example in which a base video stream and an additional video stream are present in both of a 3D period and a 2D period, and signaling is performed using a video ES loop of the PMT.

[Fig. 87] Fig. 87 is a diagram illustrating an example in which a base video stream and an additional video stream are present in both of a 3D period and a 2D period, and signaling is performed using a program loop of the PMT.

[Fig. 88] Fig. 88 is a diagram illustrating an example in which a base video stream and an additional video stream are present in a 3D period and only a base video stream is present in a 2D period, and signaling is performed using both a program loop and a video ES loop of the PMT.

[Fig. 89] Fig. 89 is a diagram illustrating an example in which a base video stream and an additional video stream are present in a 3D period and only a base video stream is present in a 2D period, and signaling is performed using a video ES loop.

[Fig. 90] Fig. 90 is a diagram illustrating an example in which a base video stream and an additional video stream are present in a 3D period and only a base video stream is present in a 2D period, and signaling is performed using a program loop of the PMT.

[Fig. 91] Fig. 91 is a diagram illustrating an example of a reception packet process when an extended image is received.

[Fig. 92] Fig. 92 is a diagram illustrating a configuration example (Syntax) of a NAL unit header (NAL unit header SVC extension).

[Fig. 93] Fig. 93 is a diagram illustrating an example of a reception packet process in a base image transmission mode.

[Fig. 94] Fig. 94 is a diagram illustrating a configuration example of a video elementary stream and a Program Map Table (PMT) in a transport stream.

Description of Embodiments

Hereinafter, embodiments of the present invention will be described. Further, the description will be made in the following order.

1. Embodiments
2. Modification examples

<1. Embodiments>

[Image transmission and reception system]

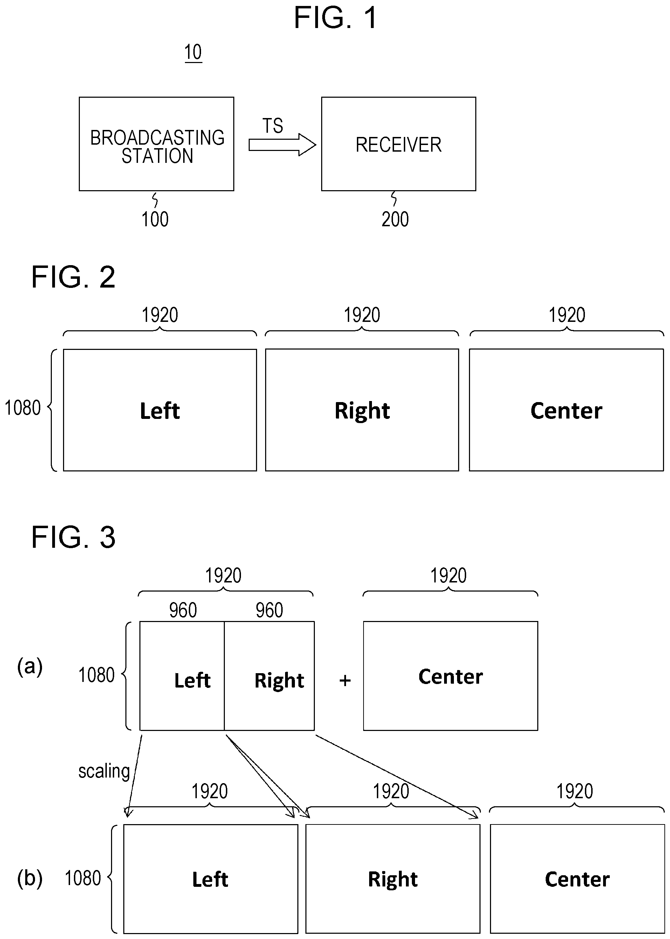

Fig. 1 shows a configuration example of an image transmission and reception system 10 as an embodiment. The image transmission and reception system 10 includes a broadcast station 100 and a receiver 200. The broadcast station 100 carries a transport stream TS which is a container on a broadcast wave so as to be transmitted.

When a stereoscopic (3D) image is transmitted, the transport stream TS includes one or a plurality of video streams which include image data of a predetermined number of, for example, three views for stereoscopic image display in this embodiment. In this case, the video streams are transmitted as, for example, an MVC base view video elementary stream (Base view sub-bitstream) and an MVC non-base view video elementary stream (Non-Base view sub-bitstream).

In addition, when a two-dimensional (2D) image is displayed, a video stream including a two-dimensional image data is included in the transport stream TS. In this case, the video stream is transmitted as, for example, an AVC (2D) video elementary stream.

The transport stream TS which is transmitted when a stereoscopic (3D) image is transmitted includes one or a plurality of video streams which are obtained by coding image data of at least a center view, a left end view, and a right end view among a plurality of views for stereoscopic image display. In this case, the center view forms an intermediate view located between the left end view and the right end view.

In the video stream included in the transport stream TS transmitted when the stereoscopic (3D) image is transmitted, as shown in Fig. 2, each of image data items of the center (Center) view, the left end (Left) view, and the right end (Right) view is coded as data of a single picture. In the shown example, data of each picture has a full HD size of 1920*1080.

Alternatively, in the video stream included in the transport stream TS transmitted when the stereoscopic (3D) image is transmitted, as shown in Fig. 3(a), image data of the center (Center) view is coded as data of a single picture, and image data items of the left end (Left) view and the right end (Right) view undergo an interleaving process and are coded as data of a single picture. In the shown example, data of each picture has a full HD size of 1920*1080.

In addition, in a case where image data items of the left end view and the right end view undergo an interleaving process and are coded as data of a single picture, the image data of each view is decimated by 1/2 in a horizontal direction or a vertical direction. In the shown example, the interleaving type is a side-by-side type, and the size of each view is 960*1080. Although not shown, a top-and-bottom type may be considered as an interleaving type, and, in this case, the size of each view is 1920*540.

As above, in a case where image data items of the left end view and the right end view undergo an interleaving process and are coded as data of a single picture, in a reception side, as shown in Fig. 3(b), a scaling process is performed, and thereby the size of image data of the left end view and the right end view is returned to a full HD size of 1920*1080.

A video stream included in the transport stream TS transmitted when a stereoscopic (3D) image is transmitted includes data of one or a plurality of pictures. For example, the transport stream TS includes the following three video streams (video elementary streams). In other words, the video streams are video streams obtained by coding each of image data items of the center view, the left end view, and the right end view as a single picture.

In this case, for example, a video stream obtained by coding image data of the center view as a single picture is an MVC base view video elementary stream (base video stream). In addition, the other two video streams obtained by coding each of image data items of the left end view and the right end view as a single picture are MVC non-base view video elementary stream (additional video stream).

In addition, for example, the transport stream TS includes the following two video streams (video elementary streams). In other words, the video streams are a video stream which is obtained by coding image data of the center view as a single picture and a video stream which is obtained by performing an interleaving process on image data items of the left end view and the right end view so as to be coded as a single picture.

In this case, for example, the video stream obtained by coding image data of the center view as a single picture is an MVC base view video elementary stream (base video stream). Further, the other video stream obtained by performing an interleaving process on image data items of the left end view and the right end view so as to be coded as a single picture is an MVC non-base view video elementary stream (additional video stream).

In addition, for example, the transport stream TS includes the following single video stream (video elementary stream). In other words, this single video stream includes data obtained by coding each of image data items of the center view, the left end view, and the right end view as data of a single picture. In this case, the single video stream is an MVC base view video elementary stream (base video stream).

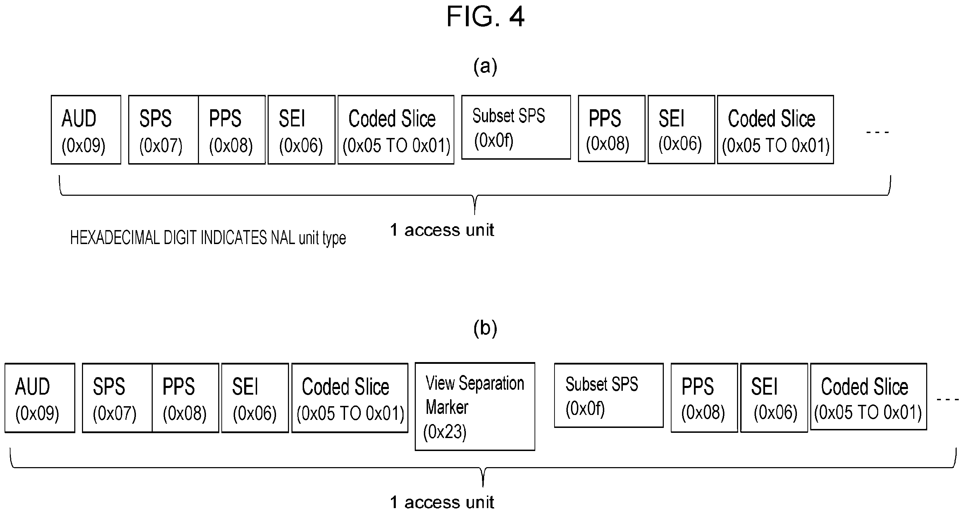

Figs. 4(a) and 4(b) show an example of the video stream including coded data of a plurality of pictures. Coded data of each picture is sequentially disposed in each access unit. In this case, coded data of the initial picture is constituted by "SPS to Coded Slice", and coded data of the second picture and thereafter is constituted by "Subset SPS to Coded Slice". Further, this example shows an example of performing coding of MPEG4-AVC but is also applicable to other coding methods. In addition, the hexadecimal digit in the figures indicates "NAL unit type".

In a case where coded data items of the respective pictures are present together in a single video stream, a boundary between the respective pictures is required to be instantly identified. However, Access Unit Delimeter (AUD) can be appended only to a head of each access unit. Therefore, as shown in Fig. 4(b), it is considered that new "NAL unit" which indicates a boundary such as "View Separation Marker" is defined and is disposed between the coded data times of the respective pictures. Thereby, it is possible to instantly access leading data of each picture. In addition, Fig. 4(a) shows an example in which "View Separation Marker" is not disposed between data items of two views.

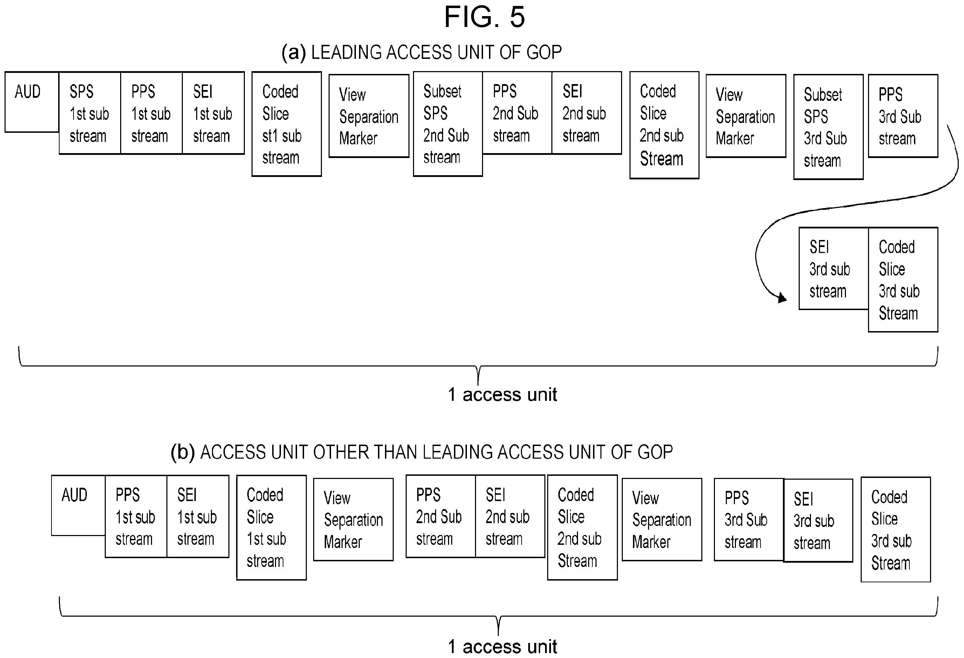

Figs. 5(a) and 5(b) show an example in which coded data items of three pictures are present together in a single video stream. Here, the coded data of each picture is indicated by a substream. Fig. 5(a) shows a leading access unit of Group of Pictures (GOP), and Fig. 5(b) shows an access unit other than the leading access unit of the GOP.

View configuration information regarding image data of a video stream is inserted into a layer (a picture layer, a sequence layer, or the like) of the video stream. The view configuration information forms auxiliary information which presents an element of stereoscopic information. The view configuration information includes information indicating whether or not image data included in a corresponding video stream is image data of a portion of views forming 3D, information (information indicating a relative positional relationship of each view) indicating image data of which view is image data included in the video stream in a case where the image data is image data of a portion of views forming 3D, information indicating whether data of a plurality of pictures is coded in a single access unit of the corresponding video stream, and the like.

This view configuration information is inserted into, for example, a user data region or the like of a picture header or a sequence header of a video stream. The view configuration information is inserted at least with the program unit, the scene unit, the picture group unit, or the picture unit. A reception side performs a 3D display process or a 2D display process on the basis of the view configuration information. In addition, in a case where the reception side performs a 3D display process on the basis of the view configuration information, an appropriate and efficient process for observing three-dimensional images (stereoscopic images) with the naked eye by using image data of a plurality of views is performed. Details of the view configuration information will be described later.

In addition, identification information for identifying whether or not view configuration information is inserted into a layer of a video stream is inserted into the layer of the transport stream TS. This identification information is inserted, for example, under a video elementary loop (Video ES loop) of a Program Map Table (PMT) included in the transport stream TS, an Event Information Table (EIT), or the like. A reception side can easily identify whether or not the view configuration information is inserted into a layer of a video stream on the basis of this identification information. Details of the identification information will be described later.

The receiver 200 receives the transport stream TS which is carried on a broadcast wave sent from the broadcast station 100. In addition, the receiver 200 decodes video streams included in the transport stream TS so as to acquire image data of a center view, a left end view, and a right end view when a stereoscopic (3D) image is transmitted. At this time, the receiver 200 can understand image data of which view position is image data included in each video stream on the basis of view configuration information included in the layer of the video stream.

The receiver 200 acquires image data of a predetermined number of views located between a center view and a left end view and between the center view and a right end view through an interpolation process on the basis of disparity data between the center view and the left end view and disparity data between the center view and the right end view. At this time, the receiver 200 can recognize the number of views on the basis of view configuration information included in the layer of the video stream, and thus can easily understand a view of which position is not transmitted.

In addition, the receiver 200 decodes a disparity data stream which is sent along with the video stream from the broadcast station 100 so as to acquire the above-described disparity data. Alternatively, the receiver 200 generates the above-described disparity data on the basis of the acquired disparity data of the center view, the left end view, and the right end view.

The receiver 200 combines and displays images of the respective views on a display unit such that three-dimensional images (stereoscopic images) are observed with the naked eye, on the basis of the image data of each of the center, left end and right end views sent from the broadcast station 100 and the image data of each view acquired from the above-described interpolation process.

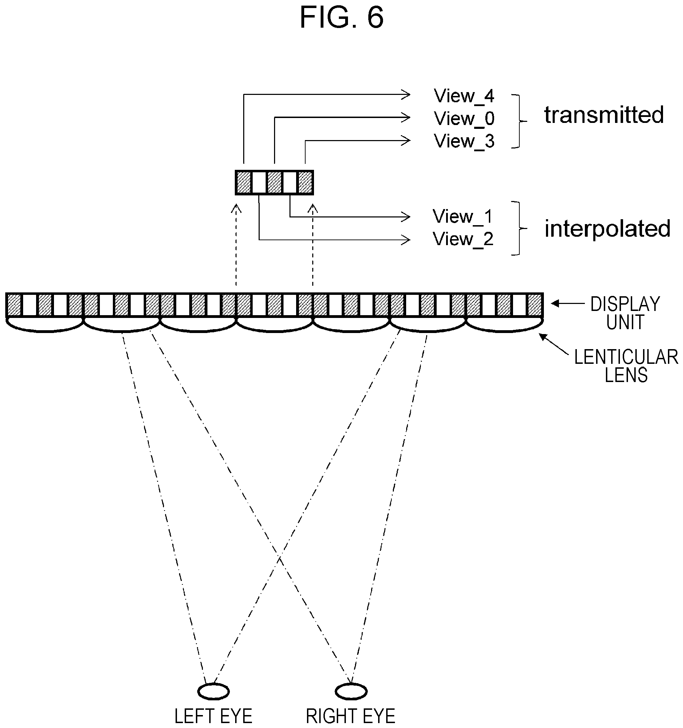

Fig. 6 schematically shows the display unit of the receiver 200 when the number of views is five. Here, "View_0" indicates a center view, "View_1" indicates a first right view next to the center, "View_2" indicates a first left view next to the center, "View_3" indicates a second right view next to the center, that is, a right end view, and "View_4" indicates a second left view next to the center, that is, a left end view. In this case, only image data of the views of "View_0", "View_3", and "View_4" is transmitted from the broadcast station 100, the receiver 200 receives the image data of the views of "View_0", "View_3", and "View_4", and the remaining image data of the views of "View_1" and "View_2" is obtained through an interpolation process. In addition, the receiver 200 combines and displays images of the five views on the display unit such that three-dimensional images (stereoscopic images) are observed with the naked eye. Further, Fig. 6 shows a lenticular lens, but, a parallax barrier may be used instead of it.

The receiver 200 decodes a video stream included in the transport stream TS so as to acquire two-dimensional image data when a two-dimensional (2D) image is transmitted. In addition, the receiver 200 displays a two-dimensional image on the display unit on the basis of the two-dimensional image data.

(Configuration example of transmission data generation unit)

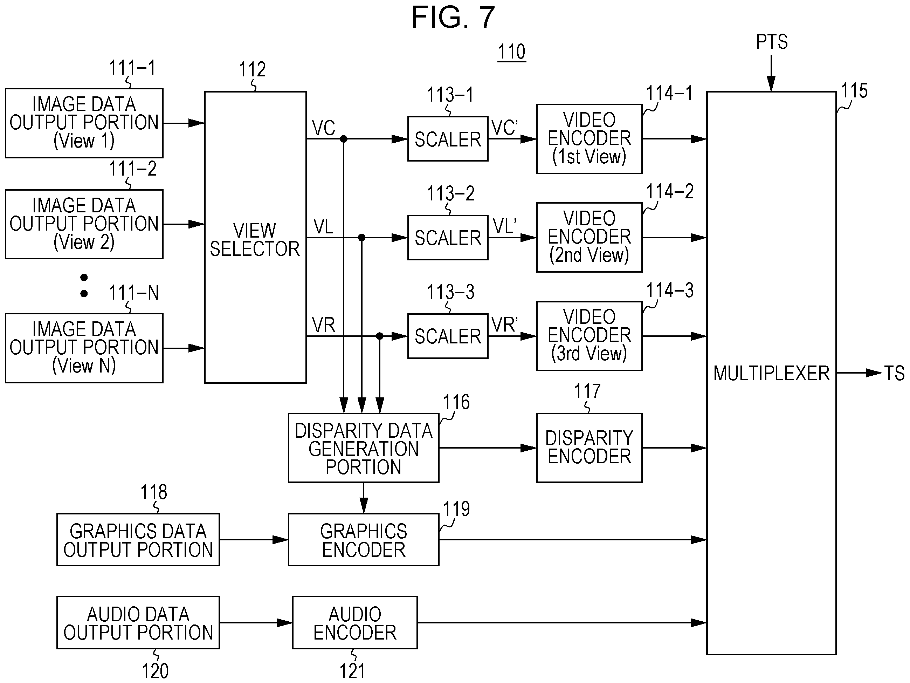

Fig. 7 shows a configuration example of a transmission data generation unit 110 which generates the above-described transport stream TS in the broadcast station 100. The transmission data generation unit 110 includes N image data output portions 111-1 to 111-N, a view selector 112, scalers 113-1, 113-2 and 113-3, video encoders 114-1, 114-2 and 114-3, and a multiplexer 115. In addition, the transmission data generation unit 110 includes a disparity data generation portion 116, a disparity encoder 117, a graphics data output portion 118, a graphics encoder 119, an audio data output portion 120, and an audio encoder 121.

First, a description will be made of a case where a stereoscopic (3D) image is transmitted. The image data output portions 111-1 to 111-N output image data of N views (View 1,..., and View N) for stereoscopic image display. The image data output portions are formed by, for example, a camera which images a subject and outputs image data, an image data reading portion which reads image data from a storage medium so as to be output, or the like. In addition, image data of a view which is not transmitted may not be present actually.

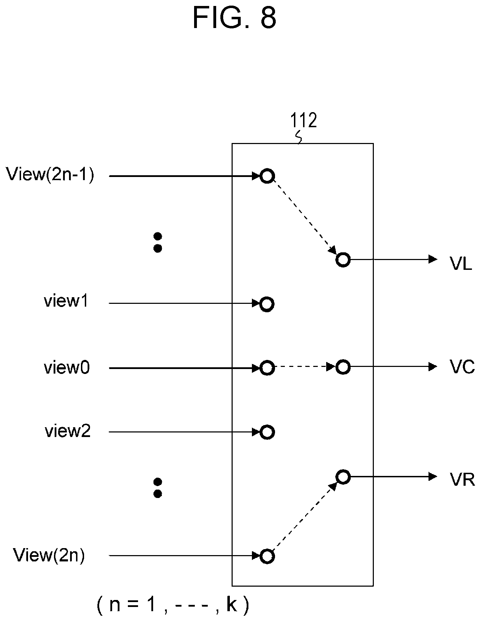

In addition, the view selector 112 extracts at least image data of a left end view and a right end view and selectively extracts image data of an intermediate view (one or two or more) located between the left end and the right end from image data of the N views (View 1,..., and View N). In this embodiment, the view selector 112 extracts image data VL of the left end view and image data VR of the right end view and extracts image data VC of the center view. Fig. 8 shows a view selection state in the view selector 112.

In addition, the scalers 113-1, 113-2 and 113-3 respectively perform a scaling process on the image data items VC, VL and VR, so as to obtain, for example, image data items VC', VL' and VR' of a full HD size of 1920*1080. In this case, when the image data items VC, VL and VR have the full HD size of 1920*1080, the image data items are output as they are. Further, when the image data items VC, VL and VR are greater than the size of 1920*1080, the image data items are scaled down and are then output.

The video encoder 114-1 performs coding such as, for example, MPEG4-AVC (MVC) or MPEG2video on the image data VC' of the center view so as to obtain coded video data. In addition, the video encoder 114-1 generates a video stream which includes the coded data as a substream (sub stream 1) by using a stream formatter (not shown) which is provided in the subsequent stage.

In addition, the video encoder 114-2 performs coding such as, for example, MPEG4-AVC (MVC) or MPEG2video on the image data VL' of the left end view so as to obtain coded video data. In addition, the video encoder 114-2 generates a video stream which includes the coded data as a substream (sub stream 2) by using a stream formatter (not shown) which is provided in the subsequent stage.

Further, the video encoder 114-3 performs coding such as, for example, MPEG4-AVC (MVC) or MPEG2video on the image data VR' of the right end view so as to obtain coded video data. In addition, the video encoder 114-3 generates a video stream which includes the coded data as a substream (sub stream 3) by using a stream formatter (not shown) which is provided in the subsequent stage.

The video encoders 114-1, 114-2 and 114-3 insert the above-described view configuration information into the layer of the video stream. The view configuration information includes, as described above, information indicating whether or not image data included in a corresponding video stream is image data of a portion of views forming 3D. Here, this information indicates that image data included in a corresponding video stream is image data of a portion of views forming 3D.

Further, this view configuration information includes information indicating image data of which view is image data included in a corresponding video stream, information indicating whether data of a plurality of pictures is coded in a single access unit of the corresponding video stream, and the like. This view configuration information is inserted into, for example, a user data region of a picture header or a sequence header of a video stream.

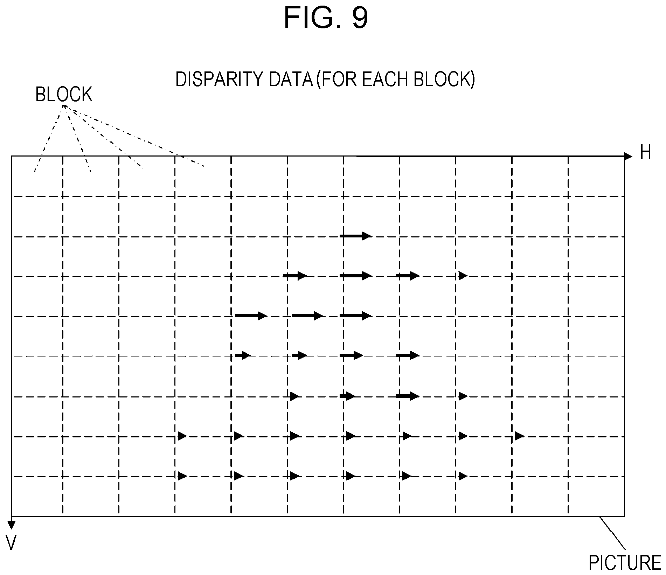

The disparity data generation portion 116 generates disparity data on the basis of the image data of each of the center, left end and right end views output from the view selector 112. The disparity data includes, for example, disparity data between the center view and the left end view and disparity data between the center view and the right end view. In this case, disparity data is generated with the pixel unit or the block unit. Fig. 9 shows an example of disparity data (disparity vector) for each block.

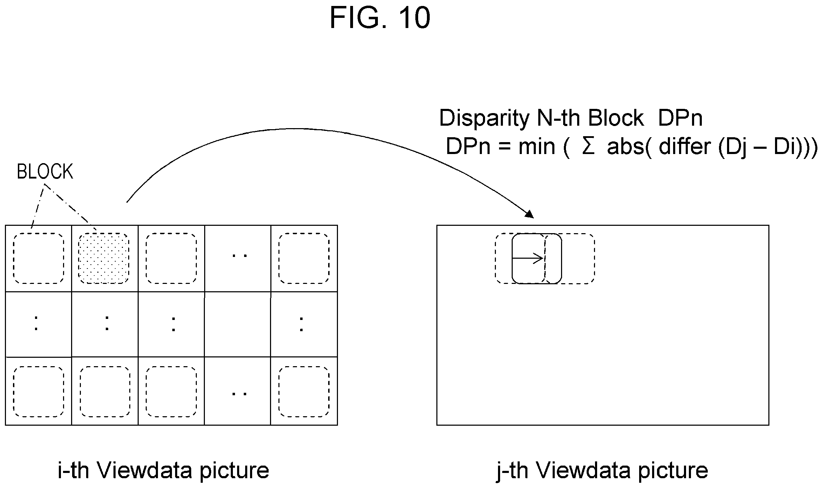

Fig. 10 shows an example of a method of generating disparity data of the block unit. This example is an example in which disparity data indicating a j-th view is obtained from an i-th view. In this case, pixel blocks (disparity detection blocks) such as, for example, 4*4, 8*8, or 16*16 are set in a picture of the i-th view.

As shown in the figure, the picture of the i-th view is a detection image, the picture of the j-th view is a reference image, and a block of the picture of the j-th view is searched such that a sum of absolute values of a difference between pixels becomes the minimum, for each block of the picture of the i-th view, thereby obtaining disparity data.

In other words, disparity data DPn of the N-th block is obtained through block search such that a sum of difference absolute values in the N-th block becomes the minimum as represented in the following Equation (1). In addition, in Equation (1), Dj indicates a pixel value in the picture of the j-th view, and Di indicates a pixel value in the picture of the i-th view.

$$DPn=min(\Sigma abs(differ(Dj-Di))) \quad (1)$$

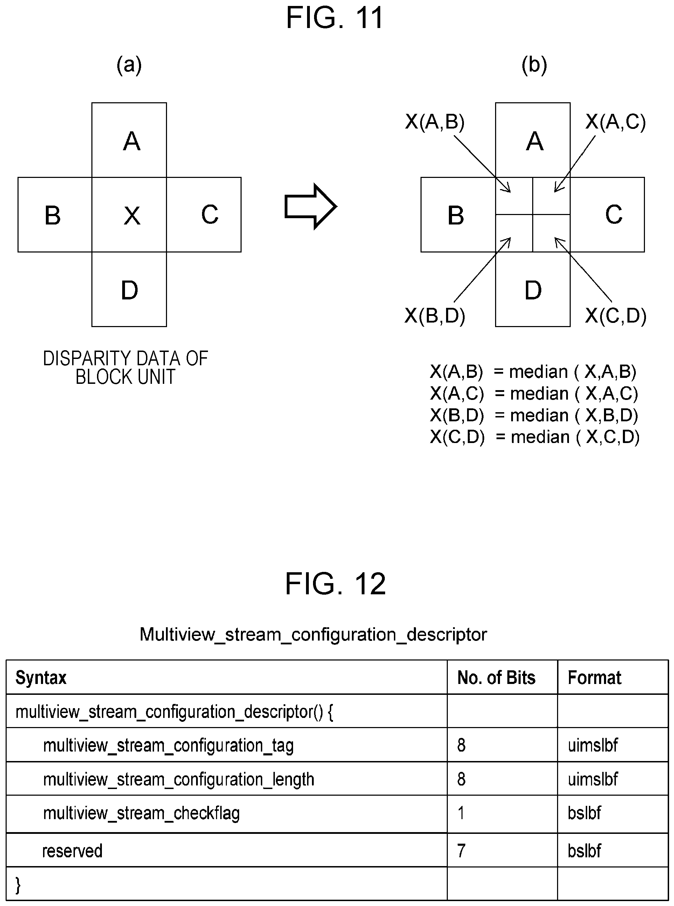

Fig. 11 shows an example of a method of generating disparity data of the pixel unit. This example corresponds to a method of generating disparity data of the pixel unit by replacing the block unit with the pixel unit. "A", "B", "C", "D", and "X" in Fig. 11(a) respectively indicate block regions.

From disparity data of the blocks, disparity data of each of four regions into which the block "X" is divided is obtained using the following Equation (2), as shown in Fig. 11(b). For example, disparity data X(A, B) of the divided region adjacent to "A" and "B" is a median of disparity data of the blocks "A", "B" and "X". This is also the same for the other divided regions and thus disparity data is obtained.

$$X(A, B)=median(X, A, B)$$
$$X(A, C)=median(X, A, C)$$
$$X(B, D)=median(X, B, D)$$
$$X(C, D)=median(X, C, D) \quad (2)$$

Through the above-described one conversion, a region occupied by the disparity data is reduced to a size of 1/2 of the original width and height size. By repeatedly performing the conversion a predetermined number of times, disparity data of the pixel unit is obtained based on the block size. In addition, in a case where an edge is included in a texture, complexity of an object in a screen is higher than other portions, or the like, it is possible to improve texture followability of disparity data itself of the initial block unit by appropriately setting a block size to be small.

The disparity encoder 117 performs coding on the disparity data generated by the disparity data generation portion 116 so as to generate a disparity stream (disparity data elementary stream). This disparity stream includes disparity data of the pixel unit or the block unit. In a case where the disparity data is the pixel unit, the disparity data can be compression-coded and be transmitted in the same as pixel data.

In addition, in a case where disparity data of the block unit is included in this disparity stream, a reception side performs the above-described conversion process so as to be converted into the pixel unit. Further, in a case where this disparity stream is not transmitted, as described above, the reception side may obtain disparity data of the block unit between the respective views and further perform conversion into the pixel unit.

The graphics data output portion 118 outputs data of graphics (also including subtitles as a caption) superimposed on an image. The graphics encoder 119 generates a graphics stream (graphics elementary stream) including the graphics data output from the graphics data output portion 118. Here, the graphics form superimposition information, and are, for example, a logo, a caption, and the like.

In addition, the graphics data output from the graphics data output portion 118 is, for example, data of graphics superimposed on an image of the center view. The graphics encoder 119 may create data of graphics superimposed on the left end and right end views on the basis of the disparity data generated by the disparity data generation portion 116, and may generate a graphics stream including the graphics data. In this case, it is not necessary for the reception side to create data of graphics superimposed on the left end and right end views.

The graphics data is mainly bitmap data. Offset information indicating a superimposed position on an image is added to the graphics data. The offset information indicates, for example, an offset value in a vertical direction and a horizontal direction from the origin on an upper left of an image to a pixel on an upper left of a superimposed position of graphics. In addition, a standard in which caption data is transmitted as bitmap data is operated, for example, through standardization as "DVB_Subtitling" with DVB which is a European digital broadcast standard.

The audio data output portion 120 outputs audio data corresponding to image data. The audio data output portion 120 is constituted by, for example, an audio data reading portion which reads audio data from a microphone or a storage medium so as to be output. The audio encoder 121 performs coding such as MPEG-2Audio or AAC on the audio data output from the audio data output portion 120 so as to generate an audio stream (audio elementary stream).

The multiplexer 115 packetizes and multiplexes the respective elementary streams generated by the video encoders 114-1, 114-2 and 114-3, the disparity encoder 117, the graphics encoder 119, and the audio encoder 121 so as to generate a transport stream TS. In this case, Presentation Time Stamp (PTS) is inserted into a header of each Packetized Elementary Stream (PES) such that synchronous reproduction is performed in the reception side.

The multiplexer 115 inserts the above-described identification information into a layer of the transport stream TS. This identification information is information for identifying whether or not view configuration information is inserted into a layer of a video stream. This identification information is inserted, for example, under a video elementary loop (Video ES loop) of a Program Map Table (PMT) included in the transport stream TS, an Event Information Table (EIT), or the like.

Next, a description will be made of a case where a two-dimensional (2D) image is transmitted. Any one of the image data output portions 111-1 to 111-N outputs two-dimensional image data. The view selector 112 extracts the two-dimensional image data. The scaler 113-1 performs a scaling process on the two-dimensional image data extracted by the view selector 112, so as to obtain, for example, two-dimensional image data of a full HD size of 1920*1080. In this case, the scalers 113-1 and 113-2 are in a non-operation state.

The video encoder 114-1 performs coding such as, for example, MPEG4-AVC (MVC) or MPEG2video on the two-dimensional image data so as to obtain coded video data. In addition, the video encoder 114-1 generates a video stream which includes the coded data as a substream (sub stream 1) by using a stream formatter (not shown) which is provided in the subsequent stage. In this case, the video encoders 114-1 and 114-2 are in a non-operation state.

The video encoder 114-1 inserts the above-described view configuration information into the layer of the video stream. The view configuration information includes, as described above, information indicating whether or not image data included in a corresponding video stream is image data of a portion of views forming 3D. Here, this information indicates that image data included in a corresponding video stream is not image data of a portion of views forming 3D. For this reason, the view configuration information does not include other information. In addition, when a two-dimensional (2D) image is transmitted, it is considered that the above-described view configuration information is not inserted into the layer of the video stream.

Although detailed description is omitted, the graphics data output portion 118, the graphics encoder 119, the audio data output portion 120, and the audio encoder 121 are the same as in a case of transmitting a stereoscopic (3D) image. In addition, the disparity data generation portion 116 and the disparity encoder 117 are also in a non-operation state.

The multiplexer 115 packetizes and multiplexes the respective elementary streams generated by the video encoder 114-1, the graphics encoder 119, and the audio encoder 121 so as to generate a transport stream TS. In this case, a Presentation Time Stamp (PTS) is inserted into a header of each Packetized Elementary Stream (PES) such that synchronous reproduction is performed in the reception side.

An operation of the transmission data generation unit 110 shown in Fig. 7 will be described briefly. First, a description will be made of an operation when a stereoscopic (3D) image is transmitted. Image data of N views (View 1,..., and View N) for stereoscopic image display, output from the N image data output portions 111-1 to 111-N, is supplied to the view selector 112. The view selector 112 extracts image data VC of the center view, image data VL of the left end view, and image data VR of the right end view from the image data of the N views.

The image data VC of the center view extracted from the view selector 112 is supplied to the scaler 113-1 and undergoes, for example, a scaling process to a full HD size of 1920*1080. Image data VC' having undergone the scaling process is supplied to the video encoder 114-1.

The video encoder 114-1 performs coding on the image data VC' so as to obtain coded video data, and generates a video stream including the coded data as a substream (sub stream 1). In addition, the video encoder 114-1 inserts view configuration information into a user data region or the like of a picture header or a sequence header of the video stream. The video stream is supplied to the multiplexer 115.

In addition, the image data VL of the left end view extracted from the view selector 112 is supplied to the scaler 113-2 and undergoes, for example, a scaling process to a full HD size of 1920*1080. Image data VL' having undergone the scaling process is supplied to the video encoder 114-2.

The video encoder 114-2 performs coding on the image data VL' so as to obtain coded video data, and generates a video stream including the coded data as a substream (sub stream 2). In addition, the video encoder 114-2 inserts view configuration information into a user data region of a picture header or a sequence header of the video stream. The video stream is supplied to the multiplexer 115.

In addition, the image data VR of the left end view extracted from the view selector 112 is supplied to the scaler 113-3 and undergoes, for example, a scaling process to a full HD size of 1920*1080. Image data VR' having undergone the scaling process is supplied to the video encoder 114-3.

The video encoder 114-3 performs coding on the image data VR' so as to obtain coded video data, and generates a video stream including the coded data as a substream (sub stream 3). In addition, the video encoder 114-3 inserts view configuration information into a user data region of a picture header or a sequence header of the video stream. The video stream is supplied to the multiplexer 115.

Further, the image data of each of the center, left end and right end views output from the view selector 112 is supplied to the disparity data generation portion 116. The disparity data generation portion 116 generates disparity data on the basis of the image data of each view. The disparity data includes disparity data between the center view and the left end view and disparity data between the center view and the right end view. In this case, disparity data is generated with the pixel unit or the block unit.

The disparity data generated by the disparity data generation portion 116 is supplied to the disparity encoder 117. The disparity encoder 117 performs a coding process on the disparity data so as to generate a disparity stream. The disparity stream is supplied to the multiplexer 115.

In addition, graphics data (also including subtitle data) output from the graphics data output portion 118 is supplied to the graphics encoder 119. The graphics encoder 119 generates a graphics stream including the graphics data. The graphics stream is supplied to the multiplexer 115.

In addition, audio data output from the audio data output portion 120 is supplied to the audio encoder 121. The audio encoder 121 performs coding such as MPEG-2Audio or AAC on the audio data so as to generate an audio stream. This audio stream is supplied to the multiplexer 115.

The multiplexer 115 packetizes and multiplexes the elementary streams supplied from the respective encoders so as to generate a transport stream TS. In this case, a PTS is inserted into each PES header such that synchronous reproduction is performed in the reception side. Further, the multiplexer 115 inserts identification information for identifying whether or not view configuration information is inserted into the layer of the video stream, under the PMT, the EIT, or the like.

In addition, in the transmission data generation unit 110 shown in Fig. 7, a case where three video streams are included in the transport stream TS is shown. In other words, the transport stream TS includes three video streams obtained by coding each of image data items of the center, left end and right end views as a single picture.

Although detailed description is omitted, as described above, a case where two or one video stream is included in the transport stream TS can be configured in the same manner. In a case where two video streams are included in the transport stream TS, for example, the following video streams are included. In other words, the video streams are a video stream which is obtained by coding image data of the center view as a single picture and a video stream which is obtained by performing an interleaving process on image data items of the left end view and the right end view so as to be coded as a single picture.

Further, in a case where a single video stream is included in the transport stream TS, for example, the following video stream is included. In other words, the video stream includes a video stream including data obtained by coding each of image data items of the center, left end and right end views as data of a single picture.

Next, a description will be made of an operation when a two-dimensional (2D) image is transmitted. Two-dimensional image data is output from any one of the image data output portions 111-1 to 111-N. The view selector 112 extracts the two-dimensional image data which is supplied to the scaler 113-1. The scaler 113-1 performs a scaling process on the two-dimensional image data extracted from the view selector 112, so as to obtain, for example, two-dimensional image data of a full HD size of 1920*1080. The two-dimensional image data having undergone the scaling is supplied to the video encoder 114-1.

The video encoder 114-1 performs coding such as, for example, MPEG4-AVC (MVC) or MPEG2video on the two-dimensional image data so as to obtain coded video data. In addition, the video encoder 114-1 generates a video stream which includes the coded data as a substream (sub stream 1) by using a stream formatter (not shown) which is provided in the subsequent stage.

The video encoder 114-1 inserts the above-described view configuration information into the layer of the video stream. The view configuration information includes, as described above, information indicating whether or not image data included in a corresponding video stream is image data of a portion of views forming 3D. Here, this information indicates that image data included in a corresponding video stream is not image data of a portion of views forming 3D, that is, two-dimensional image data. The multiplexer 115 packetizes and multiplexes the respective elementary streams generated by the video encoder 114-1, the graphics encoder 119, and the audio encoder 121 so as to generate a transport stream TS.

[Structures of identification information and view configuration information and TS configuration]

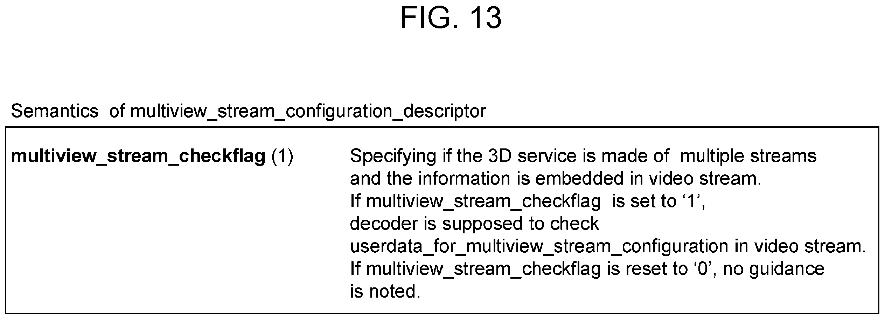

As described above, identification information for identifying whether or not view configuration information is inserted into a layer of a video stream is inserted into a layer of the transport stream TS. Fig. 12 shows a structural example (Syntax) of a multi-view stream configuration descriptor (multiview_stream_configuration_descriptor) which is identification information. In addition, Fig. 13 shows content (Semantics) of principal information in the structural example shown in Fig. 12.

"multiview_stream_configuration_tag" is 8-bit data indicating a descriptor type, and, here, indicates a multi-view stream configuration descriptor. "multiview_stream_configuration_length" is 8-bit data indicating a length (size) of a descriptor. This data is a length of the descriptor, and indicates the number of subsequent bytes.

The 1-bit field of "multiview_stream_checkflag" indicates whether or not view configuration information is inserted into a layer of a video stream. "1" indicates that view configuration information is inserted into a layer of a video stream, and "0" indicates that view configuration information is not inserted into a layer of a video stream. If "1", a reception side (decoder) checks view configuration information which is present in a user data region.

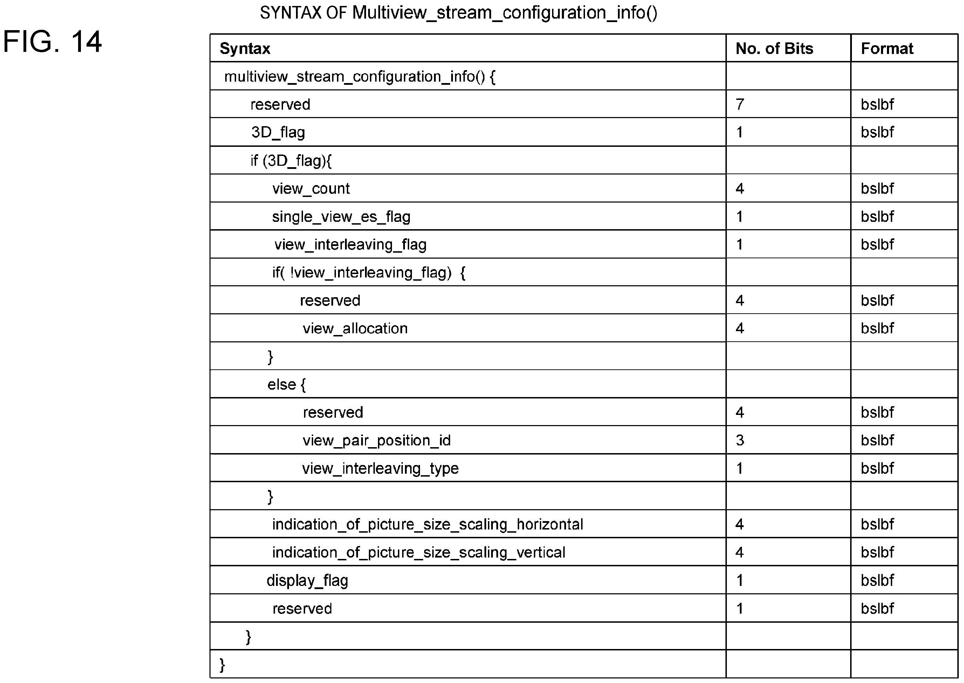

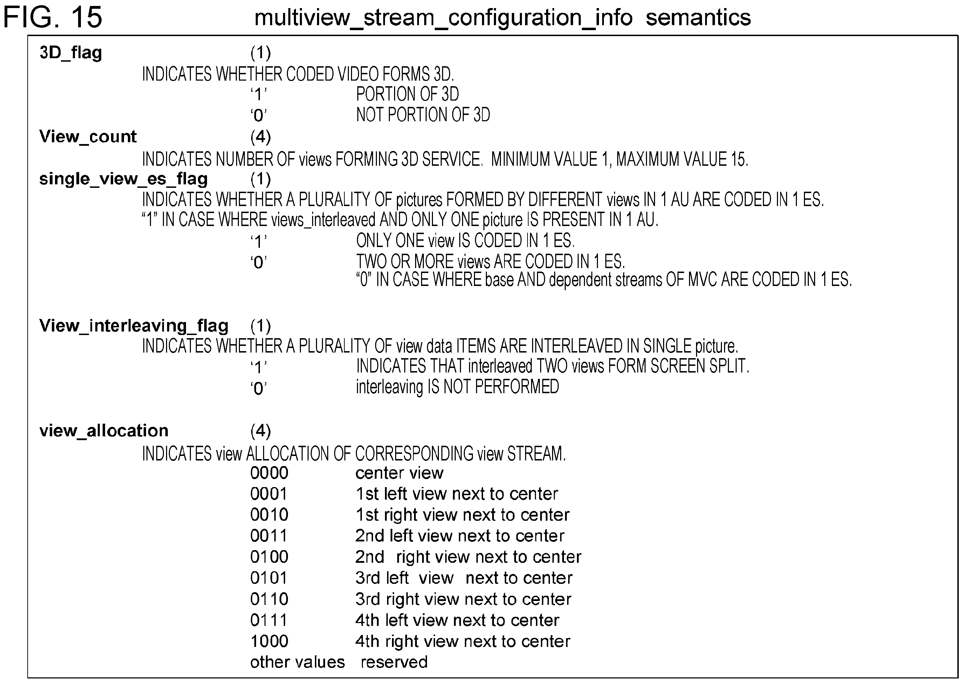

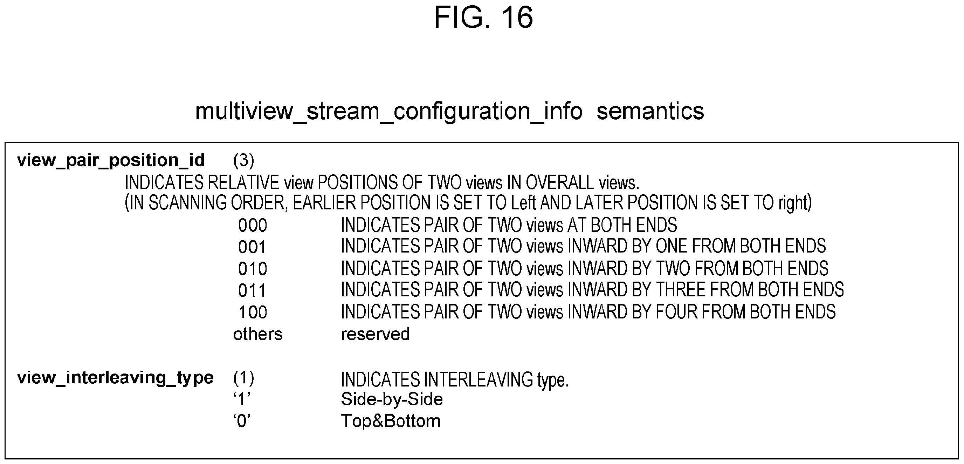

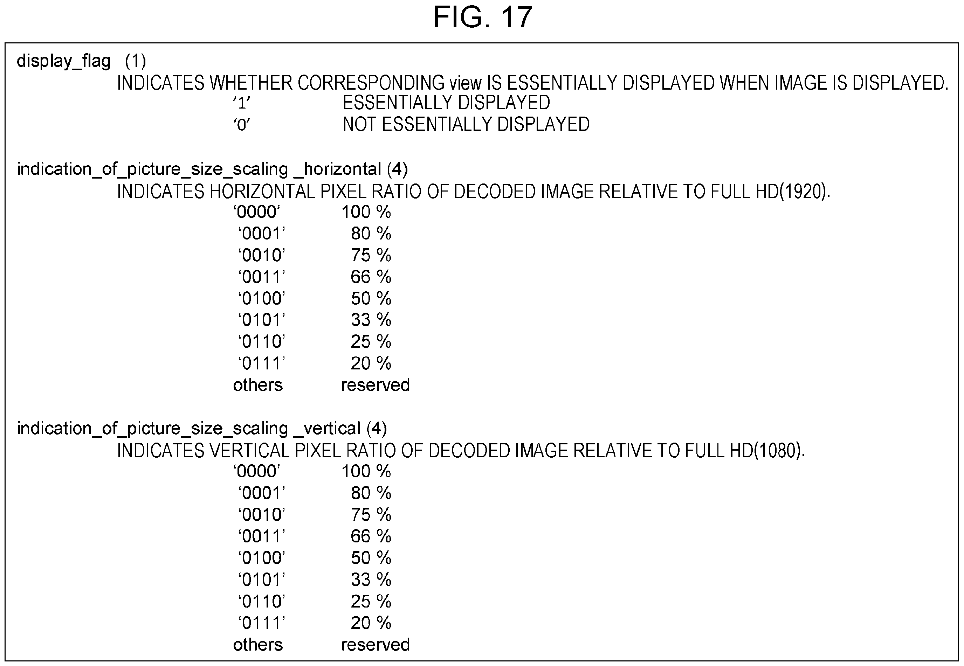

In addition, as described above, view configuration information including information and the like indicating whether or not image data included in a corresponding video stream is image data of a portion of views forming 3D is inserted into the layer of the video stream. As described above, the view configuration information is necessarily inserted when a stereoscopic (3D) image is transmitted, and may not be inserted when a two-dimensional (2D) image is transmitted. Fig. 14 shows a structural example (Syntax) of multi-view stream configuration information (multiview_stream_configuration_info()) which is the view configuration information. In addition, Figs. 15, 16 and 17 show content (Semantics) of principal information in the structural example shown in Fig. 14.

The 1-bit field of "3D_flag" indicates whether or not image data included in a coded video stream is image data of a portion of views forming 3D. "1" indicates that image data is image data of a portion of views, and "0" indicates that image data is not image data of a portion of views.

If "3D_flag=1", each piece of information of "view_count", "single_view_es_flag", and "view_interleaving_flag" is present. The 4-bit field of "view_count" indicates the number of views forming a 3D service. The minimum value thereof is 1, and the maximum value thereof is 15. The 1-bit field of "single_view_es_flag" indicates whether or not data of a plurality of pictures is coded in a single access unit of a corresponding video stream. "1" indicates that data of only a single picture is coded, and "0" indicates that data of two or more pictures is coded.

The 1-bit field of "view_interleaving_flag" indicates whether or not image data of two views undergoes an interleaving process and is coded as data of a single picture in a corresponding video stream. "1" indicates that image data undergoes an interleaving process and forms a screen split, and "0" indicates that an interleaving process is not performed.

If "view_interleaving_flag=0", information of "view_allocation" is present. The 4-bit field of "view_allocation" indicates image data of which view is image data included in a corresponding video stream, that is, view allocation. For example, "0000" indicates a center view. In addition, for example, "0001" indicates a first left view next to the center. Further, for example, "0010" indicates a first right view next to the center. This "view_allocation" forms information indicating a relative positional relationship of each view.

If "view_interleaving_flag=1", information of "view_pair_position_id" and "view_interleaving_type" is present. The 3-bit field of "view_pair_position_id" indicates relative view positions of two views in the overall views. In this case, for example, a earlier position in scanning order is set to left, and a later position is set to right. For example, "000" indicates a pair of two views located at both ends. In addition, for example, "001" indicates a pair of two views located inward by one from both ends. Further, for example, "010" indicates a pair of two views located inward by one from both ends.

The 1-bit field of "view_interleaving_type" indicates an interleaving type. "1" indicates that an interleaving type is a side-by-side type, and "0" indicates that an interleaving type is a top- and-bottom type.

In addition, if "3D_flag=1", each piece of information of "display_flag", "indication_of_picture_size_scaling_horizontal", and "indication_of_picture_size_scaling_vertical" is present. The 1-bit field of "display_flag" indicates whether or not a corresponding view is essentially displayed when an image is displayed. "1" indicates that a view is essentially displayed. On the other hand, "0" indicates that a view is not essentially displayed.

The 4-bit field of "indication_of_picture_size_scaling_horizontal" indicates a horizontal pixel ratio of a decoded images relative to full HD (1920). "0000" indicates 100%, "0001" indicates 80%, "0010" indicates 75%, "0011" indicates 66%, "0100" indicates 50%, "0101" indicates 33%, "0110" indicates 25%, and "0111" indicates 20%.

The 4-bit field of "indication_of_picture_size_scaling_vertical" indicates a vertical pixel ratio of a decoded images relative to full HD (1080). "0000" indicates 100%, "0001" indicates 80%, "0010" indicates 75%, "0011" indicates 66%, "0100" indicates 50%, "0101" indicates 33%, "0110" indicates 25%, and "0111" indicates 20%.

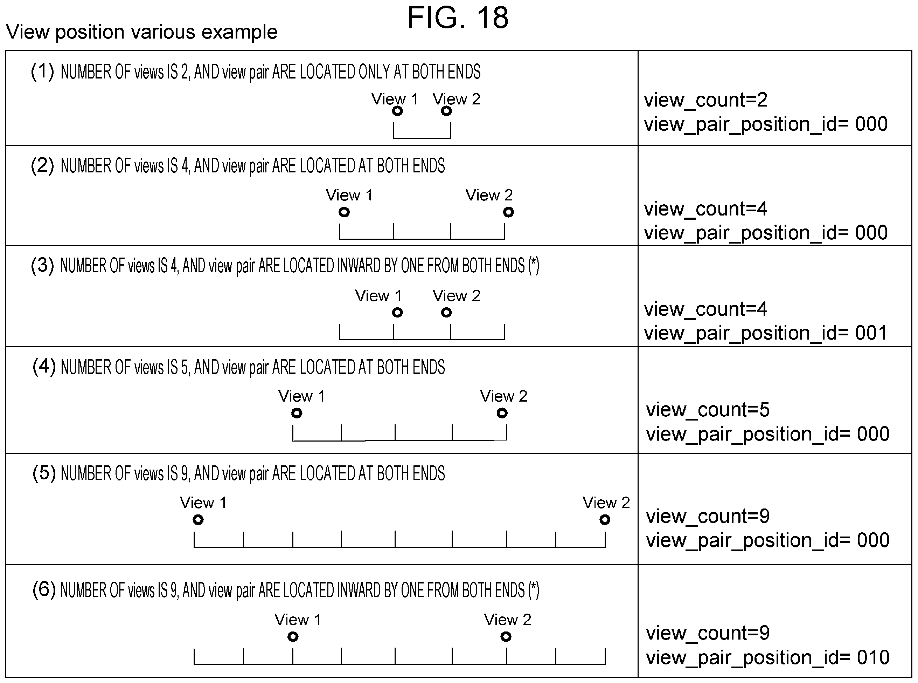

Fig. 18 shows an example of a relationship between the number of views indicated by "view_count" and positions of two views (here, "View 1" and "View 2") indicated by "view_pair_position_id". An example of (1) is a case where the number of views indicated by "view_count" is 2, and "view_pair_position_id=000" indicates two views located at both ends. In addition, an example of (2) is a case where the number of views indicated by "view_count" is 4, and "view_pair_position_id=000" indicates two views located at both ends.

Further, an example of (3) is a case where the number of views indicated by "view_count" is 4, and "view_pair_position_id=001" indicates two views located inward by one from both ends. Furthermore, an example of (4) is a case where the number of views indicated by "view_count" is 5, and "view_pair_position_id=000" indicates two views located at both ends.

In addition, an example of (5) is a case where the number of views indicated by "view_count" is 9, and "view_pair_position_id=000" indicates two views located at both ends. Further, an example of (6) is a case where the number of views indicated by "view_count" is 9, and "view_pair_position_id=010" indicates two views located inward by two from both ends.

A pair of views located further inward than both ends can be transmitted additionally to a pair of views at both ends in order to improve a performance of interpolation and generation in a case where two views at both ends are unlikely to satisfy sufficient image quality when a reception side combines views. At this time, coded video data of a pair of views which is additionally transmitted may be coded so as to share an access unit in a stream of a pair of views at both ends, or may be coded as another stream.

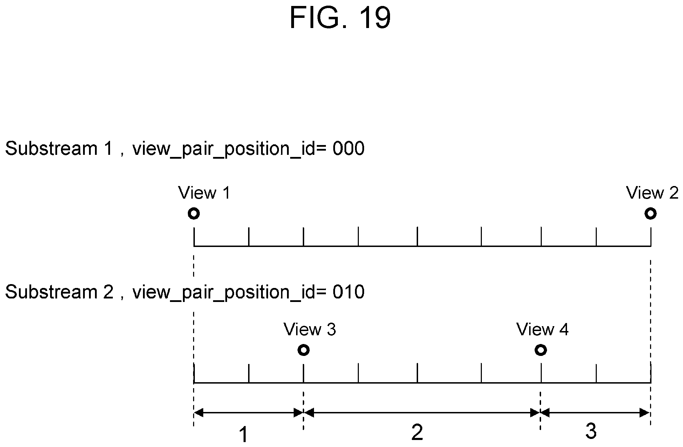

Fig. 19 shows an example in which a transmission side or a reception side generates disparity data in a case where image data of a pair of two views located further inward than both ends is transmitted along with image data of two views located at both ends as described above. In the shown example, the number of views indicated by "view_count" is 9. In addition, a substream (sub stream 1) including image data of two views (View 1 and View 2) at both ends and a substream (sub stream 2) including image data of two views (View 3 and View 4) located further inward than those are present.

In this case, first, disparity data of "View 1" and "View 3" is calculated. Next, disparity data of "View 2" and "View 4" is calculated. Finally, disparity data of "View 3" and "View 4" is calculated. In addition, in a case where resolutions of views are different between substreams, a resolution is unified to either one, and then disparity data is calculated.

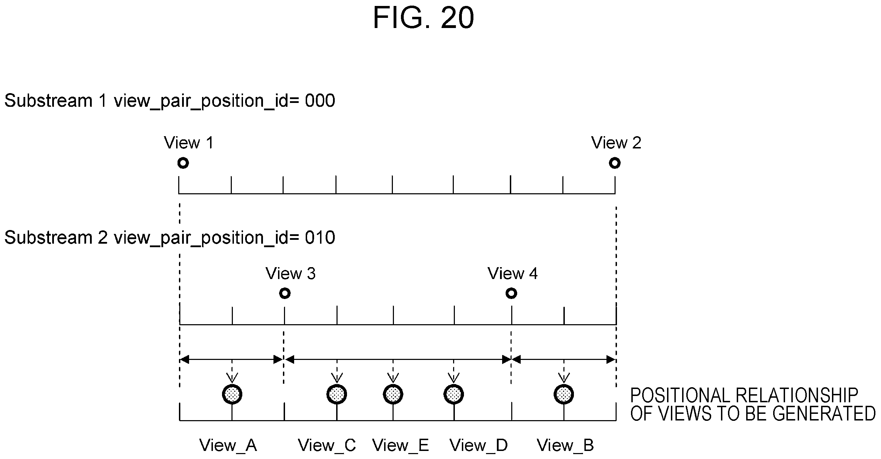

Fig. 20 shows an example in which the reception side interpolates and generates image data of a view located between the respective views on the basis of the disparity data calculated as described above. In this case, first, "View_A" located between "View 1" and "View 3" is interpolated and generated using the disparity data between "View 1" and "View 3".

Next, "View_B" located between "View 2" and "View 4" is interpolated and generated using the disparity data between "View 2" and "View 4". Finally, "View_C", "View_D", and "View_E" located between "View 3" and "View 4" are interpolated and generated using the disparity data between "View 3" and "View 4".

Next, a description will be made of a case where the multi-view stream configuration information (multiview_stream_configuration_info()) which is the view configuration information is inserted into a user data region of the video stream (video elementary stream). In this case, the multi-view stream configuration information is inserted, for example, with the picture unit or the GOP unit by using the user data region.

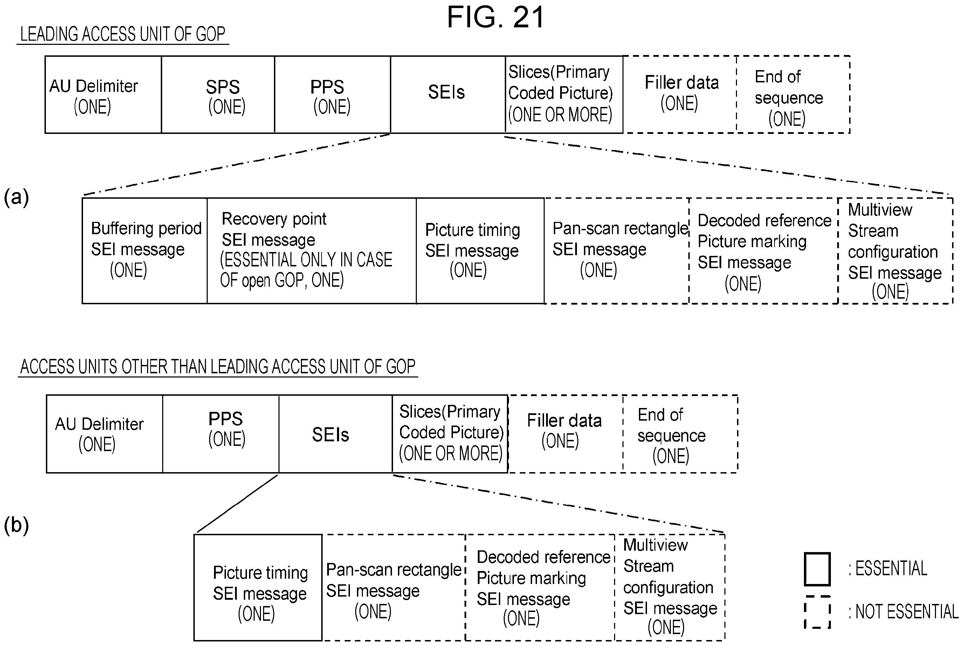

For example, in a case where a coding type is AVC or MVC, or even in a case of a coding type in which a coding structure of an NAL packet or the like is similar such as HEVC, the multi-view stream configuration information is inserted into the "SEIs" part of the access unit as "Multi-view stream configuration SEI message". Fig. 21(a) shows a leading access unit of Group Of Pictures (GOP), and Fig. 21(b) shows access units other than the leading access unit of the GOP. In a case where the multi-view stream configuration information is inserted with the GOP unit, "Multi-view stream configuration SEI message" is inserted only into the leading access unit of the GOP.

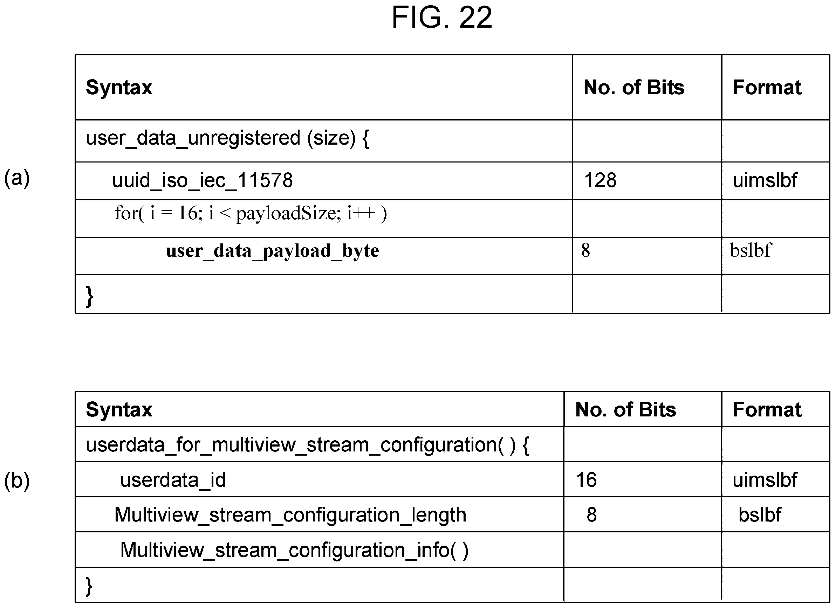

Fig. 22(a) shows a structural example (Syntax) of "Multi-view stream configuration SEI message". "uuid_iso_iec_11578" has a UUID value indicated by "ISO/IEC 11578:1996 Annex A.". "userdata_for_multiview_stream_configuration()" is inserted into the field of "user_data_payload_byte". Fig. 22(b) shows a structural example (Syntax) of "userdata_for_multiview_stream_configuration()". The multi-view stream configuration information (multiview_stream_configuration_info()) is inserted thereinto (refer to Fig. 14). "userdata_id" is an identifier of the multi-view stream configuration information, represented by unsigned 16 bits.

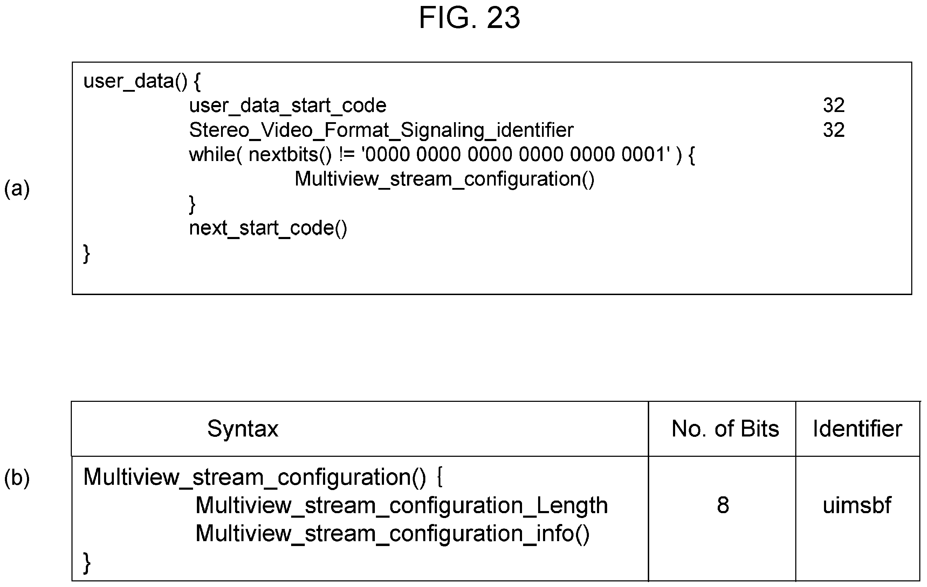

In addition, for example, in a case where a coding type is MPEG2video, the multi-view stream configuration information is inserted into a user data region of a picture header part as user data "user_data()". Fig. 23(a) shows a structural example (Syntax) of "user_data()". The 32-bit filed of "user_data_start_code" is a start code of user data (user_data) and is a fixed value of "0x000001B2".

The 32-bit field subsequent to the start code is an identifier for identifying content of user data. Here, the identifier is "Stereo_Video_Format_Signaling_identifier" and enables user data to be identified as multi-view stream configuration information. "Multiview_stream_configuration()" which is stream correlation information is inserted subsequent to the identifier as a data body. Fig. 23(b) shows a structural example (Syntax) of "Multiview_stream_configuration()". The multi-view stream configuration information (multiview_stream_configuration_info()) is inserted thereinto (refer to Fig. 14).

The multi-view stream configuration descriptor (multiview_stream_configuration_descriptor) which is identification information shown in Fig. 12 described above is inserted into a layer of the transport stream TS, for example, under the PMT, under the EIT, or the like. In other words, the descriptor is disposed at an optimal position with the event unit or in a use case which is static or dynamic.

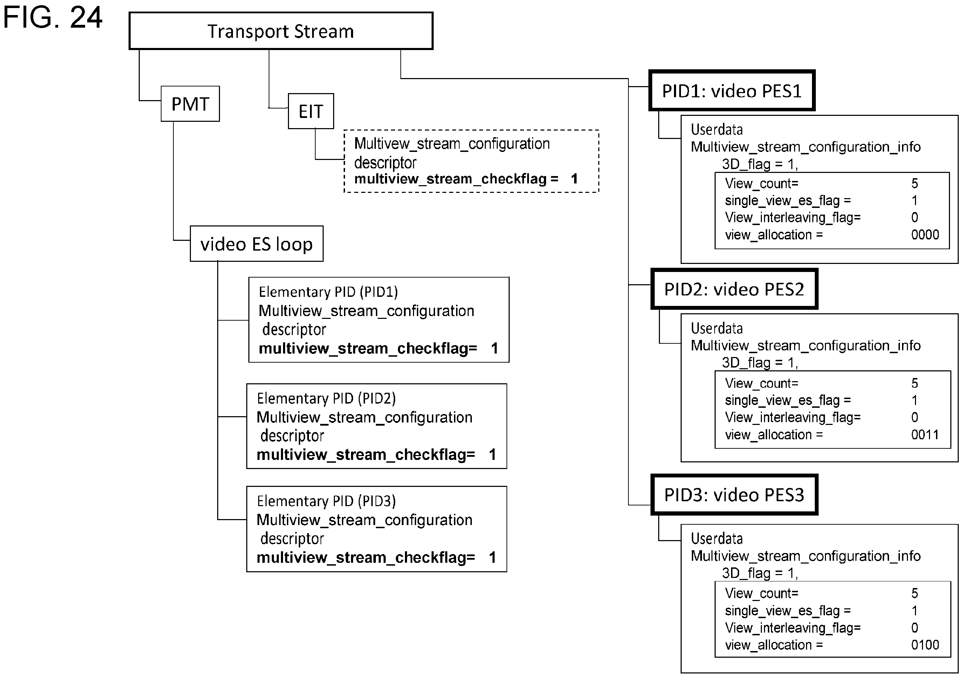

Fig. 24 shows a configuration example of the transport stream TS when a stereoscopic (3D) image is transmitted. In addition, in this configuration example, for simplification of the figure, disparity data, audio, graphics, and the like are not shown. This configuration example shows a case where three video streams are included in the transport stream TS. In other words, the transport stream TS includes three video streams which are obtained by coding each of image data items of center, left end and right end views as a single picture. In addition, this configuration example shows a case where the number of views is 5.

The configuration example of Fig. 24 includes a PES packet "video PES1" of a video stream in which the image data VC' of the center view is coded as a single picture. The multi-view stream configuration information inserted into the user data region of the video stream indicates that the number of views indicated by "View_count" is 5.

In addition, in this information, there is "single_view_es_flag=1" which indicates that data of only a single picture is coded in a single access unit in the video stream. Further, in this information, there is "View_interleaving_flag=0" which indicates that image data of two views does not undergo an interleaving process and is not coded as data of a single picture in the video stream. In addition, there is "view_allocation=0000" which indicates that the image data included in the video stream is image data of the center view.

Further, the configuration example of Fig. 24 includes a PES packet "video PES2" of a video stream in which the image data VL' of the left end view is coded as a single picture. The multi-view stream configuration information inserted into the user data region of the video stream indicates that the number of views indicated by "View_count" is 5.

In addition, in this information, there is "single_view_es_flag=1" which indicates that data of only a single picture is coded in a single access unit in the video stream. Further, in this information, there is "View_interleaving_flag=0" which indicates that image data of two views does not undergo an interleaving process and is not coded as data of a single picture in the video stream. In addition, there is "view_allocation=0011" which indicates that the image data included in the video stream is image data of a second left view next to the center, that is, the left end view.

Further, the configuration example of Fig. 24 includes a PES packet "video PES3" of a video stream in which the image data VR' of the left end view is coded as a single picture. The multi-view stream configuration information inserted into the user data region of the video stream indicates that the number of views indicated by "View_count" is 5.

In addition, in this information, there is "single_view_es_flag=1" which indicates that data of only a single picture is coded in a single access unit in the video stream. Further, in this information, there is "View_interleaving_flag=0" which indicates that image data of two views does not undergo an interleaving process and is not coded as data of a single picture in the video stream. In addition, there is "view_allocation=0100" which indicates that the image data included in the video stream is image data of a second right view next to the center, that is, the right end view.

In addition, the transport stream TS includes a Program Map Table (PMT) which is Program Specific Information (PSI). The PSI is information describing to which program each elementary stream included in the transport stream belongs. In addition, the transport stream includes Event Information Table (EIT) which is Serviced Information (SI) for performing management of the event unit.

An elementary loop which has information related to each elementary stream is present in the PMT. In this configuration example, a video elementary loop (Video ES loop) is present. In the elementary loop, information such as a packet identifier (PID) is disposed, and a descriptor describing information related to the elementary stream is also disposed for each stream.

In this configuration example, a multi-view stream configuration descriptor (multiview_stream_configuration_descriptor) is inserted under the video elementary loop (Video ES loop) of the PMT in relation to each video stream. In this descriptor, there is "multiview_stream_checkflag=1" which indicates the presence of the multi-view stream configuration information which is view configuration information in the user region of the video stream. In addition, the descriptor may be inserted under the EIT as indicated by the broken line.

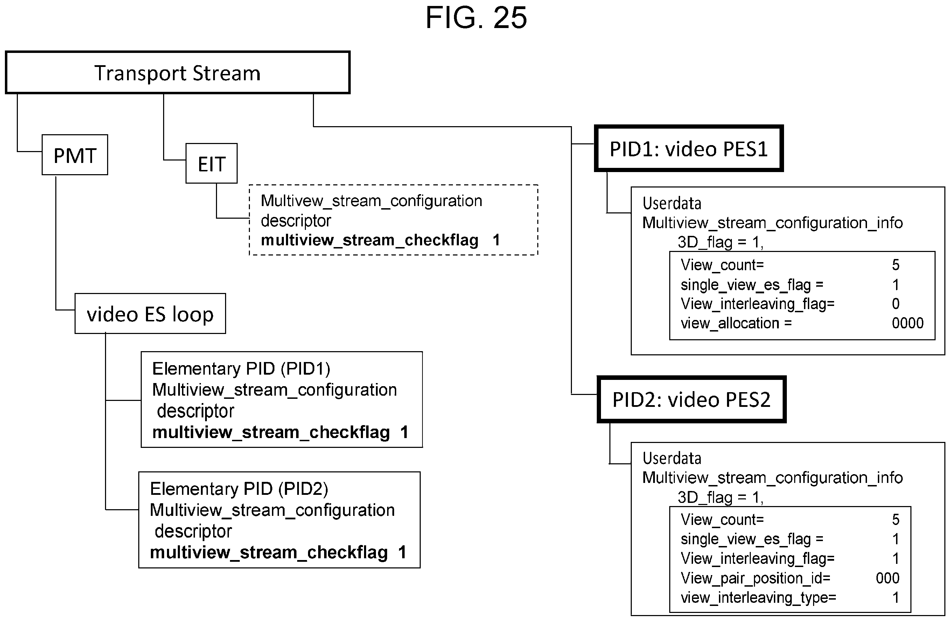

In addition, Fig. 25 also shows a configuration example of the transport stream TS when a stereoscopic (3D) image is transmitted. Further, also in this configuration example, for simplification of the figure, disparity data, audio, graphics, and the like are not shown. This configuration example shows a case where two video streams are included in the transport stream TS. In other words, the transport stream TS includes a video stream which is obtained by coding each of image data items of a center view as a single picture. In addition, the transport stream TS includes a video stream which is obtained by coding image data of a left end view and a right end view undergoes an interleaving process and is coded as a single picture. In addition, this configuration example also shows a case where the number of views is 5.

The configuration example of Fig. 25 includes a PES packet "video PES1" of a video stream in which the image data VC' of the center view is coded as a single picture. The multi-view stream configuration information inserted into the user data region of the video stream indicates that the number of views indicated by "View_count" is 5.

In addition, in this information, there is "single_view_es_flag=1" which indicates that data of only a single picture is coded in a single access unit in the video stream. Further, in this information, there is "View_interleaving_flag=0" which indicates that image data of two views does not undergo an interleaving process and is not coded as data of a single picture in the video stream. In addition, there is "view_allocation=0000" which indicates that the image data included in the video stream is image data of the center view.

The configuration example of Fig. 25 includes a PES packet "video PES2" of a video stream in which the image data VL' of the left end view and the image data VR' of the right end view is coded as a single picture. The multi-view stream configuration information inserted into the user data region of the video stream indicates that the number of views indicated by "View_count" is 5.

In addition, in this information, there is "single_view_es_flag=1" which indicates that data of only a single picture is coded in a single access unit in the video stream. Further, in this information, there is "View_interleaving_flag=1" which indicates that image data of two views undergoes an interleaving process and is coded as data of a single picture in the video stream. In addition, there is "view_pair_position_id=000" which indicates a pair of two views at both ends. Further, there is "view_interleaving_type=1" which indicates that an interleaving type is a side-by-side type.

Further, in this configuration example, a multi-view stream configuration descriptor (multiview_stream_configuration_descriptor) is inserted under the video elementary loop (Video ES loop) of the PMT in relation to each video stream. In this descriptor, there is "multiview_stream_checkflag=1" which indicates the presence of the multi-view stream configuration information which is view configuration information in the user region of the video stream. In addition, the descriptor may be inserted under the EIT as indicated by the broken line.

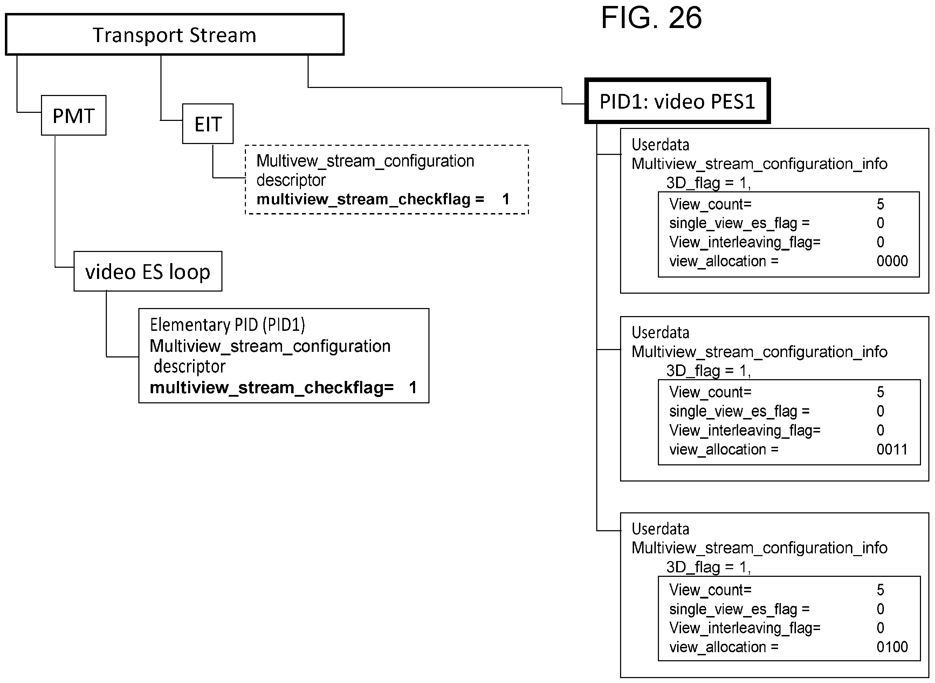

In addition, Fig. 26 also shows a configuration example of the transport stream TS when a stereoscopic (3D) image is transmitted. Further, also in this configuration example, for simplification of the figure, disparity data, audio, graphics, and the like are not shown. This configuration example shows a case where a single video stream is included in the transport stream TS. In other words, the transport stream TS includes a video stream including data which is obtained by coding each of image data items of center, left end and right end views as a single picture. In addition, this configuration example also shows a case where the number of views is 5.

The configuration example of Fig. 26 includes a PES packet "video PES1" of a single video stream. The video stream includes data in which image data of each of the center, left end and right end views is coded as data of a single picture in a single access unit, and a user data region is present so as to correspond to each picture. In addition, multi-view stream configuration information is inserted into each user data region.

The information corresponding to the picture data obtained by coding image data of the center view indicates that the number of views indicated by "View_count" is 5. In addition, in this information, there is "single_view_es_flag=0" which indicates that data of a plurality of pictures is coded in a single access unit in the video stream. Further, in this information, there is "View_interleaving_flag=0" which indicates that the picture data is not image data of two views which undergoes an interleaving process and is coded. In addition, there is "view_allocation=0000" which indicates that the image data included in the picture data is image data of the center view.

Further, the information corresponding to the picture data obtained by coding image data of the left end view indicates that the number of views indicated by "View_count" is 5. In addition, in this information, there is "single_view_es_flag=0" which indicates that data of a plurality of pictures is coded in a single access unit in the video stream. Further, in this information, there is "View_interleaving_flag=0" which indicates that the picture data is not image data of two views which undergoes an interleaving process and is coded. In addition, there is "view_allocation=0011" which indicates that the image data included in the picture data is image data of a second left view next to the center, that is, the left end view.

In addition, the information corresponding to the picture data obtained by coding image data of the right end view indicates that the number of views indicated by "View_count" is 5. In addition, in this information, there is "single_view_es_flag=0" which indicates that data of a plurality of pictures is coded in a single access unit in the video stream. Further, in this information, there is "View_interleaving_flag=0" which indicates that the picture data is not image data of two views which undergoes an interleaving process and is coded. In addition, there is "view_allocation=0100" which indicates that the image data included in the picture data is image data of a second right view next to the center, that is, the right end view.

Further, in this configuration example, a multi-view stream configuration descriptor (multiview_stream_configuration_descriptor) is inserted under the video elementary loop (Video ES loop) of the PMT in relation to a single video stream. In this descriptor, there is "multiview_stream_checkflag=1" which indicates the presence of the multi-view stream configuration information which is view configuration information in the user region of the video stream. In addition, the descriptor may be inserted under the EIT as indicated by the broken line.

As described above, the transmission data generation unit 110 shown in Fig. 7 generates a transport stream TS including a video stream which is obtained by coding at least image data of a left end view and a right end view and image data of an intermediate view located between the left end and the right end among a plurality of views for stereoscopic image display when a stereoscopic (3D) image is transmitted. For this reason, it is possible to effectively transmit image data for observing a stereoscopic image formed by multi-views with the naked eye.

In other words, since not only image data of the left end view and the right end view but also image data of the intermediate view is transmitted, a relative disparity between views is small, a periphery of occlusion according to processing of a fine part when image data of other views is interpolated is easily interpolated, and thereby it is possible to improve quality of a reproduced image. In addition, since image data of the left end view and the right end view is transmitted, image data of a view which is not transmitted can be generated through an interpolation process, and thus it is possible to easily maintain high image quality with regard to processing of an end point of occlusion or the like.

In addition, in the transmission data generation unit 110 shown in Fig. 7, when a stereoscopic (3D) image is transmitted, the multi-view stream configuration information (multiview_stream_configuration_info()) which is view configuration information is necessarily inserted into a layer of a video stream. For this reason, a reception side can perform an appropriate and efficient process for observing a three-dimensional image (stereoscopic image) formed by image data of a plurality of views with the naked eye on the basis of this view configuration information.

In addition, in the transmission data generation unit 110 shown in Fig. 7, the multi-view stream configuration descriptor (multiview_stream_configuration_descriptor) is inserted into a layer of the transport stream TS. This descriptor forms identification information for identifying whether or not view configuration information is inserted into a layer of a video stream. A reception side can easily identify whether or not view configuration information is inserted into a layer of a video stream on the basis of this identification information. For this reason, it is possible to efficiently extract the view configuration information from a user data region of the video stream.

In addition, in the transmission data generation unit 110 shown in Fig. 7, the disparity data generation portion 116 generates disparity data between respective views, and a disparity stream obtained by coding the disparity data is included in the transport stream TS along with a video stream. For this reason, a reception side can easily interpolate and generate image data of each view which is not transmitted, on the basis of the sent disparity data, without performing a process of generating disparity data from the received image data of each view.

(Configuration example of receiver)

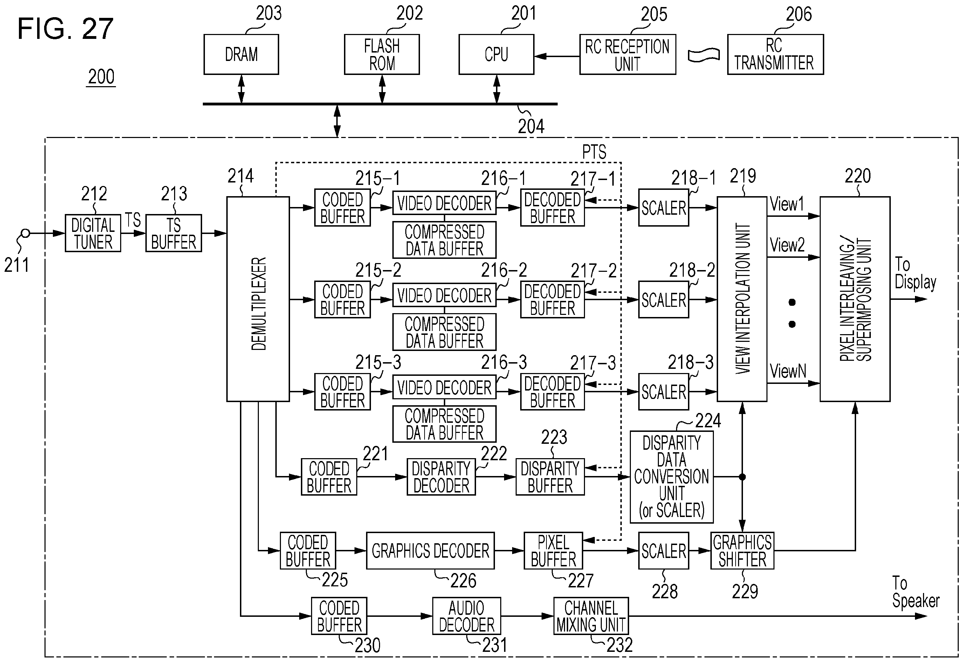

Fig. 27 shows a configuration example of the receiver 200. The receiver 200 includes a CPU 201, a flash ROM 202, a DRAM 203, an internal bus 204, a remote control reception unit (RC reception unit) 205, a remote control transmitter (RC transmitter) 206. In addition, the receiver 200 includes an antenna terminal 211, a digital tuner 212, a transport stream buffer (TS buffer) 213, and a demultiplexer 214.

Further, the receiver 200 includes coded buffers 215-1, 215-2 and 215-3, video decoders 216-1, 216-2 and 216-3, decoded buffers 217-1, 217-2 and 217-3, and scalers 218-1, 218-2 and 218-3. In addition, the receiver 200 includes a view interpolation unit 219 and a pixel interleaving/superimposing unit 220. Furthermore, the receiver 200 includes a coded buffer 221, a disparity decoder 222, a disparity buffer 223, and a disparity data conversion unit 224.

In addition, the receiver 200 includes a coded buffer 225, a graphics decoder 226, a pixel buffer 227, a scaler 228, and a graphics shifter 229. Further, the receiver 200 includes a coded buffer 230, an audio decoder 231, and a channel mixing unit 232.

The CPU 201 controls an operation of each unit of the receiver 200. The flash ROM 202 stores control software and preserves data. The DRAM 203 forms a work area of the CPU 201. The CPU 201 develops software or data read from the flash ROM 202 on the DRAM 203, and activates the software so as to control each unit of the receiver 200.

The RC reception unit 205 receives a remote control signal (remote control code) transmitted from the RC transmitter 206 so as to be supplied to the CPU 201. The CPU 201 controls each unit of the receiver 200 on the basis of this remote control code. The CPU 201, the flash ROM 202, and the DRAM 203 are connected to the internal bus 204.

Hereinafter, first, a description will be made of a case where a stereoscopic (3D) image is received. The antenna terminal 211 is a terminal to which a television broadcast signal received by a reception antenna (not shown) is input. The digital tuner 212 processes the television broadcast signal input to the antenna terminal 211, and outputs a predetermined transport stream (bitstream data) TS corresponding to a channel selected by a user. The transport stream buffer (TS buffer) 213 temporarily accumulates the transport stream TS output from the digital tuner 212.

The transport stream TS includes video streams obtained by coding image data of a left end view and a right end view and image data of a center view which is an intermediate view located between the left end and the right end among a plurality of views for stereoscopic image display.

In this case, the transport stream TS may include three, two or one video stream (refer to Figs. 24, 25 and 26). Here, for convenience of description, the description will be made assuming that the transport stream TS includes three video streams obtained by coding image data of each of the center, left end and right end views as a single picture.

In the transport stream TS, as described above, the multi-view stream configuration descriptor (multiview_stream_configuration_descriptor) is inserted under the PMT, under the EIT, or the like. The descriptor is identification information for identifying whether or not view configuration information, that is, the multi-view stream configuration information (multiview_stream_configuration_info()) is inserted into a layer of a video stream.

The demultiplexer 214 extracts each of elementary streams of video, disparity, graphics, and audio from the transport stream TS which is temporarily accumulated in the TS buffer 213. In addition, the demultiplexer 214 extracts the above-described multi-view stream configuration descriptor from the transport stream TS so as to be sent to the CPU 201. The CPU 201 can easily determine whether or not view configuration information is inserted into the layer of the video stream on the basis of the 1-bit field of "multiview_stream_checkflag" of the descriptor.

The coded buffers 215-1, 215-2 and 215-3 respectively temporarily accumulate the video streams which are obtained by coding image data of each of the center, left end and right end views as a single picture and are extracted by the demultiplexer 214. The video decoders 216-1, 216-2 and 216-3 respectively perform a decoding process on the video streams stored in the coded buffers 215-1, 215-2 and 215-3 under the control of the CPU 201 so as to acquire image data of each of the center, left end and right end views.

Here, the video decoder 216-1 performs a decoding process using a compressed data buffer so as to acquire image data of the center view (center view). In addition, the video decoder 216-2 performs a decoding process using a compressed data buffer so as to acquire image data of the left end view (left view). Further, the video decoder 216-3 performs a decoding process using a compressed data buffer so as to acquire image data of the right end view (right view). Furthermore, in a case where two or more views are interleaved and are coded, the coded buffers, the video decoders, decoded buffers, and the scalers are allocated with the stream unit.

Each video decoder extracts the multi-view stream configuration information (multiview_stream_configuration_info()) which is view configuration information and is inserted into the user data region or the like of the picture header or the sequence header of the video stream so as to be sent to the CPU 201. The CPU 201 performs an appropriate and efficient process for observing a three-dimensional image (stereoscopic image) formed by image data of a plurality of views with the naked eye on the basis of this view configuration information.

In other words, the CPU 201 controls operations of the demultiplexer 214, the video decoders 216-1, 216-2 and 216-3, the scalers 218-1, 218-2 and 218-3, the view interpolation unit 219, and the like, with the program unit, the scene unit, the picture group unit, or the picture unit, on the basis of the view configuration information. For example, the CPU 201 can recognize the number of views forming a 3D service on the basis of the 4-bit field of "view_count".

In addition, for example, the CPU 201 can identify whether or not data of a plurality of pictures is coded in a single access unit of the video stream on the basis of the 1-bit field of "single_view_es_flag". Further, for example, the CPU 201 can identify whether or not image data of two views undergoes an interleaving process and is coded as data of a single picture in the video stream on the basis of the 1-bit field of "view_interleaving_flag".

In addition, for example, the CPU 201 can reconginze image data of which view is image data included in the video stream on the basis of the 4-bit field of "view_allocation" when image data of two views does not undergo an interleaving process and is not coded as data of a single picture in the video stream.

In addition, for example, the CPU 201 can recognize relative view positions of two views in the overall views on the basis of the 3-bit field of "view_pair_position_id" when image data of two views undergoes an interleaving process and is coded as data of a single picture in the video stream. Further, at this time, the CPU 201 can understand an interleaving type on the basis of the 1-bit field of "view_interleaving_type".

In addition, for example, the CPU 201 can recognize a horizontal pixel ratio and a vertical pixel ratio of a decoded image relative to the full HD on the basis of the 4-bit field of "indication_of_picture_size_scaling_horizontal" and the 4-bit field of "indication_of_picture_size_scaling_vertical".

The decoded buffers 217-1, 217-2 and 217-3 respectively temporarily accumulate the image data items of the respective views acquired by the video decoders 216-1, 216-2 and 216-3. The scalers 218-1, 218-2 and 218-3 respectively adjust output resolutions of the image data items of the respective views output from the decoded buffers 217-1, 217-2 and 217-3 so as to be predetermined resolutions.

In the multi-view stream configuration information, the 4-bit field of "indication_of_picture_size_scaling_horizontal" which indicates a horizontal pixel ratio of a decoded image and the 4-bit field of "indication_of_picture_size_scaling_vertical" which indicates a vertical pixel ratio of a decoded image are present. The CPU 201 controls scaling ratios in the scalers 218-1, 218-2 and 218-3 so as to obtain a predetermined resolution on the basis of this pixel ratio information.

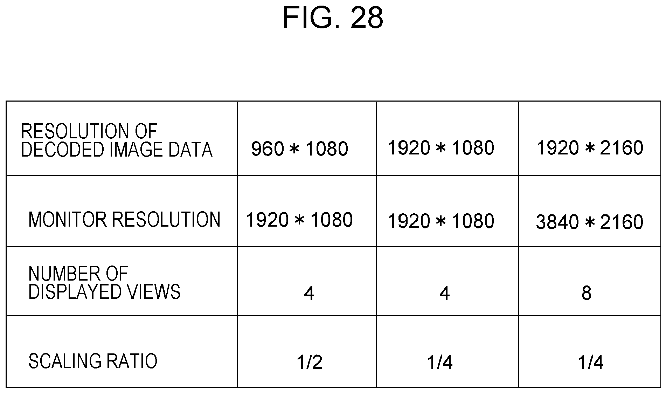

In this case, the CPU 201 calculates scaling ratios for the image data accumulated in the decoded buffers so as to instruct the scalers 218-1, 218-2 and 218-3 on the basis of a resolution of decoded image data, a resolution of a monitor, and the number of views. Fig. 28 shows a calculation example of a scaling ratio.

For example, when a resolution of decoded image data is 960*1080, a resolution of a monitor is 1920*1080, and the number of views to be displayed is 4, a scaling ratio is set to 1/2. In addition, for example, when a resolution of decoded image data is 1920*1080, a resolution of a monitor is 1920*1080, and the number of views to be displayed is 4, a scaling ratio is set to 1/4. Further, for example, when a resolution of decoded image data is 1920*2160, a resolution of a monitor is 3840*2160, and the number of views to be displayed is 8, a scaling ratio is set to 1/4.

The coded buffer 221 temporarily accumulates the disparity stream extracted by the demultiplexer 214. The disparity decoder 222 performs an inverse process to the disparity encoder 117 (refer to Fig. 7) of the above-described transmission data generation unit 110. In other words, the disparity decoder 222 performs a decoding process on the disparity stream stored in the coded buffer 221 so as to obtain disparity data. The disparity data includes disparity data between the center view and the left end view and disparity data between the center view and the right end view. In addition, this disparity data is disparity data of the pixel unit or the block unit. The disparity buffer 223 temporarily accumulates the disparity data acquired by the disparity decoder 222.

The disparity data conversion unit 224 generates disparity data of the pixel unit, conforming to the size of the scaled image data on the basis of the disparity data accumulated in the disparity buffer 223. For example, in a case where disparity data of the block unit is transmitted, the data is converted into disparity data of the pixel unit (refer to Fig. 11). In addition, for example, in a case where disparity data of the pixel unit is transmitted but does not conform to the size of scaled image data, the data is appropriately scaled.

The view interpolation unit 219 interpolates and generates image data of a predetermined number of views which are not transmitted, from the image data of each of the center, left end and right end views after being scaled, on the basis of the disparity data between the respective views obtained by the disparity data conversion unit 224. In other words, the view interpolation unit 219 interpolates and generates image data of each view located between the center view and the left end view so as to be output. Further, the view interpolation unit 219 interpolates and generates image data of each view located between the center view and the right end view so as to be output.

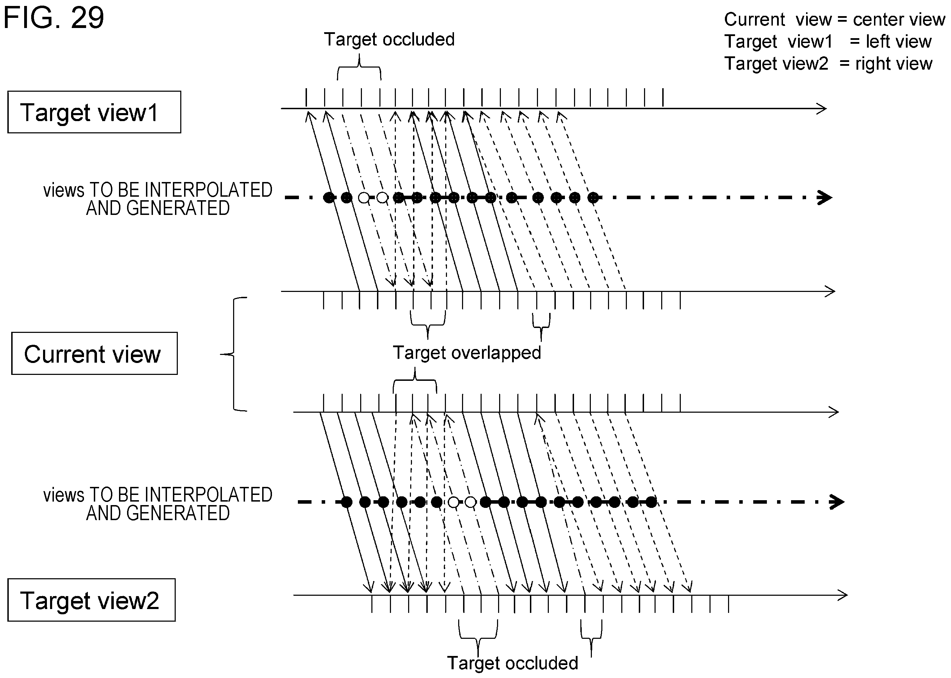

Fig. 29 schematically shows an example of an interpolation and generation process in the view interpolation unit 219. In the shown example, for example, a current view corresponds to the above-described center view, a target view 1 corresponds to the above-described left end view, and a target view 2 corresponds to the above-described right end view.

Interpolation and generation of a view located between the current view and the target view 1 and interpolation and generation of a view located between the current view and the target view 2 are performed in the same manner. Hereinafter, a description will be made of interpolation and generation of a view located between the current view and the target view 1.

A pixel of a view which is located between the current view and the target view 1 and is interpolated and generated is allocated as follows. In this case, two-way disparity data including disparity data which indicates the target view 1 from the current view and disparity data which indicates the current view from the target view 1 is used. First, a pixel of the current view is allocated as a pixel of a view which is interpolated and generated, by shifting disparity data as a vector (refer to the solid line arrows and the broken line arrows directed to the target view 1 from the current view and the black circles).

At this time, a pixel is allocated as follows in a part where a target is occluded in the target view 1. In other words, a pixel of the target view 1 is allocated as a pixel of the view which is interpolated and generated, by shifting disparity data as a vector (refer to the dot chain line arrows directed to the current view from the target view 1 and the white circles).

As such, since the two-way disparity data is provided, a pixel from a view which is regarded as a background can be allotted to a pixel of the interpolated and generated view in the part where a target is occluded. In addition, in an occlusion region which cannot be handled in a two-way manner, a value is allotted through a post-process.

In addition, the target overlapped part where the tip ends of the shown arrows are overlapped is a part where shifts due to disparity are overlapped in the target view 1. In this part, which one of the two disparities corresponds to a foreground of the current view is determined from a value of the disparity data and is selected. In this case, a smaller value is mainly selected.

Referring to Fig. 27 again, the coded buffer 225 temporarily accumulates the graphics stream extracted by the demultiplexer 214. The graphics decoder 226 performs an inverse process to the graphics encoder 119 (refer to Fig. 7) of the above-described transmission data generation unit 110. In other words, the graphics decoder 226 performs a decoding process on the graphics stream stored in the coded buffer 225 so as to obtain decoded graphics data (including subtitle data). In addition, the graphics decoder 226 generates bitmap data of graphics superimposed on a view (image) on the basis of the graphics data.

The pixel buffer 227 temporarily accumulates the bitmap data of graphics generated by the graphics decoder 226. The scaler 228 adjusts the size of the bitmap data of graphics accumulated in the pixel buffer 227 so as to correspond to the size of the scaled image data. The graphics shifter 229 performs a shift process on the bitmap data of graphics of which the size has been adjusted on the basis of the disparity data obtained by the disparity data conversion unit 224. In addition, the graphics shifter 229 generates N bitmap data items of graphics which are respectively superimposed on image data items of N views (View 1, View 2,..., and View N) output from the view interpolation unit 219.

The pixel interleaving/superimposing unit 220 superimposes the respectively corresponding bitmap data items of graphics on the image data items of the N views (View 1, View 2,..., and View N) which are output from the view interpolation unit 219. In addition, the pixel interleaving/superimposing unit 220 performs a pixel interleaving process on image data of the N views (View 1, View 2,..., and View N) so as to generate display image data for observing a three-dimensional image (stereoscopic image) with the naked eye.

The coded buffer 230 temporarily accumulates the audio stream extracted by the demultiplexer 214. The audio decoder 231 performs an inverse process to the audio encoder 121 (refer to Fig. 7) of the above-described transmission data generation unit 110. In other words, the audio decoder 231 performs a decoding process on the audio stream stored in the coded buffer 230 so as to obtain decoded audio data. The channel mixing unit 232 generates and outputs audio data of each channel in order to realize, for example, 5.1-channel surround, in relation to the audio data obtained by the audio decoder 231.

In addition, reading of the image data of each view from the decoded buffers 217-1, 217-2 and 217-2, reading of the disparity data from the disparity buffer 223, and reading of the bitmap data of graphics from the pixel buffer 227 are performed based on the PTS, and thus synchronous transmission is performed.

Next, a description will be made of a case where a two-dimensional (2D) image is received. In addition, in a case of being the same as the above-described case where a stereoscopic (3D) image is received, description thereof will be appropriately omitted. The transport stream buffer (TS buffer) 213 temporarily accumulates the transport stream TS output from the digital tuner 212. The transport stream TS includes a video stream obtained by coding two-dimensional image data.

When view configuration information, that is, the multi-view stream configuration information (multiview_stream_configuration_info()) is inserted into a layer of a video stream, in the transport stream buffer (the TS buffer) 213, as described above, the multi-view stream configuration descriptor (multiview_stream_configuration_descriptor) is inserted under the PMT, under the EIT, or the like.

The demultiplexer 214 extracts each of elementary streams of video, graphics, and audio from the transport stream TS which is temporarily accumulated in the TS buffer 213. In addition, the demultiplexer 214 extracts the above-described multi-view stream configuration descriptor from the transport stream TS so as to be sent to the CPU 201. The CPU 201 can easily determine whether or not view configuration information is inserted into the layer of the video stream on the basis of the 1-bit field of "multiview_stream_check flag" of the descriptor.

The coded buffer 215-1 temporarily accumulates the video stream which is obtained by coding the two-dimensional image data and is extracted by the demultiplexer 214. The video decoder 216-1 performs a decoding process on the video stream stored in the coded buffer 215-1 under the control of the CPU 201 so as to acquire two-dimensional image data. The decoded buffer 217-1 temporarily accumulates the two-dimensional image data acquired by the video decoder 216-1.

The scaler 218-1 adjusts an output resolution of the two-dimensional image data output from the decoded buffer 217-1 so as to be predetermined resolutions. The view interpolation unit 219 outputs the scaled two-dimensional image data obtained by the scaler 218-1 as it is, for example, as image data of View 1. In this case, the view interpolation unit 219 outputs only the two-dimensional image data.

In this case, the coded buffers 215-2 and 215-3, the video decoders 216-2 and 216-3, the decoded buffers 217-2 and 217-3, and the scalers 218-2 and 218-3 are in a non-operation state. In addition, the demultiplexer 214 does not extract a disparity elementary stream, and the coded buffer 221, the disparity decoder 222, the disparity buffer 223, and the disparity data conversion unit 224 are in a non-operation state.

The graphics shifter 229 outputs the bitmap data of graphics of which the size has been adjusted, obtained by the scaler 228, as it is. The pixel interleaving/superimposing unit 220 superimposes the bitmap data of graphics output from the graphics shifter 229 on the two-dimensional image data output from the view interpolation unit 219 so as to generate image data for displaying a two-dimensional image.

A detailed description is omitted, and an audio system is the same as in a case of transmitting a stereoscopic (3D) image.

An operation of the receiver 200 will be described briefly. First, a description will be made of an operation when a stereoscopic (3D) image is received. A television broadcast signal input to the antenna terminal 211 is supplied to the digital tuner 212. The digital tuner 212 processes the television broadcast signal so as to output a predetermined transport stream TS corresponding to a channel selected by a user. The transport stream TS is temporarily accumulated in the TS buffer 213.

The transport stream TS includes video streams obtained by coding image data of a left end view and a right end view and image data of a center view which is an intermediate view located between the left end and the right end among a plurality of views for stereoscopic image display.

The demultiplexer 214 extracts each of elementary streams of video, disparity, graphics, and audio from the transport stream TS which is temporarily accumulated in the TS buffer 213. In addition, the demultiplexer 214 extracts multi-view stream configuration descriptor which is identification information from the transport stream TS so as to be sent to the CPU 201. The CPU 201 can easily determine whether or not view configuration information is inserted into the layer of the video stream on the basis of the 1-bit field of "multiview_stream_checkflag" of the descriptor.

The video streams which are obtained by coding image data of each of the center, left end and right end views and are extracted by the demultiplexer 214 are supplied to the coded buffers 215-1, 215-2 and 215-3 so as to be temporarily accumulated. In addition, the video decoders 216-1, 216-2 and 216-3 respectively perform a decoding process on the video streams stored in the coded buffers 215-1, 215-2 and 215-3 under the control of the CPU 201 so as to acquire image data of each of the center, left end and right end views.

In addition, each video decoder extracts the multi-view stream configuration information (multiview_stream_configuration_info()) which is view configuration information and is inserted into the user data region or the like of the picture header or the sequence header of the video stream so as to be sent to the CPU 201. The CPU 201 controls an operation of each unit so as to perform an operation when a stereoscopic (3D) image is received, that is, when a stereoscopic (3D) display process is performed, on the basis of this view configuration information.

The image data items of the respective views acquired by the video decoders 216-1, 216-2 and 216-3 are supplied to the decoded buffers 217-1, 217-2 and 217-3 so as to be temporarily accumulated. The scalers 218-1, 218-2 and 218-3 respectively adjust output resolutions of the image data items of the respective views output from the decoded buffers 217-1, 217-2 and 217-3 so as to be predetermined resolutions.

In addition, the disparity stream extracted by the demultiplexer 214 is supplied to the coded buffer 221 so as to be temporarily accumulated. The disparity decoder 222 performs a decoding process on the disparity stream stored in the coded buffer 221 so as to obtain disparity data. The disparity data includes disparity data between the center view and the left end view and disparity data between the center view and the right end view. In addition, this disparity data is disparity data of the pixel unit or the block unit.

The disparity data acquired by the disparity decoder 222 is supplied to the disparity buffer 223 so as to be temporarily accumulated. The disparity data conversion unit 224 generates disparity data of the pixel unit, conforming to the size of the scaled image data on the basis of the disparity data accumulated in the disparity buffer 223. In this case, when disparity data of the block unit is transmitted, the data is converted into disparity data of the pixel unit. In addition, in this case, when disparity data of the pixel unit is transmitted but does not conform to the size of scaled image data, the data is appropriately scaled.

The view interpolation unit 219 interpolates and generates image data of a predetermined number of views which are not transmitted, from the image data of each of the center, left end and right end views after being scaled, on the basis of the disparity data between the respective views obtained by the disparity data conversion unit 224. From the view interpolation unit 219, image data of N views (View 1, View 2,..., and View N) for observing a three-dimensional image (stereoscopic image) with the naked eye are obtained. In addition, image data of each of the center, left end and right end views is also included.

The graphics stream extracted by the demultiplexer 214 are supplied to the coded buffer 225 so as to be temporarily accumulated. The graphics decoder 226 performs a decoding process on the graphics stream stored in the coded buffer 225 so as to obtain decoded graphics data (including subtitle data). In addition, the graphics decoder 226 generates bitmap data of graphics superimposed on a view (image) on the basis of the graphics data.

The bitmap data of graphics generated by the graphics decoder 226 is supplied to the pixel buffer 227 so as to be temporarily accumulated. The scaler 228 adjusts the size of the bitmap data of graphics accumulated in the pixel buffer 227 so as to correspond to the size of the scaled image data.

The graphics shifter 229 performs a shift process on the bitmap data of graphics of which the size has been adjusted on the basis of the disparity data obtained by the disparity data conversion unit 224. In addition, the graphics shifter 229 generates N bitmap data items of graphics which are respectively superimposed on image data items of N views (View 1, View 2,..., and View N) output from the view interpolation unit 219, so as to be supplied to the pixel interleaving/superimposing unit 220.

The pixel interleaving/superimposing unit 220 superimposes the respectively corresponding bitmap data items of graphics on the image data items of the N views (View 1, View 2,..., and View N). In addition, the pixel interleaving/superimposing unit 220 performs a pixel interleaving process on image data of the N views (View 1, View 2,..., and View N) so as to generate display image data for observing a three-dimensional image (stereoscopic image) with the naked eye. The display image data is supplied to a display, and thereby an image is displayed so as to observe a three-dimensional image (stereoscopic image) with the naked eye.

In addition, the audio stream extracted by the demultiplexer 214 is supplied to the coded buffer 230 so as to be temporarily accumulated. The audio decoder 231 performs a decoding process on the audio stream stored in the coded buffer 230 so as to obtain decoded audio data. The audio data is supplied to the channel mixing unit 232. The channel mixing unit 232 generates audio data of each channel in order to realize, for example, 5.1-channel surround, in relation to the audio data. The audio data is supplied to, for example, a speaker, and a sound is output conforming with image display.

Next, a description will be made of an operation when a two-dimensional (2D) image is received. A television broadcast signal input to the antenna terminal 211 is supplied to the digital tuner 212. The digital tuner 212 processes the television broadcast signal so as to output a predetermined transport stream TS corresponding to a channel selected by a user. The transport stream TS is temporarily accumulated in the TS buffer 213. The transport stream TS includes a video stream obtained by coding two-dimensional image data.

The demultiplexer 214 extracts each of elementary streams of video, graphics, and audio from the transport stream TS which is temporarily accumulated in the TS buffer 213. In addition, the demultiplexer 214 extracts multi-view stream configuration descriptor which is identification information, if inserted, from the transport stream TS so as to be sent to the CPU 201. The CPU 201 can easily determine whether or not view configuration information is inserted into the layer of the video stream on the basis of the 1-bit field of "multiview_stream_check flag" of the descriptor.

The video stream which is obtained by coding two-dimensional image data and is extracted by the demultiplexer 214 is supplied to the coded buffer 215-1 so as to be temporarily accumulated. In addition, the video decoder 216-1 performs a decoding process on the video stream stored in the coded buffer 215-1 under the control of the CPU 201 so as to acquire two-dimensional image data.

In addition, in the video decoder 216-1, if inserted, the multi-view stream configuration information (multiview_stream_configuration_info()) which is view configuration information and is inserted into the user data region or the like of the picture header or the sequence header of the video stream is extracted and is sent to the CPU 201. The CPU 201 controls an operation of each unit so as to perform an operation when a two-dimensional (2D) image is received, that is, when a two-dimensional (2D) display process is performed, on the basis of the extracted view configuration information or on the basis of the fact that the view configuration information is not extracted.

The two-dimensional image data acquired by the video decoder 216-1 is supplied to the decoded buffer 217-1 so as to be temporarily accumulated. The scaler 218-1 adjusts an output resolution of the two-dimensional image data output from the decoded buffer 217-1 so as to be predetermined resolutions. The scaled two-dimensional image data is output from the view interpolation unit 219 as it is, for example, as image data of View 1.

The graphics stream extracted by the demultiplexer 214 are supplied to the coded buffer 225 so as to be temporarily accumulated. The graphics decoder 226 performs a decoding process on the graphics stream stored in the coded buffer 225 so as to obtain decoded graphics data (including subtitle data). In addition, the graphics decoder 226 generates bitmap data of graphics superimposed on a view (image) on the basis of the graphics data.

The bitmap data of graphics generated by the graphics decoder 226 is supplied to the pixel buffer 227 so as to be temporarily accumulated. The scaler 228 adjusts the size of the bitmap data of graphics accumulated in the pixel buffer 227 so as to correspond to the size of the scaled image data. The bitmap data of graphics of which the size has been adjusted, obtained by the scaler 228, is output from the graphics shifter 229 as it is.

The pixel interleaving/superimposing unit 220 superimposes the bitmap data of graphics output from the graphics shifter 229 on the two-dimensional image data output from the view interpolation unit 219 so as to generate display image data of a two-dimensional image. The display image data is supplied to a display, and thereby a two-dimensional image is displayed.

[Signaling in 3D period and 2D period]

Next, a description will be made of an operation mode switching control between a stereoscopic (3D) display process and a two-dimensional (2D) display process in the receiver 200 shown in Fig. 27. This switching is performed by the CPU 201. When a stereoscopic (3D) image is received, multi-view stream configuration information extracted by each of the video decoders 216-1, 216-2 and 216-3 is supplied to the CPU 201. In addition, when a two-dimensional (2D) image is received, multi-view stream configuration information, if inserted, extracted by the video decoder 216-1 is supplied to the CPU 201. The CPU 201 controls switching between a stereoscopic (3D) display process and a two-dimensional (2D) display process on the basis of the presence or the absence of the information or content thereof.

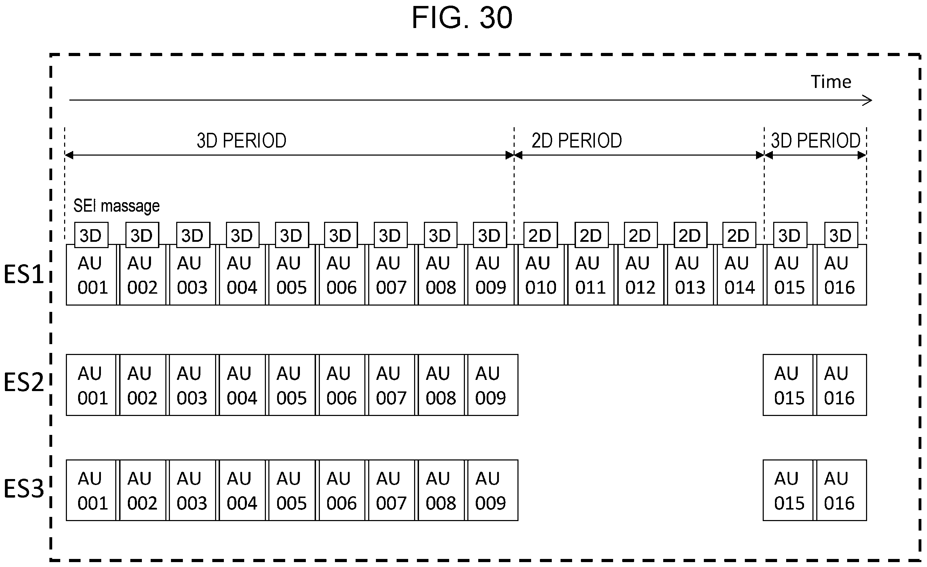

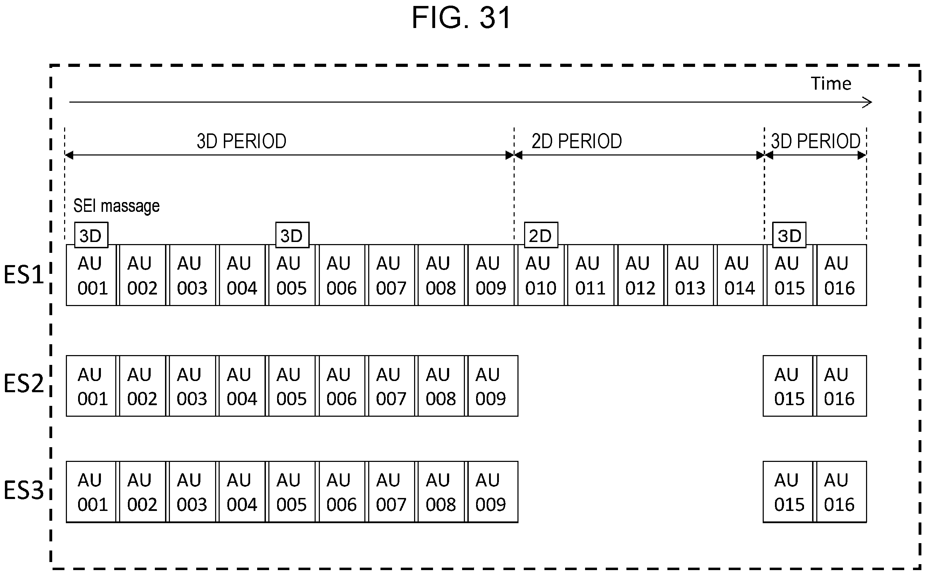

Figs. 30 and 31 show an example of a received stream in a case where a 3D period (when a stereoscopic image is received) and a 2D period (when a two-dimensional image is received) are alternately continued, and each period is, for example, the program unit or the scene unit. In the 3D period, a video stream ES1 of an intermediate view which is a base video stream is present, and two video streams ES2 and ES3 of a left end view and a right end view which are additional video streams are also present. In the 2D period, only the video stream ES1 which is a base video stream is present.

The example of Fig. 30 shows a case where a SEI message including the multi-view stream configuration information is inserted with the picture unit in both of the 3D period and the 2D period. In addition, the example of Fig. 31 shows a case where the SEI message including the multi-view stream configuration information is inserted with the scene unit or the picture group unit (the GOP unit) in each period.

In the SEI message inserted in the 3D period, there is "3D_flag=1" which indicates a 3D mode (stereoscopic image transmission mode). In addition, in the SEI message inserted in the 2D period, there is "3D_flag=0" which indicates a non-3D mode, that is, 2D mode (two-dimensional image transmission mode). In addition, the SEI message is not only inserted into the video stream ES1 but is also inserted into the video streams ES2 and ES3, but is not shown for simplification the drawings.

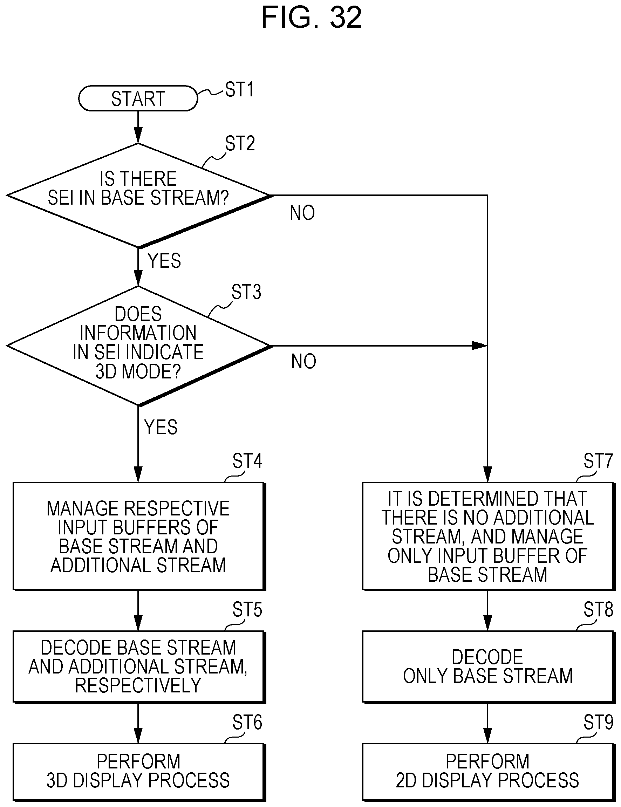

A flowchart of Fig. 32 shows an example of process procedures of the operation mode switching control in the CPU 201. This example is an example of a case where a coding method is AVC or MVC. As described above, the multi-view stream configuration information is inserted into the "SEIs" part of the access unit as "Multi-view stream configuration SEI message" (refer to Figs. 21 and 14). In this case, when a stereoscopic (3D) image is received, MVC base view stream (base video stream) and non-base view stream (additional video stream) are received, and when a two-dimensional (2D) image is received, an AVC (2D) stream (base video stream) is received.

The CPU 201 performs control according to the flowchart for each picture frame. However, in a case where the SEI message is not inserted with the picture unit, for example, the SEI message is inserted with the GOP unit (refer to Fig. 31), the CPU 201 maintains the current SEI information until the SEI information of the current GOP is replaced with the SEI information of the next GOP.

First, the CPU 201 starts a process in step ST1, and then proceeds to a process in step ST2. In step ST2, the CPU 201 determines whether or not SEI ("Multiview stream configuration SEI message") is inserted into the base video stream. When the SEI is inserted, the CPU 201 determines whether or not information in the SEI indicates a 3D mode, that is, "3D_flag=1" in step ST3.

When the information in the SEI indicates a 3D mode, that is, a stereoscopic (3D) image is received, the CPU 201 proceeds to a process in step ST4. The CPU 201 manages the respective input buffers (coded buffers) of the base video stream and the additional video stream in step ST4, and decodes the base video stream and the additional video stream, respectively, by using the decoders (video decoders) in step ST5. Further, the CPU 201 performs control such that the receiver 200 performs other stereoscopic (3D) display processes in step ST6.

In addition, the CPU 201 proceeds to a process in step ST7 when the SEI is not inserted in step ST2, or when the information in the SEI does not indicate a 3D mode, that is, a two-dimensional (2D) image is received in step ST3. The CPU 201 proceeds to the process in step ST7. The CPU 201 manages an input buffer (coded buffer) of the base video stream in step ST7, and decodes the base video stream by using the decoder (video decoder) in step ST8. Further, the CPU 201 performs control such that the receiver 200 performs other two-dimensional (2D) display processes in step ST9.

As described above, in the receiver 200 shown in Fig. 27, switching between a stereoscopic (3D) display process and a two-dimensional (2D) display process is controlled based on the presence or the absence of the SEI message including the multi-view stream configuration information or content thereof. For this reason, it is possible to appropriately and accurately handle a dynamic variation in delivery content and to thereby receive a correct stream.

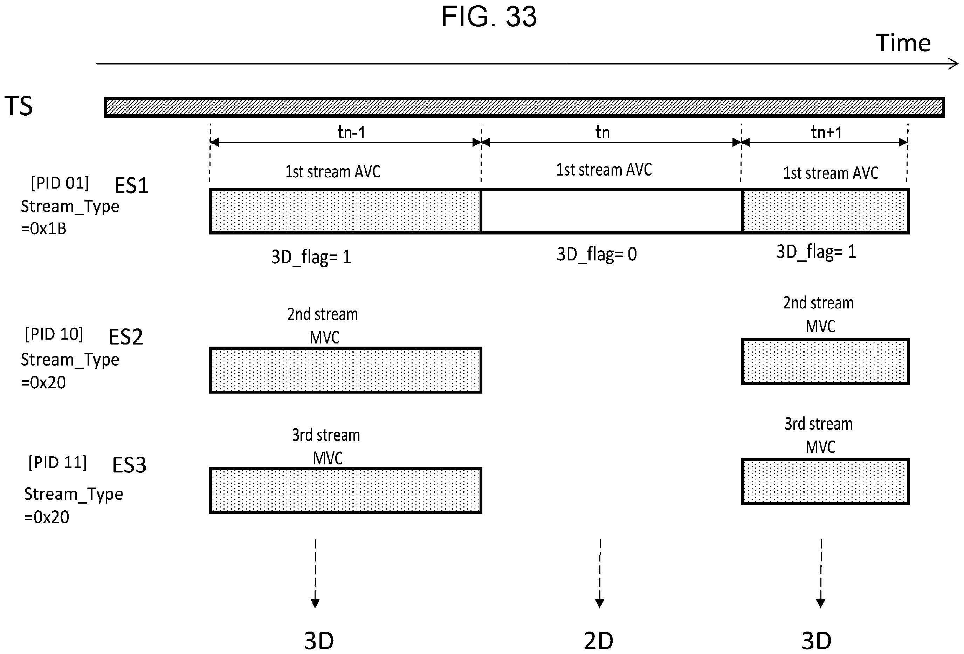

Fig. 33 shows an example of a case where a base video stream ES1 of an AVC base view of "Stream_Type=0x1B" and "PID=01" is continuously included in the transport stream TS, and MVC additional video streams ES2 and ES3 of "Stream_Type=0x20", "PID=10" and "PID=11" are intermittently included therein. In this case, the multi-view stream configuration SEI message is inserted into the stream ES1.

The SEI message is present in periods tn-1 and tn+1, and there is "3D_flag=1" which indicates a 3D mode. For this reason, in these periods, the receiver 200 performs a stereoscopic (3D) display process. In other words, the streams ES2 and ES3 as well as the stream ES1 are also extracted and are decoded such that stereoscopic (3D) display is performed. On the other hand, in the period tn, the SEI message is present, but there is "3D_flag=0" which indicates a 2D mode. For this reason, in this period, the receiver 200 performs a two-dimensional (2D) display process. In other words, only the stream ES1 is extracted and is decoded such that two-dimensional (2D) display is performed.

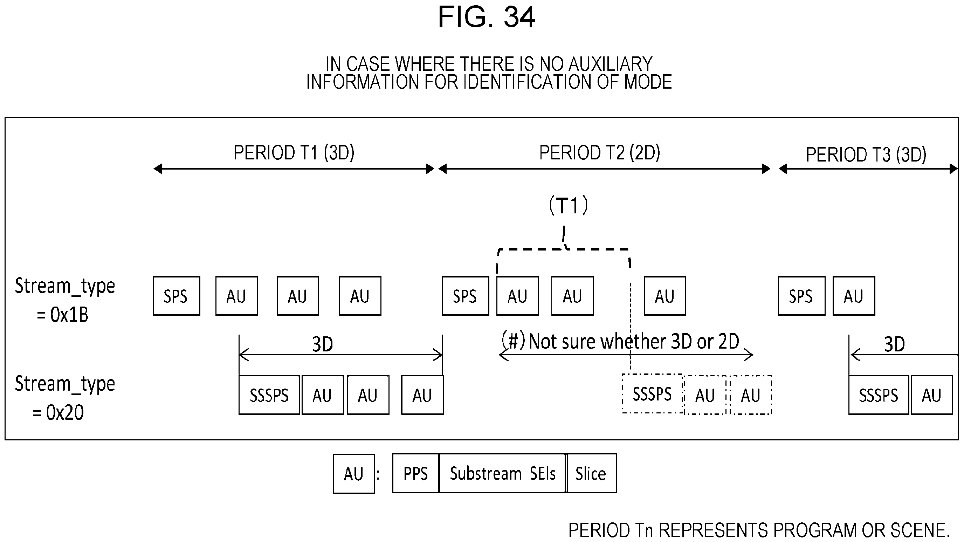

Fig. 34 shows an example of a case where a 3D period (3D mode period) and a 2D period (2D mode period) are alternately continued, and there is no auxiliary information (multi-view stream configuration SEI message) for identifying a mode. The periods T1 and T3 indicate a 3D period, and the period T2 indicates a 2D period. Each period represents, for example, the program unit or the scene unit.

In the 3D period, a base video stream of an MVC base view of "Stream_Type=0x1B" is present, and an additional video stream of an MVC non-base view of "Stream_Type=0x20" is also present. In addition, in the 2D period, an AVC stream of "Stream_Type=0x1B" is present. Further, the base video stream has a configuration in which SPS is a head and a predetermined number of access units (AU) are continuously located. Furthermore, the additional video stream has a configuration in which subset SPS (SSSPS) is a head and a predetermined number of access units (AU) are continuously located. In addition, the access units (AU) are constituted by "PPS, Substream SEIs, and Coded Slice".

In a case where there is no auxiliary information for identifying a mode, the receiver recognizes that the 3D period is switched to the 2D period when data is not input to the input buffers of the receiver during a predetermined period. However, it cannot be recognized at the time point T1 that the reason why data of an additional video stream is not input to the input buffer is that errors occur during transmission or coding, or switching to the 2D period is performed. Therefore, a temporal delay is required for the receiver to be switched to a 2D processing mode.

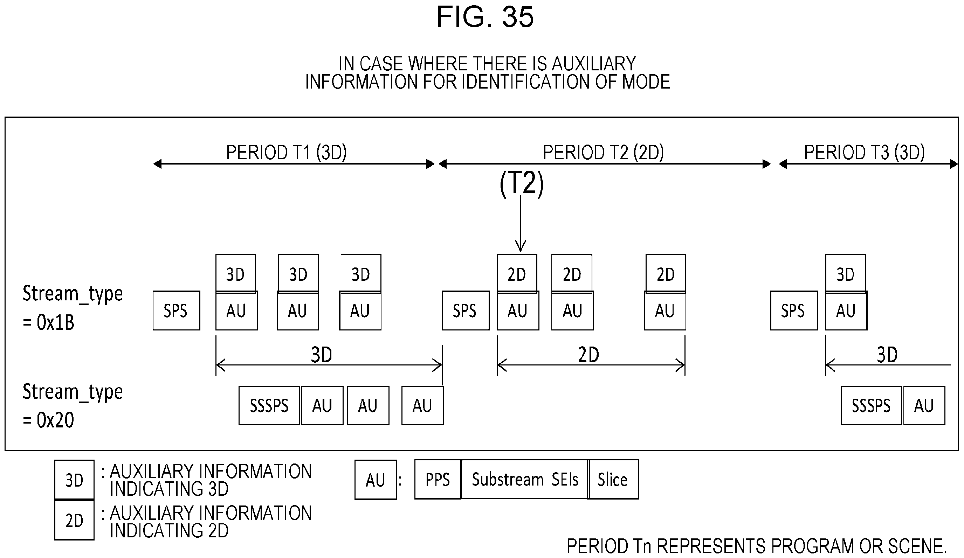

Fig. 35 shows an example of a case where a 3D period and a 2D period are alternately continued, and there is auxiliary information (multi-view stream configuration SEI message) for identifying a mode. The periods T1 and T3 indicate a 3D period, and the period T2 indicates a 2D period. Each period represents, for example, the program unit or the scene unit.

In the 3D period, a base video stream of an MVC base view of "Stream_Type=0x1B" is present, and an additional video stream of an MVC non-base view of "Stream_Type=0x20" is also present. In addition, in the 2D period, an AVC stream of "Stream_Type=0x1B" is present. Further, the base video stream has a configuration in which "SPS" is a head and a predetermined number of access units (AU) are continuously located. Furthermore, the additional video stream has a configuration in which "SSSPS" is a head and a predetermined number of access units (AU) are continuously located. In addition, the access units (AU) are constituted by "PPS, Substream SEIs, and Coded Slice".

The auxiliary information (multi-view stream configuration SEI message) for identifying a mode is inserted for each access unit (AU). The auxiliary information inserted into the access unit in the 3D period is indicated by "3D" which is regarded as "3D_flag=1" and indicates a 3D mode (stereoscopic image transmission mode). On the other hand, the auxiliary information inserted into the access unit in the 2D period is indicated by "2D" which is regarded as "3D_flag=0" and indicates a 2D mode (two-dimensional image transmission mode).

As above, in a case where there is auxiliary information (multi-view stream configuration SEI message) for identifying a mode, the receiver checks the element "3D_flag" of the auxiliary information, and can immediately discriminate whether the element indicates a 3D mode or a 2D mode, and thus it is possible to rapidly perform decoding and switching between display processes. In a case where the 3D period is switched to the 2D period, the receiver can determine that the 3D period is switched to the 2D period at the discrimination timing T2 when the element "3D_flag" of the auxiliary information inserted into the first access unit indicates a 2D mode, and thus can rapidly perform mode switching from 3D to 2D.

In addition, in the receiver 200 shown in Fig. 27, when a stereoscopic (3D) image is received, at least image data of a left end view and a right end view and image data of an intermediate view located between the left end and the right end are received among a plurality of views for stereoscopic image display. In addition, in this receiver 200, other views are obtained through an interpolation process on the basis of disparity data. For this reason, it is possible to favorably observe a stereoscopic image formed by multi-views with the naked eye.

In other words, not only image data of the left end view and the right end view but also image data of the center view is received. For this reason, a relative disparity between views is small, a periphery of occlusion according to processing of a fine part when image data of a view which is not transmitted is interpolated is easily interpolated, and thereby it is possible to improve quality of a reproduced image. In addition, since image data of the left end view and the right end view is received, image data of a view which is not transmitted can be generated through an interpolation process, and thus it is possible to easily maintain high image quality with regard to processing of an end point of occlusion or the like.

In addition, the receiver 200 shown in Fig. 27 shows a configuration example of a case where a disparity stream obtained by coding disparity data is included in the transport stream TS. In a case where a disparity stream is not included in the transport stream TS, disparity data is generated from received image data of each view and is used.

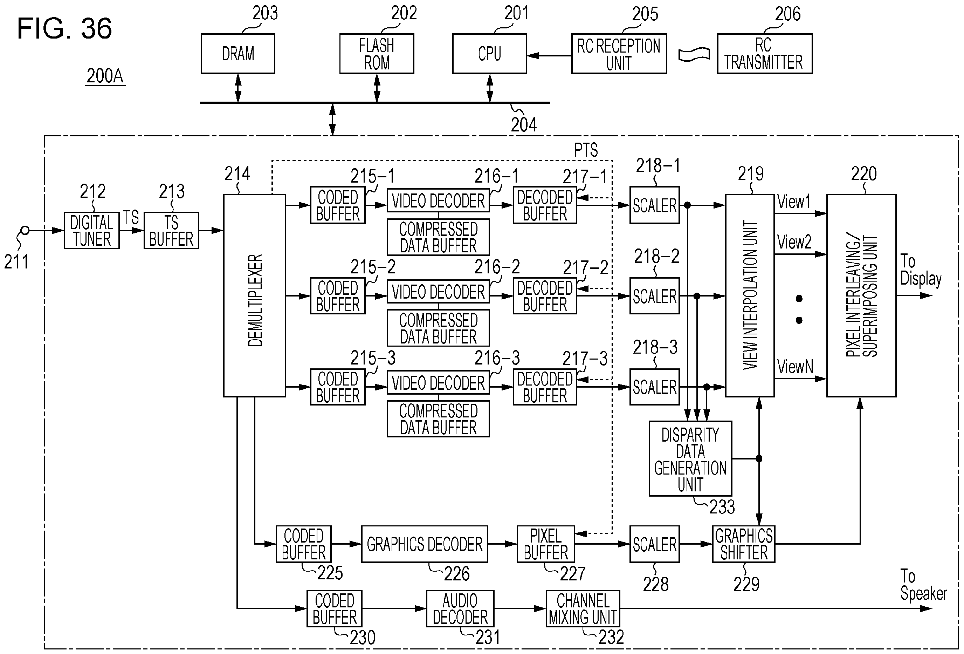

Fig. 36 shows a configuration example of a receiver 200A in this case. In Fig. 36, a part corresponding to Fig. 27 is given the same reference numeral and detailed description thereof will be omitted. The receiver 200A includes a disparity data generation unit 233. The disparity data generation unit 233 generates disparity data on the basis of scaled image data of each of the center, left end and right end views.

Although detailed description is omitted, a method of generating disparity data in this case is the same as the method of generating disparity data in the disparity data generation portion 116 of the above-described transmission data generation unit 110. In addition, the disparity data generation unit 233 generates and outputs the same disparity data as disparity data of the pixel unit generated by the disparity data conversion unit 224 of the receiver 200 shown in Fig. 27. Disparity data generated by the disparity data generate unit 233 is supplied to the view interpolation unit 219 and is also supplied to the graphics shifter 229 so as to be used.

In addition, in the receiver 200A shown in Fig. 36, the coded buffer 221, the disparity decoder 222, the disparity buffer 223, and the disparity data conversion unit 224 of the receiver 200 shown in Fig. 27 are omitted. The other configurations of the receiver 200A shown in Fig. 36 are the same as the configurations of the receiver 200 shown in Fig. 27.

[Another example of auxiliary information for identifying mode]

In the above description, a description has been made of an example in which the multi-view stream configuration SEI message is used as auxiliary information for identifying a mode, and the receiver discriminates a 3D period or a 2D period with frame accuracy on the basis of set content thereof. As auxiliary information for identifying a mode, the existing multi-view view position SEI message (multiview_view_position SEI message) may be used. If this multi-view view position SEI message is to be inserted, a transmission side is required to insert the message into an intra-picture in which intra-refresh (making a compression buffer vacant) is performed over an entire video sequence.

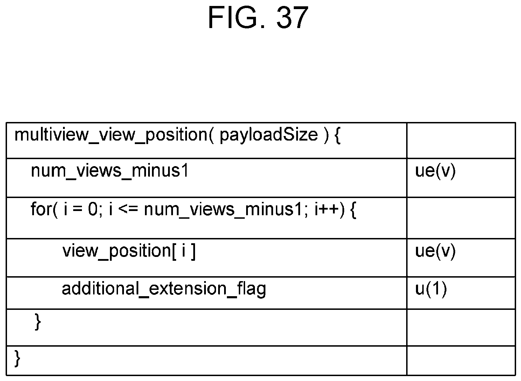

Fig. 37 shows a structural example (Syntax) of a multi-view view position (Multiview view position()) included in the SEI message. The field of "num_views_minus1" indicates a value (0 to 1023) which is withdrawn from the number of views. The field of "view_position[i]" indicates a relative positional relationship when each view is displayed. In other words, the field indicates a sequential relative position from a left view to a right view when each view is displayed, using a value which sequentially increases from 0.

The transmission data generation unit 110 shown in Fig. 7 described above inserts the multi-view view position SEI message into a video stream (base video stream) which is obtained by coding image data of an intermediate view in a 3D mode (stereoscopic image transmission mode). The multi-view view position SEI message forms identification information indicating a 3D mode. In this case, the message is inserted at least with the program unit, the scene unit, the picture group unit, or the picture unit.

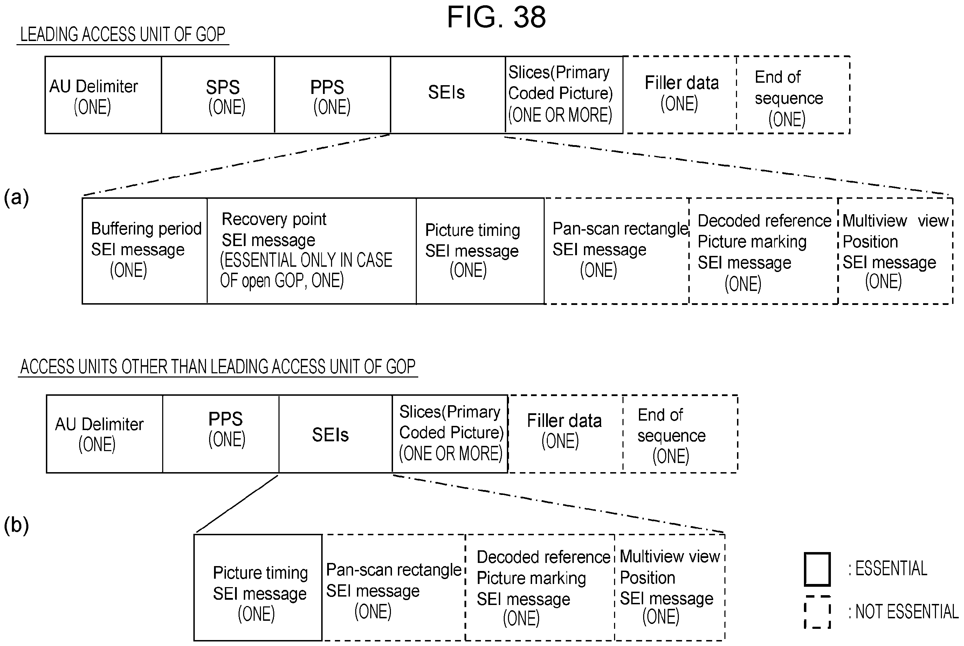

Fig. 38(a) shows a leading access unit of Group Of Pictures (GOP), and Fig. 38(b) shows an access unit other than the leading access unit of the GOP. In a case where multi-view view position SEI is inserted with the GOP unit, "multiview_view_position SEI message" is inserted into only the leading access unit of the GOP.

If this is applied to three views including a left end (Left), center (Center) and right end (Right) views, in the multi-view view position (Multiview view position()) (refer to Fig. 37) included in the multi-view view position SEI message, there is "view_position[0]=1" which indicates that a base view video stream which is a base video stream is a video stream obtained by coding image data of the center view.

In addition, there is "view_position[1]=0" which indicates that a non-base view first video stream which is an additional video stream is a video stream obtained by coding image data of the left end view. Further, there is "view_position[2]=2" which indicates that a non-base view second video stream which is an additional video stream is a video stream obtained by coding image data of the right end view.

A description will be made of operation mode switching control between a stereoscopic (3D) display process and a two-dimensional (2D) display process in the receiver 200 shown in Fig. 27 in a case of using the multi-view view position SEI message (multiview_view_position message),. This switching is performed by the CPU 201. When a stereoscopic (3D) image is received, the multi-view view position SEI message is extracted by the video decoder 216-1 and is supplied to the CPU 201. However, when a two-dimensional (2D) image is received, the SEI message is not extracted by the video decoder 216-1 and thus is not supplied to the CPU 201. The CPU 201 controls switching between a stereoscopic (3D) display process and a two-dimensional (2D) display process on the basis of the presence or the absence of the SEI message.

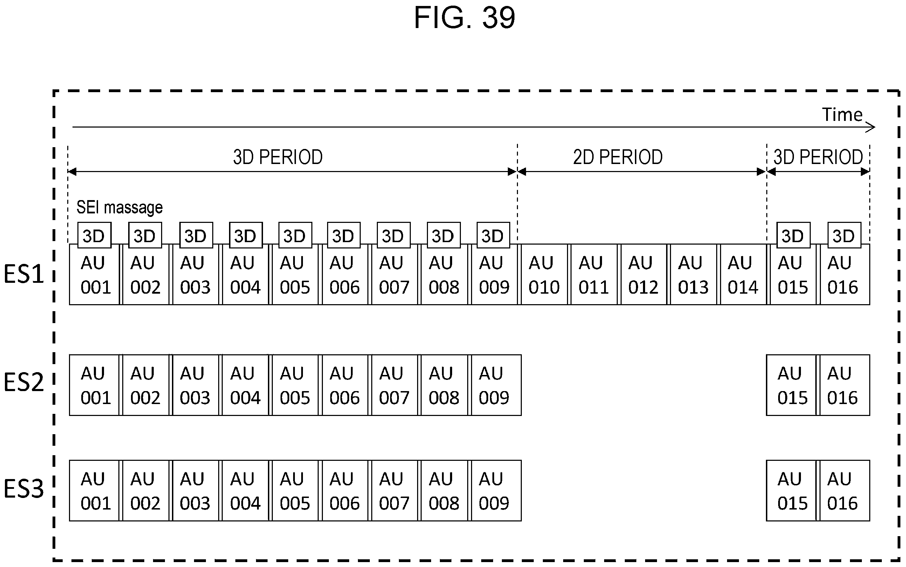

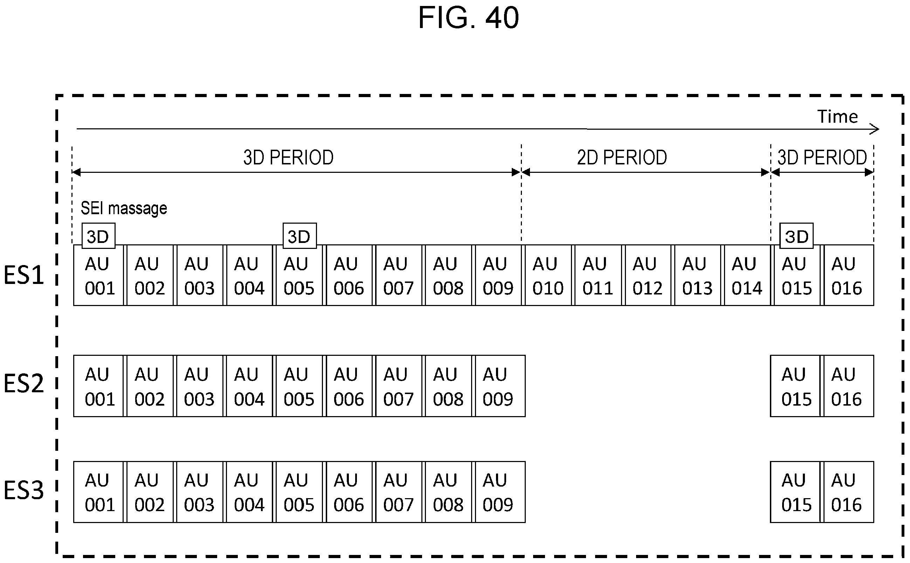

Figs. 39 and 40 show an example of a received stream in a case where a 3D period (when a stereoscopic image is received) and a 2D period (when a two-dimensional image is received) are alternately continued. Each period is, for example, the program unit or the scene unit. In the 3D period, a video stream ES1 of an intermediate view which is a base video stream is present, and two video streams ES2 and ES3 of a left end view and a right end view which are additional video streams are also present. In the 2D period, only the video stream ES1 which is a base video stream is present.

The example of Fig. 39 shows a case where the multi-view view position SEI message is inserted with the picture unit in the 3D period. In addition, the example of Fig. 40 shows a case where the multi-view view position SEI is inserted with the scene unit or the picture group unit (the GOP unit) in 3D period.

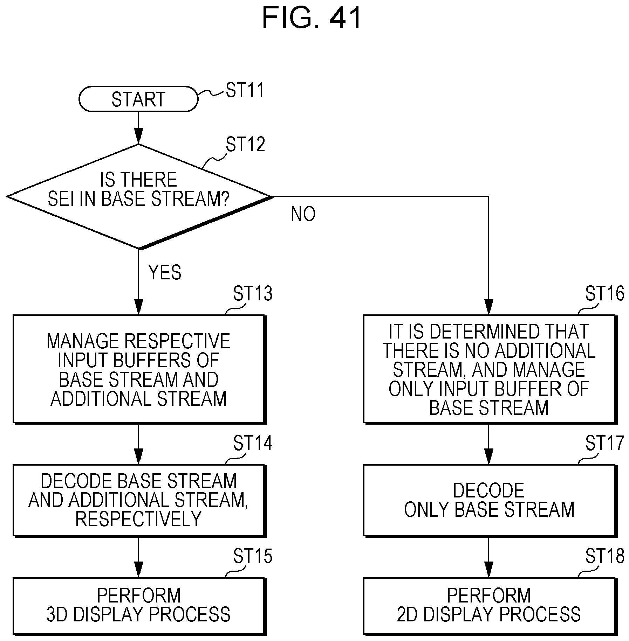

A flowchart of Fig. 41 shows an example of process procedures of the operation mode switching control in the CPU 201. The CPU 201 performs control according to the flowchart for each picture frame. However, in a case where the SEI message is not inserted with the picture unit, for example, the SEI message is inserted with the GOP unit (refer to Fig. 40), the CPU 201 maintains the current SEI information until the SEI information of the current GOP is replaced with the SEI information of the next GOP.

First, the CPU 201 starts a process in step ST11, and then proceeds to a process in step ST12. In step ST12, the CPU 201 determines whether or not SEI ("Multiview Position SEI message") is inserted into the base video stream. When the SEI is inserted, the CPU 201 proceeds to a process in step ST13. In other words, when a stereoscopic (3D) image is received, the SEI is inserted into the base video stream, the CPU 201 proceeds to a process in step ST13.

The CPU 201 manages the respective input buffers (coded buffers) of the base video stream and the additional video stream in step ST13, and decodes the base video stream and the additional video stream, respectively, by using the decoders (video decoders) in step ST14. Further, the CPU 201 performs control such that the receiver 200 performs other stereoscopic (3D) display processes in step ST15.

In this case, a video stream (additional video stream) into which the multi-view view position SEI is not inserted is processed according to a definition designated by the element of the SEI. In other words, in this example, each additional video stream is processed according to a relative positional relationship designated by "view_position[i]" when each view is displayed, and thereby image data of each view is appropriately acquired.

In addition, when the SEI ("multiview_view_position SEI message") is not inserted in step ST12, the CPU 201 proceeds to a process in step ST16. In other words, since the SEI is not inserted into the base video stream when a two-dimensional (2D) image is received, the CPU 201 proceeds to a process in step ST16. The CPU 201 manages an input buffer (coded buffer) of the base video stream in step ST16, and decodes the base video stream by using the decoder (video decoder) in step ST17. Further, the CPU 201 performs control such that the receiver 200 performs other two-dimensional (2D) display processes in step ST18.

As described above, also by using the multi-view view position SEI message, a reception side can favorably perform switching between a stereoscopic (3D) display process and a two-dimensional (2D) display process. For this reason, it is possible to appropriately and accurately handle a dynamic variation in delivery content and to thereby receive a correct stream.

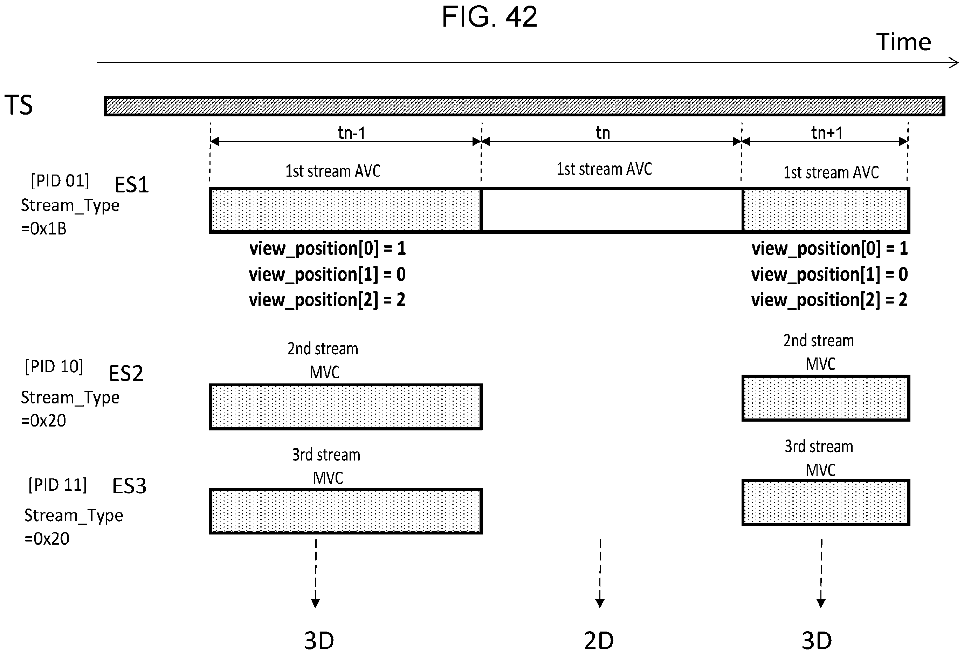

Fig. 42 shows an example of a case where a base video stream ES1 of an AVC base view of "Stream_Type=0x1B" and "PID=01" is continuously included in the transport stream TS, and MVC additional video streams ES2 and ES3 of "Stream_Type=0x20", "PID=10" and "PID=11" are intermittently included therein. In this case, the multi-view view position SEI is inserted into the stream ES1 in the 3D period.

The multi-view view position SEI is present in periods tn-1 and tn+1. For this reason, in these periods, the receiver 200 performs a stereoscopic (3D) display process. In other words, the streams ES2 and ES3 as well as the stream ES1 are also extracted and are decoded such that stereoscopic (3D) display is performed. On the other hand, in the period tn, the multi-view view position SEI is not present. For this reason, in this period, the receiver 200 performs a two-dimensional (2D) display process. In other words, only the stream ES1 is extracted and is decoded such that two-dimensional (2D) display is performed.

In addition, at least one of the above-described multi-view stream configuration SEI and the multi-view view position SEI may be inserted into a video stream which is transmitted by a transmission side. In this case, a reception side may control switching between a stereoscopic (3D) display process and a two-dimensional (2D) display process by using at least several pieces of SEI.

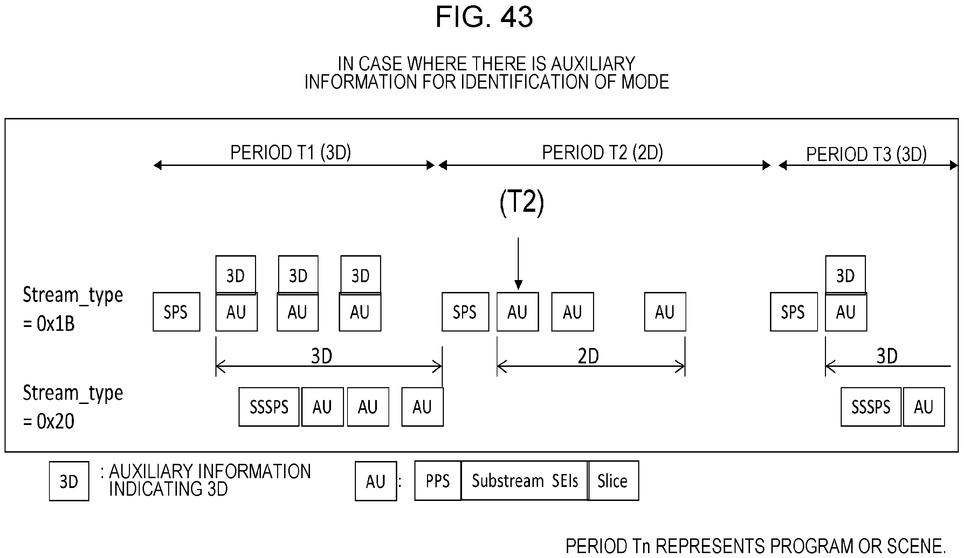

Fig. 43 shows an example of a case where a 3D period and a 2D period are alternately continued, and there is auxiliary information (multi-view view position SEI message) for identifying a mode. The periods T1 and T3 indicate a 3D period, and the period T2 indicates a 2D period. Each period represents, for example, the program unit or the scene unit.

In the 3D period, a base video stream of an MVC base view of "Stream_Type=0x1B" is present, and an additional video stream of an MVC non-base view of "Stream_Type=0x20" is also present. In addition, in the 2D period, an AVC stream of "Stream_Type=0x1B" is present. Further, the base video stream has a configuration in which "SPS" is a head and a predetermined number of access units (AU) are continuously located. Furthermore, the additional video stream has a configuration in which "SSSPS" is a head and a predetermined number of access units (AU) are continuously located. In addition, the access units (AU) are constituted by "PPS, Substream SEIs, and Coded Slice".

The auxiliary information (multi-view view position SEI message) for identifying a mode is inserted for each access unit (AU) in the 3D period. The auxiliary information indicates the 3D mode which is denoted by "3D". In addition, the auxiliary information is not inserted into each access unit (AU) in the 2D period.

As above, in a case where there is auxiliary information for identifying a mode as described above, the receiver can immediately discriminate whether a period is a 3D period or a 2D period on the basis of the presence or the absence of the auxiliary information, and thus it is possible to rapidly perform decoding and switching between display processes. In a case where the 3D period is switched to the 2D period, the receiver can determine that the 3D period is switched to the 2D period at the discrimination timing T2 when there is no auxiliary information in the first access unit and thus can rapidly perform mode switching from 3D to 2D.

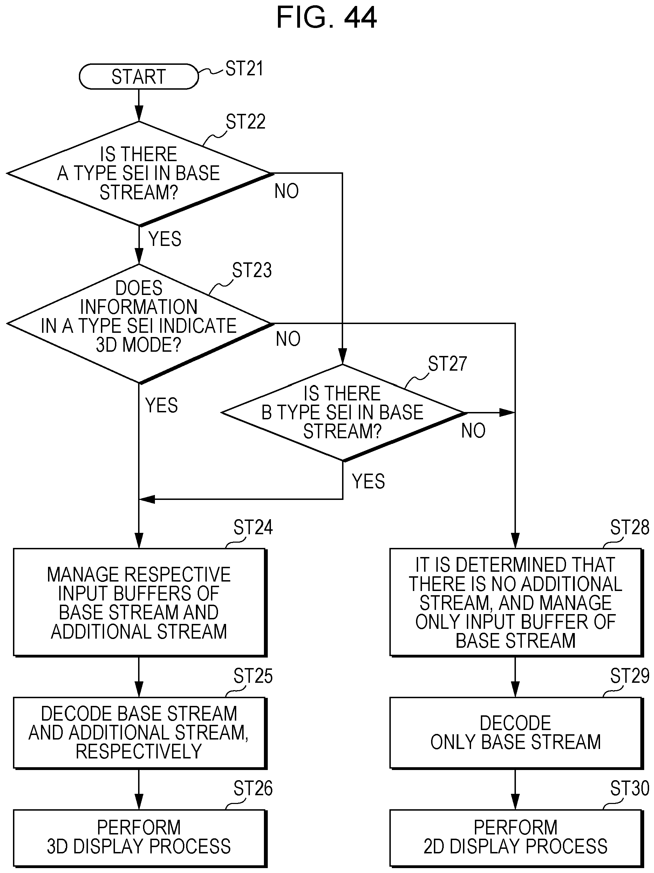

A flowchart of Fig. 44 shows an example of process procedures of the operation mode switching control in the CPU 201. The CPU 201 performs control according to the flowchart for each picture frame. However, in a case where the SEI message is not inserted with the picture unit, for example, the SEI message is inserted with the GOP unit, the CPU 201 maintains the current SEI information until the SEI information of the current GOP is replaced with the SEI information of the next GOP. Hereinafter, a description will be made assuming the multi-view stream configuration SEI as A type SEI and the multi-view view position SEI as B type SEI.

First, the CPU 201 starts a process in step ST21, and then proceeds to a process in step ST22. In step ST22, the CPU 201 determines whether or not the A type SEI is inserted into the base video stream. When the A type SEI is inserted, the CPU 201 determines whether or not information in the A type SEI indicates a 3D mode, that is, "3D_flag=1" in step ST23.

When the information in the SEI indicates a 3D mode, that is, a stereoscopic (3D) image is received, the CPU 201 proceeds to a process in step ST24. The CPU 201 manages the respective input buffers (coded buffers) of the base video stream and the additional video stream in step ST24, and decodes the base video stream and the additional video stream, respectively, by using the decoders (video decoders) in step ST25. Further, the CPU 201 performs control such that the receiver 200 performs other stereoscopic (3D) display processes in step ST6.

In addition, the CPU 201 proceeds to a process in step ST28 when the information in the A type SEI does not indicate a 3D mode, that is, a two-dimensional (2D) image is received in step ST23. The CPU 201 manages an input buffer (coded buffer) of the base video stream in step ST28, and decodes the base video stream by using the decoder (video decoder) in step ST29. Further, the CPU 201 performs control such that the receiver 200 performs other two-dimensional (2D) display processes in step ST30.

In addition, when the A type SEI is not inserted in step ST22, the CPU 201 determines whether or not the B type SEI is inserted into the base video stream in step ST27. When the B type SEI is inserted, the CPU 201 proceeds to a process in step ST24, and performs control such that the receiver 200 performs a stereoscopic (3D) display process as described above. On the other hand, when the B type SEI is not inserted into the base video stream, the CPU 201 proceeds to a process in step ST28, and performs control such that the receiver 200 performs a two-dimensional (2D) display process.

As described above, in a case where at least one of the multi-view stream configuration SEI and the multi-view view position SEI is inserted into a transmitted video stream, a reception side can use at least one. Thereby, it is possible to favorably perform switching between a stereoscopic (3D) display process and a two-dimensional (2D) display process. For this reason, it is possible to appropriately and accurately handle a dynamic variation in delivery content and to thereby receive a correct stream.

[Still another example of auxiliary information for identifying mode]

In the above description, a description has been made of an example in which the multi-view stream configuration SEI message or the multi-view view position SEI message is used as auxiliary information for identifying a mode, and the receiver discriminates a 3D period or a 2D period with frame accuracy on the basis of set content thereof or the presence or the absence thereof. As auxiliary information for identifying a mode, still another auxiliary information may be used. That is, auxiliary information indicating a 2D mode is used.

As identification information indicating a 2D mode, a SEI message which is newly defined may be used. In addition, in a case of an MPEG2 stream, existing frame packing arrangement data (frame_packing_arrangement_data()) may be used.

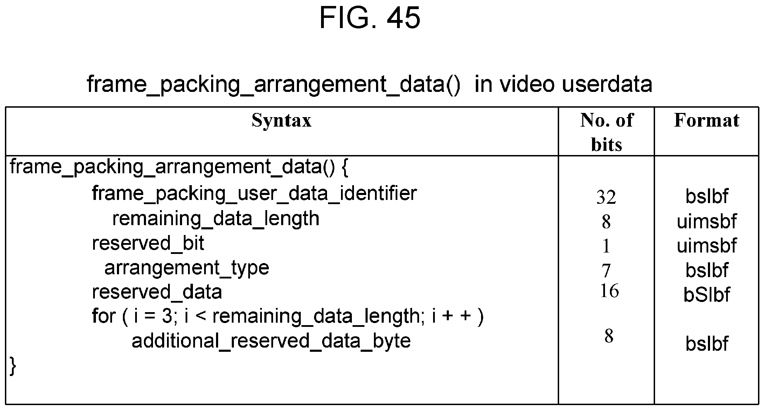

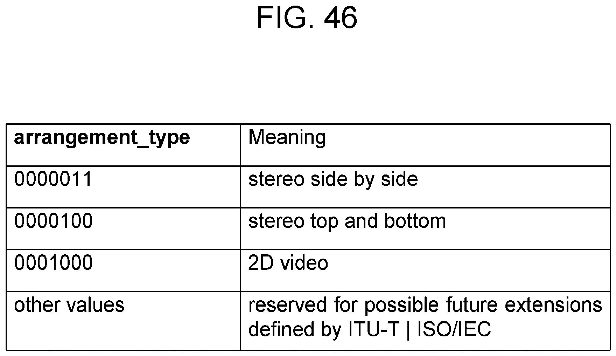

Fig. 45 shows a structural example (Syntax) of frame packing arrangement data (frame_packing_arrangement_data()). The 32-bit field of "frame_packing_user_data_identifier" enables this user data to be identified as frame packing arrangement data. The 7-bit field of "arrangement_type" indicates a stereo video format type (stereo_video_format_type). As shown in Fig. 46, "0000011" indicates stereo side-by-side, "0000100" indicates stereo top-and-bottom, and "0001000" indicates 2D video.

The transmission data generation unit 110 shown in Fig. 7 described above inserts auxiliary information indicating a 2D mode into a video stream (base video stream) which is obtained by coding image data of an intermediate view in a 2D mode (stereoscopic image transmission mode). For example, in a case where this stream is an MPEG2 stream, the frame packing arrangement data (arrangement_type=0001000) is inserted into the user data region. In this case, the data is inserted at least with the program unit, the scene unit, the picture group unit, or the picture unit.

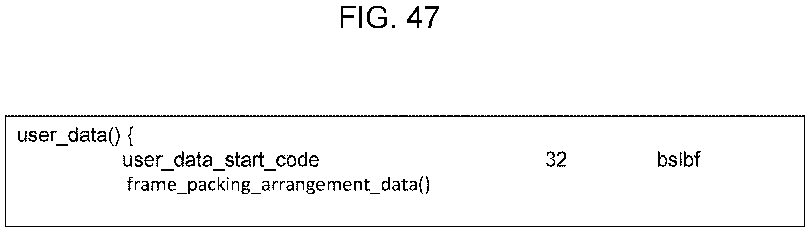

The frame packing arrangement data (frame_packing_arrangement_data()) is inserted into the user data region of the picture header part as user data "user_data()". Fig. 47 shows a structural example of "user_data()". The 32-bit field of "user_data_start_code" is a start code of the user data (user_data) and is a fixed value of "0x000001B2". "frame_packing_arrangement_data()" is inserted subsequent to the start code as a data body.

In a case of using the auxiliary information indicating a 2D mode, a description will be made of operation mode switching control between a stereoscopic (3D) display process and a two-dimensional (2D) display process in the receiver 200 shown in Fig. 27. This switching is performed by the CPU 201. When a two-dimensional (2D) image is received, the auxiliary information indicating a 2D mode is extracted by the video decoder 216-1 and is supplied to the CPU 201. However, when a stereoscopic (3D) image is received, the auxiliary information is not extracted by the video decoder 216-1 and thus is not supplied to the CPU 201. The CPU 201 controls switching between a stereoscopic (3D) display process and a two-dimensional (2D) display process on the basis of the presence or the absence of the auxiliary information.

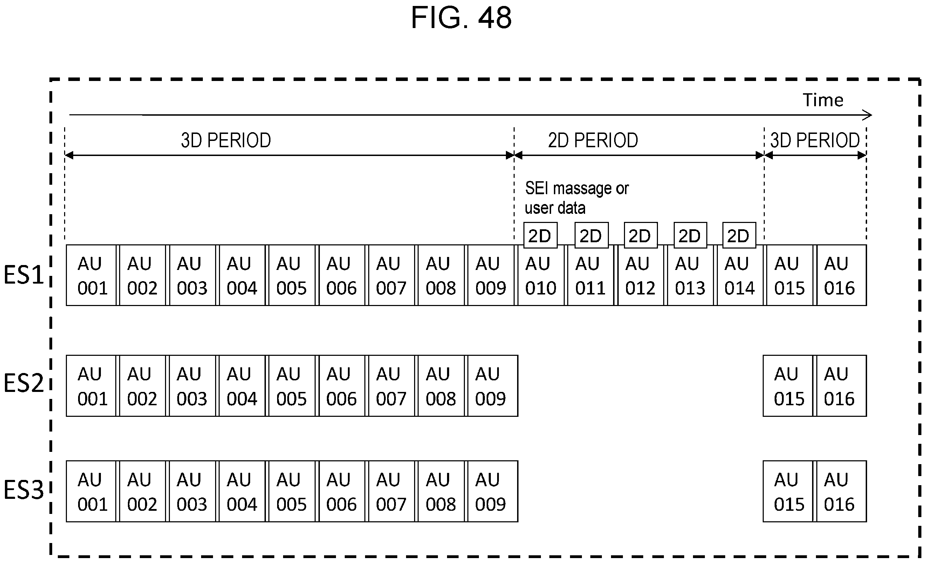

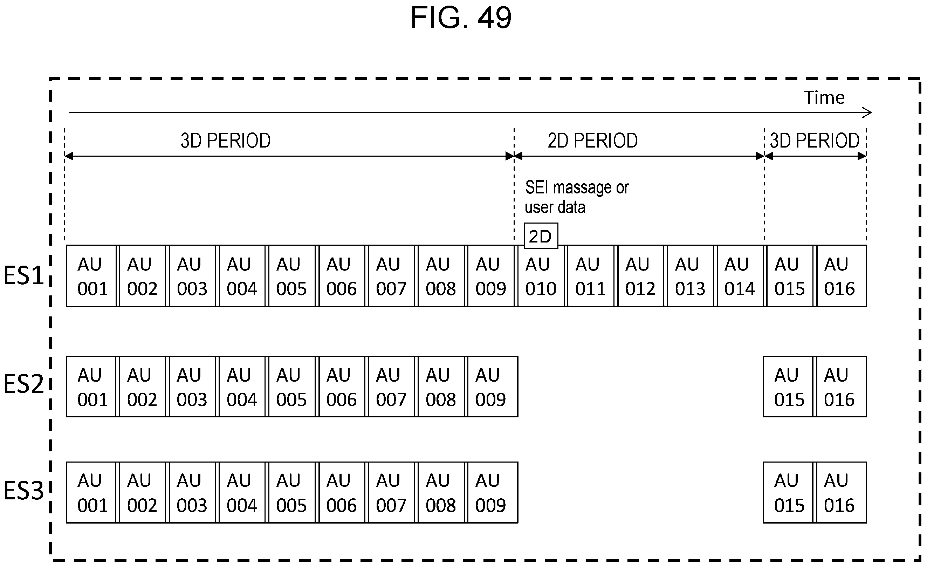

Figs. 48 and 49 show an example of a received stream in a case where a 3D period (when a stereoscopic image is received) and a 2D period (when a two-dimensional image is received) are alternately continued. Each period is, for example, the program unit or the scene unit. In the 3D period, a video stream ES1 of an intermediate view which is a base video stream is present, and two video streams ES2 and ES3 of a left end view and a right end view which are additional video streams are also present. In the 2D period, only the video stream ES1 which is a base video stream is present. The example of Fig. 48 shows a case where the auxiliary information indicating a 2D mode is inserted with the picture unit in the 2D period. In addition, the example of Fig. 49 shows a case where the auxiliary information indicating a 2D mode is inserted with the scene unit or the picture group unit (the GOP unit) in the 2D period.

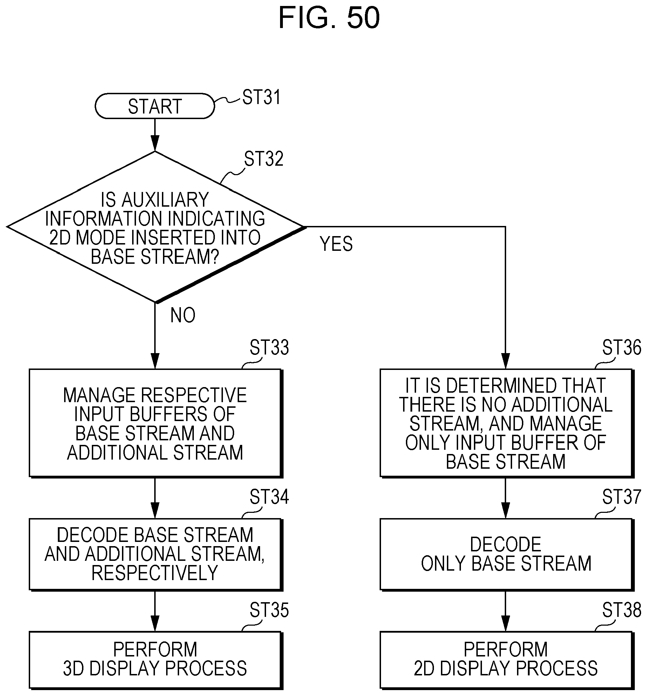

A flowchart of Fig. 50 shows an example of process procedures of the operation mode switching control in the CPU 201. The CPU 201 performs control according to the flowchart for each picture frame. However, in a case where the auxiliary information is not inserted with the picture unit, for example, the auxiliary information is inserted with the GOP unit (refer to Fig. 49), the CPU 201 maintains the current auxiliary information until the auxiliary information of the current GOP is replaced with the auxiliary information of the next GOP.

First, the CPU 201 starts a process in step ST31, and then proceeds to a process in step ST32. In step ST32, the CPU 201 determines whether or not the auxiliary information indicating a 2D mode is inserted into the base video stream. When the auxiliary information is not inserted, the CPU 201 proceeds to a process in step ST33. In other words, when a stereoscopic (3D) image is received, the auxiliary information is not inserted into the base video stream, the CPU 201 proceeds to a process in step ST33.

The CPU 201 manages the respective input buffers (coded buffers) of the base video stream and the additional video stream in step ST33, and decodes the base video stream and the additional video stream, respectively, by using the decoders (video decoders) in step ST34. Further, the CPU 201 performs control such that the receiver 200 performs other stereoscopic (3D) display processes in step ST35.

In addition, when the auxiliary information is inserted in step ST32, the CPU 201 proceeds to a process in step ST36. In other words, since the auxiliary information inserted into the base video stream when a two-dimensional (2D) image is received, the CPU 201 proceeds to a process in step ST36. The CPU 201 manages an input buffer (coded buffer) of the base video stream in step ST36, and decodes the base video stream by using the decoder (video decoder) in step ST37. Further, the CPU 201 performs control such that the receiver 200 performs other two-dimensional (2D) display processes in step ST38.

As described above, also by using the auxiliary information indicating a 2D mode, a reception side can favorably perform switching between a stereoscopic (3D) display process and a two-dimensional (2D) display process. For this reason, it is possible to appropriately and accurately handle a dynamic variation in delivery content and to thereby receive a correct stream.

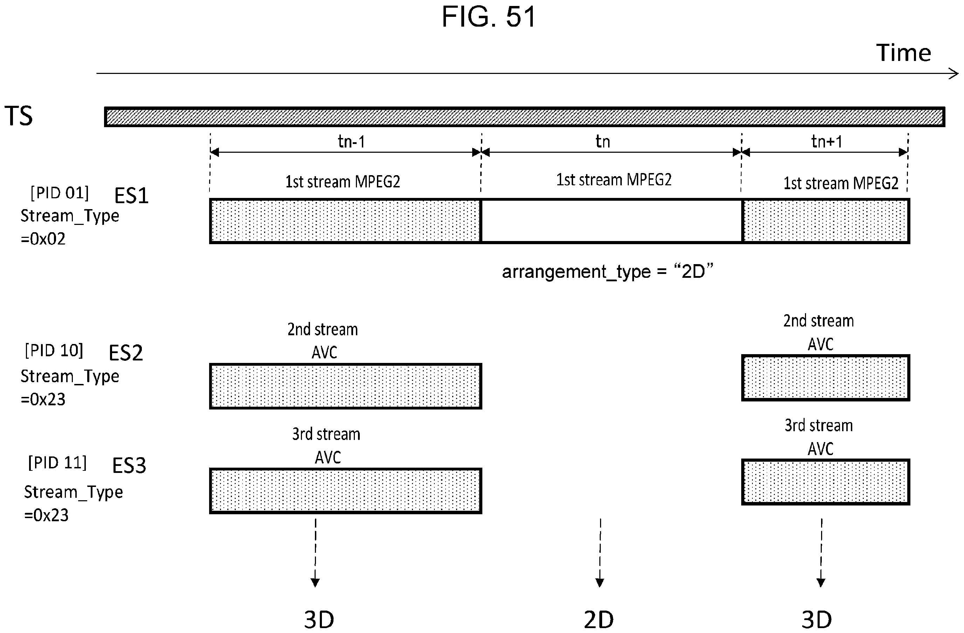

Fig. 51 shows an example of a case where a base video stream ES1 of an MPEG2 base view of "Stream_Type=0x20" and "PID=01" is continuously included in the transport stream TS, and AVC additional video streams ES2 and ES3 of "Stream_Type=0x23", "PID=10" and "PID=11" are intermittently included therein. In this case, the frame packing arrangement data (arrangement_type="2D") is inserted into the stream ES1 in the 2D period.

] The frame packing arrangement data (arrangement_type="2D") is not present in periods tn-1 and tn+1. For this reason, in these periods, the receiver 200 performs a stereoscopic (3D) display process. In other words, the streams ES2 and ES3 as well as the stream ES1 are also extracted and are decoded such that stereoscopic (3D) display is performed. On the other hand, in the period tn, frame packing arrangement data (arrangement_type="2D") is present. For this reason, in this period, the receiver 200 performs a two-dimensional (2D) display process. In other words, only the stream ES1 is extracted and is decoded such that two-dimensional (2D) display is performed.

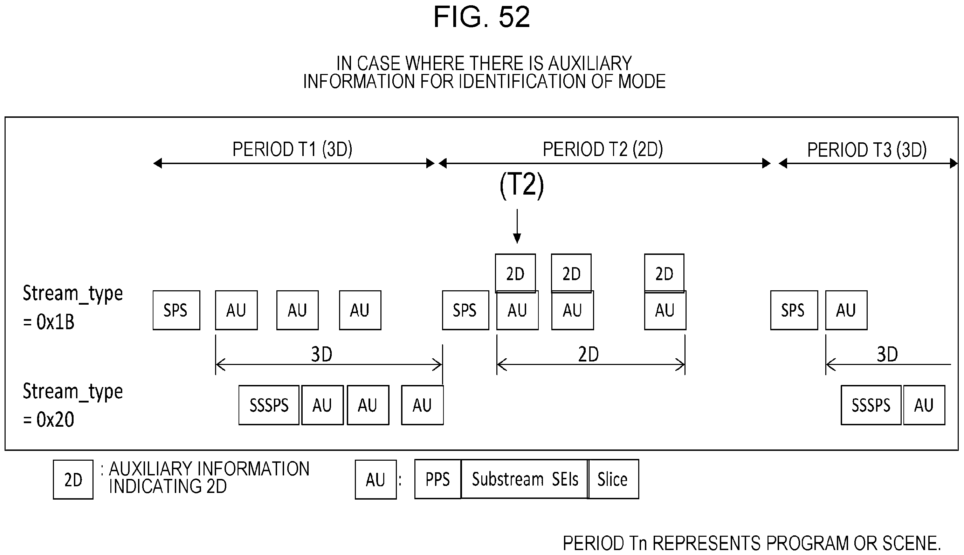

Fig. 52 shows an example of a case where a 3D period and a 2D period are alternately continued, and there is auxiliary information (a newly defined SEI message indicating a 2D mode) for identifying a mode. The periods T1 and T3 indicate a 3D period, and the period T2 indicates a 2D period. Each period represents, for example, the program unit or the scene unit.

In the 3D period, a base video stream of an MVC base view of "Stream_Type=0x1B" is present, and an additional video stream of an MVC non-base view of "Stream_Type=0x20" is also present. In addition, in the 2D period, an AVC stream of "Stream_Type=0x1B" is present. Further, the base video stream has a configuration in which "SPS" is a head and a predetermined number of access units (AU) are continuously located. Furthermore, the additional video stream has a configuration in which "SSSPS" is a head and a predetermined number of access units (AU) are continuously located. In addition, the access units (AU) are constituted by "PPS, Substream SEIs, and Coded Slice".

The auxiliary information for identifying a mode is inserted into each access unit (AU) in the 2D period. The auxiliary information indicates the 2D mode which is denoted by "2D". In addition, the auxiliary information is not inserted into each access unit (AU) in the 3D period.

As above, in a case where there is auxiliary information for identifying a mode as described above, the receiver can immediately discriminate whether a period is a 3D period or a 2D period on the basis of the present or the absence of the auxiliary information, and thus it is possible to rapidly perform decoding and switching between display processes.

In a case where the 3D period is switched to the 2D period, the receiver can determine that the 3D period is switched to the 2D period at the discrimination timing T2 when there is auxiliary information in the first access unit and thus can rapidly perform mode switching from 3D to 2D.

[Case of stereo stereoscopic image]

In addition, in the above description, a description has been made of an example in which image data of a center view, a left end view, and a right end view for display a multi-view stereoscopic image is transmitted from the broadcast station 100 to the receiver 200 when a stereoscopic (3D) image is transmitted. The present technology is applicable in the same manner even to a case where image data of a left eye view and a right eye view for displaying a stereo stereoscopic image is transmitted from the broadcast station 100 to the receiver 200 when a stereoscopic (3D) image is transmitted.

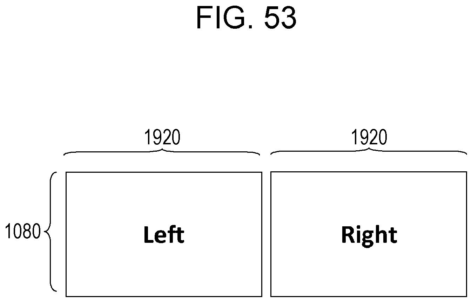

In this case, in a video stream included in the transport stream TS, as shown in Fig. 53, each of image data items of a left eye (Left) view and a right eye (Right) view is coded as data of a single picture. In the shown example, the data of each picture has a full HD size of 1920*1080. In this case, for example, of a base video stream and an additional video stream obtained by coding each of image data items of a left eye view and a right eye view, the multi-view view position SEI is inserted into the base video stream.

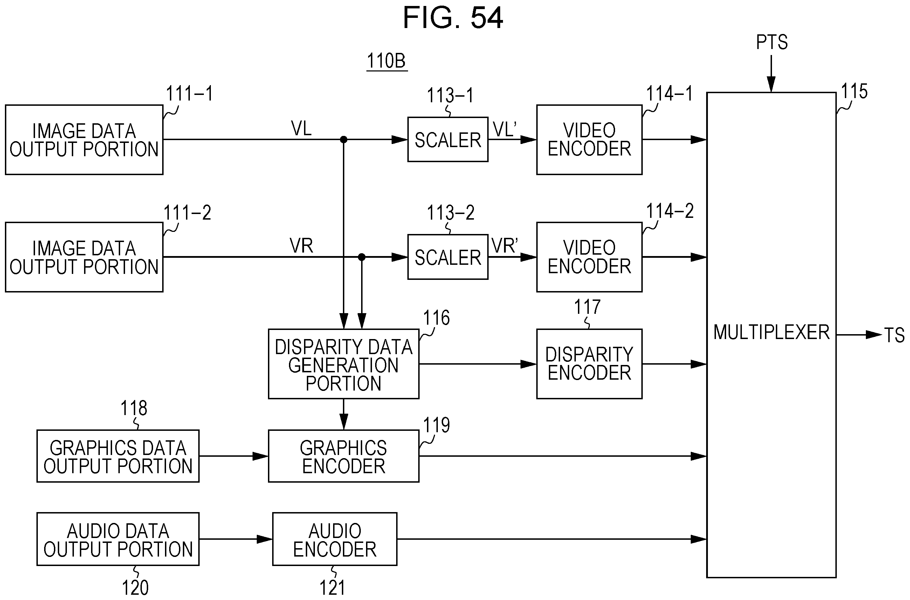

Fig. 54 shows a configuration example of a transmission data generation unit 110B which transmits image data of a left eye view and a right eye view for displaying a stereo stereoscopic image in the broadcast station 100. In Fig. 54, a part corresponding to Fig. 7 is given the same reference numeral, and detailed description thereof will be appropriately omitted.

Image data (left eye image data) VL of a left eye view output from the image data output portion 111-1 is scaled to a full HD size of 1920*1080 by the scaler 113-1. In addition, the scaled image data VL' is supplied to the video encoder 114-1. The video encoder 114-1 performs coding on the image data VL' so as to obtain coded video data, and generates a video stream (base video stream) which includes the coded data as a substream (sub stream 1).

In addition, in this case, the video encoder 114-1 inserts a multi-view view position SEI message into the video stream (base video stream) at least with the program unit, the scene unit, the picture group unit, or the picture unit. In a multi-view view position (Multiview view position()) (refer to Fig. 37) included in this multi-view view position SEI message, there are "view_position[0]=0" and "view_position[1]=1".

This indicates that a base view video stream which is a base video stream is a video stream obtained by coding image data of a left end view. In addition, it is indicated that a non-base view video stream which is an additional video stream is a video stream obtained by coding image data of a right end view.

Further, image data (right eye image data) VR of a right eye view output from the image data output portion 111-2 is scaled to a full HD size of 1920*1080 by the scaler 113-2. In addition, the scaled image data VR' is supplied to the video encoder 114-2. The video encoder 114-2 performs coding on the image data VR' so as to obtain coded video data, and generates a video stream (additional video stream) which includes the coded data as a substream (sub stream 2).

The multiplexer 115 packetizes and multiplexes the elementary streams supplied from the respective encoders so as to generate a transport stream TS. In this case, the video stream (base video stream) obtained by coding the left eye image data is transmitted as, for example, an MVC base view video elementary stream (Base view sub-bitstream). In addition, the video stream (additional video stream) obtained by coding the right eye image data is transmitted as, for example, an MVC non-base view video elementary stream (Non-Base view sub-bitstream). Further, in this case, a PTS is inserted into each PES header such that synchronous reproduction is performed in the reception side. Detailed description is omitted, and the remaining parts of the transmission data generation unit 110B shown in Fig. 54 are configured in the same manner as the transmission data generation unit 110 shown in Fig. 7.

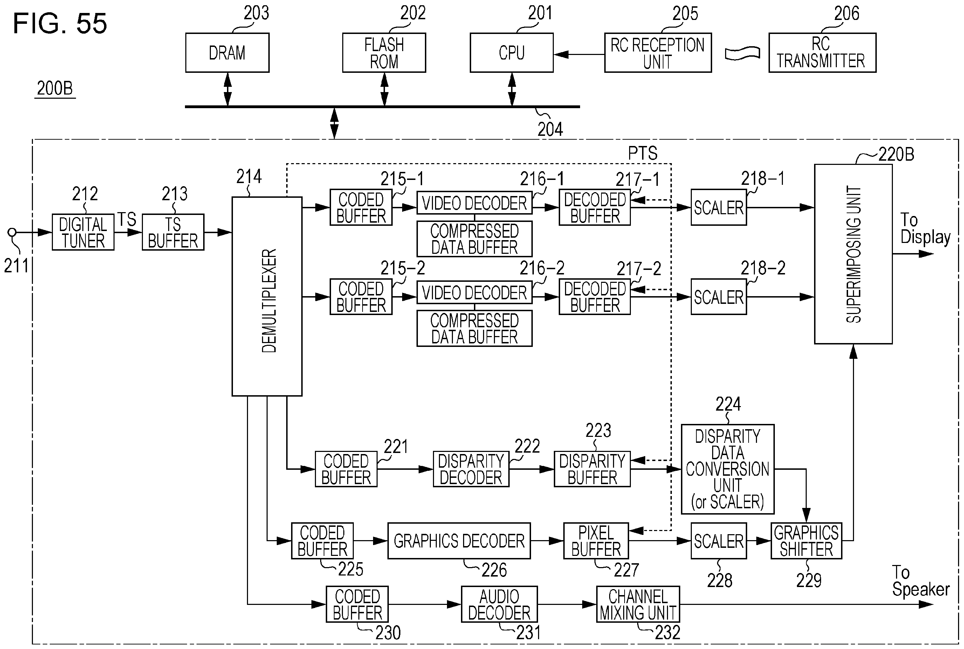

Fig. 55 shows a configuration example of a receiver 200B of a stereo stereoscopic image. In Fig. 55, a part corresponding to Fig. 27 is given the same reference numeral, and detailed description thereof will be appropriately omitted. The demultiplexer 214 extracts each of elementary streams of video, disparity, graphics, and audio from the transport stream TS which is temporarily accumulated in the TS buffer 213.

The video streams which are obtained by coding each of the left eye image data and the right eye image data and are extracted by the demultiplexer 214 are supplied to the coded buffers 215-1 and 215-2 so as to be temporarily accumulated. In addition, the video decoders 216-1 and 216-2 respectively perform a decoding process on the video streams stored in the coded buffers 215-1 and 215-2 under the control of the CPU 201 so as to acquire left eye image data and right eye image data.

In this case, the video decoder 216-1 extracts the multi-view view position SEI message (refer to Figs. 38 and 37) which is inserted into the video stream (base video stream) as described above, so as to be sent to the CPU 201. The CPU 201 controls an operation of each unit so as to perform an operation when a stereoscopic (3D) image is received, that is, when a stereoscopic (3D) display process is performed, on the basis of this SEI information.

The image data items of the respective views acquired by the video decoders 216-1 and 216-2 are supplied to the decoded buffers 217-1 and 217-2 so as to be temporarily accumulated. The scalers 218-1 and 218-2 respectively adjust output resolutions of the image data items of the respective views output from the decoded buffers 217-1 and 217-2 so as to be predetermined resolutions.

A superimposing unit 220B superimposes respectively corresponding graphics bitmap data items on the left eye image data and the right eye image data so as to generate display image data for displaying a stereo stereoscopic image. The display image data is supplied to a display, and thereby a stereo stereoscopic (3D) image is displayed. Detailed description is omitted, and the remaining parts of the transmission data generation unit 200B shown in Fig. 55 are configured in the same manner as the transmission data generation unit 200 shown in Fig. 27.

As such, even in a case of transmitting a stereo stereoscopic (3D) image as a stereoscopic image, it is possible to favorably perform switching between a stereoscopic (3D) display process and a two-dimensional (2D) display process by using auxiliary information which presents an element of the stereoscopic image, for example, the above-described multi-view view position SEI in the receiver 200B. For this reason, it is possible to appropriately and accurately handle a dynamic variation in delivery content and to thereby receive a correct stream.

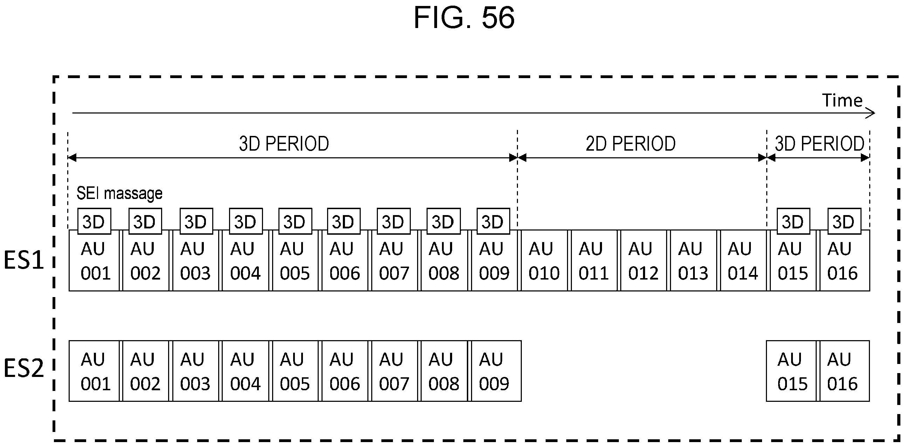

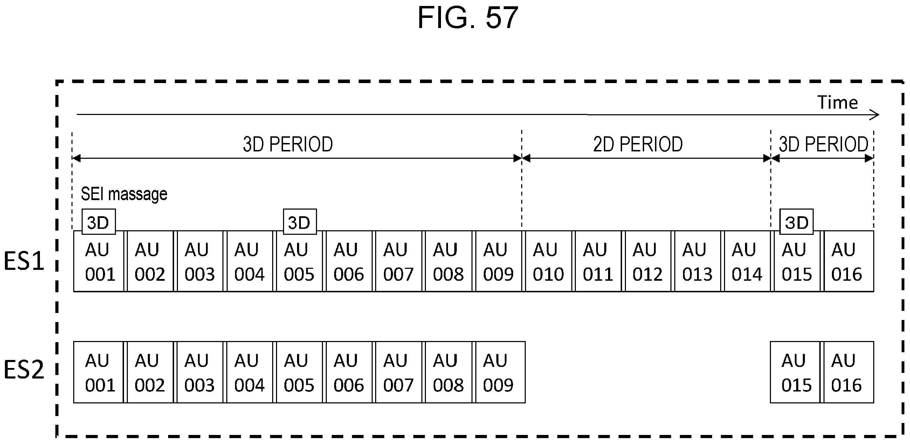

Figs. 56 and 57 show an example of a received stream in a case where a 3D period (when a stereoscopic image is received) and a 2D period (when a two-dimensional image is received) are alternately continued. Each period is, for example, the program unit or the scene unit. In the 3D period, a video stream ES1 which is a base video stream and includes image data of a left eye view is present, and a video stream ES2 which is an additional video stream and includes image data of a right eye view is also present. In the 2D period, only video stream ES1 which is a base video stream and includes two-dimensional image data is present.

The example of Fig. 56 shows a case where the multi-view view position SEI message is inserted with the picture unit in the 3D period. In addition, the example of Fig. 57 shows a case where the multi-view view position SEI is inserted with the scene unit or the picture group unit (the GOP unit) in 3D period.

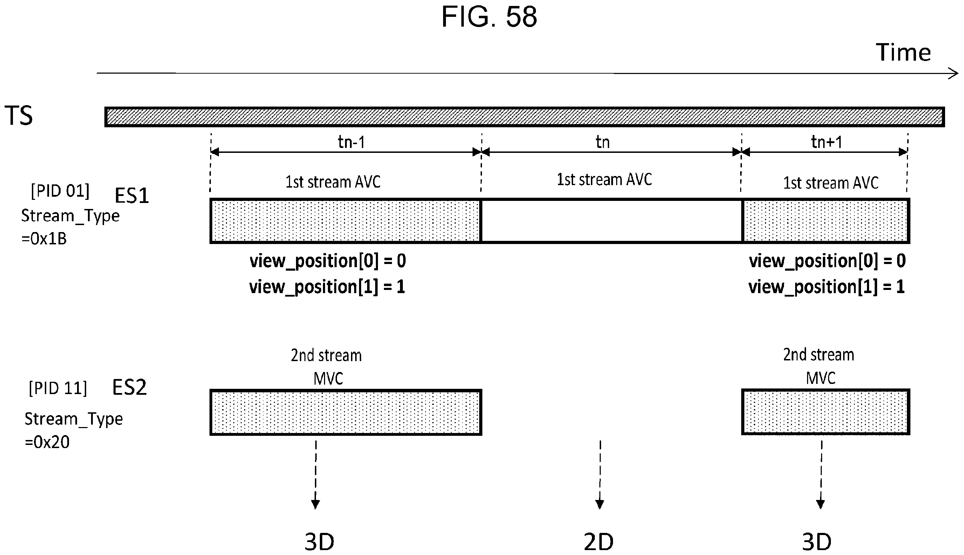

Fig. 58 shows an example of a case where a base video stream ES1 of an AVC base view of "Stream_Type=0x1B" and "PID=01" is continuously included in the transport stream TS, and an MVC additional video stream ES2 of "Stream_Type=0x20" and "PID=11" is intermittently included therein. In this case, the multi-view view position SEI is inserted into the stream ES1 in the 3D period.

The multi-view view position SEI is present in periods tn-1 and tn+1. For this reason, in these periods, the receiver 200B performs a stereo stereoscopic (3D) display process. In other words, the stream ES2 as well as the stream ES1 is also extracted and is decoded so as to display a stereo stereoscopic (3D) image.

On the other hand, in the period tn, the multi-view view position SEI is not present. For this reason, in this period, the receiver 200B performs a two-dimensional (2D) display process. In other words, only the stream ES1 is extracted and is decoded such that two-dimensional (2D) display is performed. At this time, in order to rapidly transfer from a 3D processing mode to a 2D processing mode, a processing method is also possible in which only a base video stream is decoded, a disply process is performed for 2D display in a state in which a buffer management mode is maintained as a 3D mode.

In the above-described example of displaying a stereo stereoscopic image, the multi-view view position SEI is used as auxiliary information for identifying a mode. However, detailed description is omitted, and there may be a configuration in which multi-view stream configuration SEI is used, or auxiliary information (frame packing arrangement data or the like) indicating a 2D mode is used in the same manner as an example of an multi-view stereoscopic image.

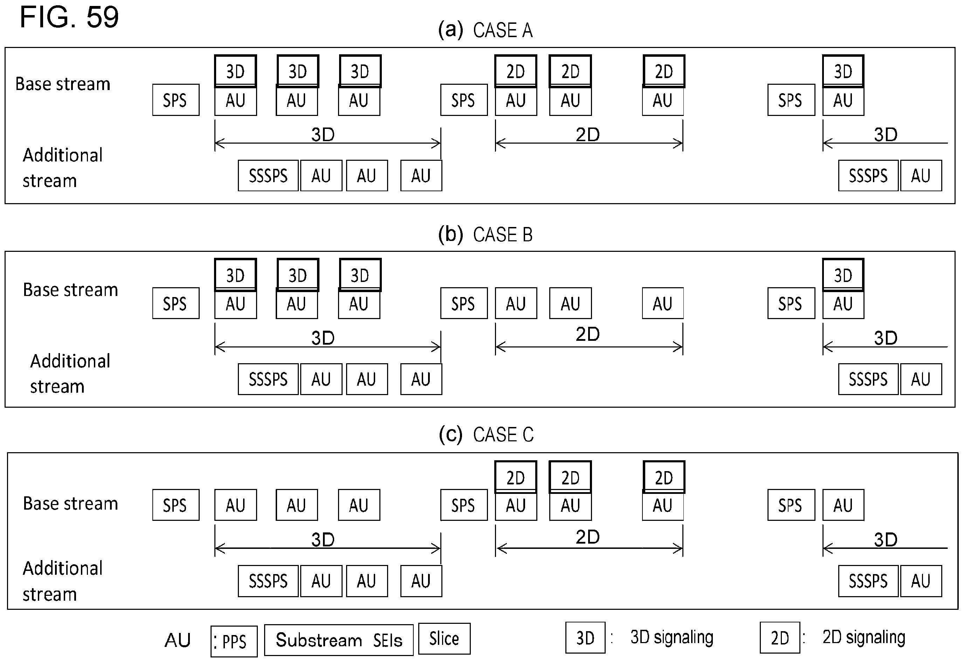

Fig. 59 collectively shows methods of a case A, a case B and a case C for identifying a 3D period and a 2D period in a case where a base stream and an additional stream are present in the 3D period and only a base stream is present in the 2D period as described above.

The method of the case A shown in Fig. 59(a) is a method in which auxiliary information for identifying a mode is inserted into a base stream in both of the 3D period and the 2D period, and the 3D period and the 2D period can be identified based on set content of the auxiliary information. The method of the case A corresponds to the above-described example of using the multi-view stream configuration SEI.

The method of the case B shown in Fig. 59(b) is a method in which auxiliary information indicating a 3D mode is inserted into a base stream only in the 3D period, and the 3D period and the 2D period can be identified based on the presence or the absence of the auxiliary information. The method of the case B corresponds to the above-described example of using the multi-view view position SEI.

The method of the case C shown in Fig. 59(c) is a method in which auxiliary information indicating a 2D mode is inserted into a base stream only in the 2D period, and the 3D period and the 2D period can be identified based on the presence or the absence of the auxiliary information. The method of the case C corresponds to the above-described example of using the auxiliary information (newly defined SEI, frame packing arrangement data, or the like) indicating a 2D mode.

[Case where additional stream is present even in 2D period]

In the above description, a description has been made of an example in which only a base stream is present in a 2D period. However, a configuration in a 2D period may be the same stream configuration as in a 3D period. In other words, for example, a base stream and an additional stream are present in both a 3D period and a 2D period.

In the above-described transmission data generation unit 110 shown in Fig. 7, when a stereoscopic (3D) image is transmitted, a base video stream of an MVC base view and two additional video streams of an MVC non-base view are generated as transmission video streams. In other words, scaled image data VC' of a center (Center) view is coded so as to obtain a base video stream of an MVC base view. In addition, scaled image data items VL' and VR' of two views of left end (Left) and right end (Right) are respectively coded so as to obtain additional video streams of an MVC non-base view.

In addition, in the above-described transmission data generation unit 110 shown in Fig. 7, for example, even when a two-dimensional (2D) image is transmitted, a base video stream of an MVC base view and two additional video streams of an MVC non-base view are generated as transmission video streams. In other words, scaled two-dimensional image data is coded so as to obtain a base video stream of an MVC base view. In addition, coding is performed in a coding mode (Skipped Macro Block) in which a difference between views is zero as a result of referring to the base video stream, thereby obtaining two additional video streams substantially including image data which is the same as two-dimensional image data.

As above, also when a two-dimensional (2D) image is transmitted, in the same manner as when a stereoscopic (3D) image is transmitted, a stream is configured to include a base video stream of an MVC base view and two additional video streams of an MVC non-base view, and thereby the encoder can continuously operates the MVC. For this reason, a stable operation of the transmission data generation unit 110 is expected.

Here, the above-described multi-view view position SEI message (multiview_view_position SEI message) is used as auxiliary information for identifying a mode. The above-described transmission data generation unit 110 shown in Fig. 7 inserts the multi-view view position SEI message into a base video stream when a stereoscopic (3D) image is transmitted and when a two-dimensional (2D) image is transmitted, at least with the program unit, the scene unit, the picture group unit, or the picture unit.

In the multi-view view position SEI message inserted when a stereoscopic (3D) image is transmitted, "view_position[i]" is set as follows. In other words, there is "view_position[0]=1" which indicates a base view video stream which is a base video stream is a video stream obtained by coding image data of a center view.

In addition, there is "view_position[1]=0" which indicates that a non-base view first video stream which is an additional video stream is a video stream obtained by coding image data of the left end view. Further, there is "view_position[2]=2" which indicates that a non-base view second video stream which is an additional video stream is a video stream obtained by coding image data of the right end view.

On the other hand, in the multi-view view position SEI message inserted when a two-dimensional (2D) image is transmitted, "view_position[i]" is set as follows. In other words, all of "view_position[0]", "view_position[1]" and "view_position[2]" are "0", "1", or "2".

When "view_position[i]" is set in this way, a reception side recognizes that a difference between an additional video stream and a base video stream is zero even in a case where the base video stream and two additional video streams are transmitted. In other words, the reception side can detect that a two-dimensional (2D) image is transmitted even if a plurality of streams are transmitted, on the basis of the setting of "view_position[i]".

A description will be made of operation mode switching control between a stereoscopic (3D) display process and a two-dimensional (2D) display process in the receiver 200 shown in Fig. 27. This switching is performed by the CPU 201. When a stereoscopic (3D) image is received, the multi-view view position SEI message is extracted by the video decoder 216-1 and is supplied to the CPU 201. The CPU 201 identifies either of a stereoscopic image transmission mode and a two-dimensional image transmission mode on the basis of set content of "view_position[i]" of the SEI message, and controls switching between a stereoscopic (3D) display process and a two-dimensional (2D) display process.

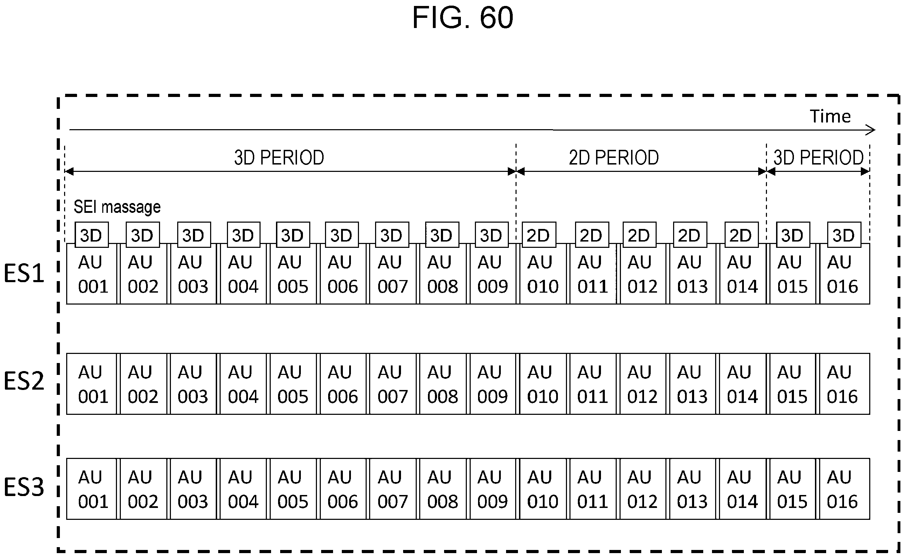

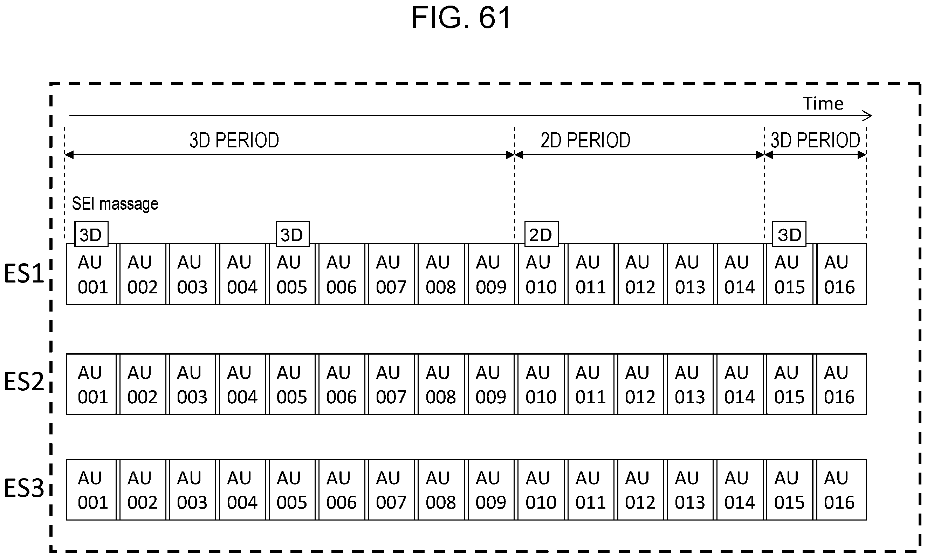

Figs. 60 and 61 show an example of a received stream in a case where a 3D period (when a stereoscopic image is received) and a 2D period (when a two-dimensional image is received) are alternately continued. Each period is, for example, the program unit or the scene unit. In both the 3D period and the 2D period, a video stream ES1 of a center view which is a base video stream is present, and two video streams ES2 and ES3 of a left end view and a right end view which are additional video streams are also present.

The example of Fig. 60 shows a case where the multi-view view position SEI message is inserted with the picture unit in the 3D period and the 2D period. In addition, the example of Fig. 61 shows a case where the multi-view view position SEI is inserted with the scene unit or the picture group unit (the GOP unit) in 3D period and 2D period.

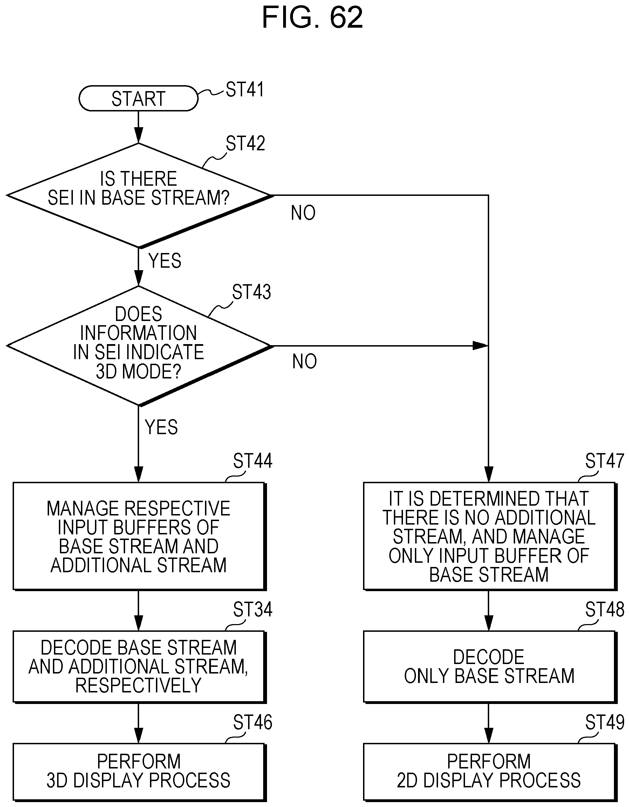

A flowchart of Fig. 62 shows an example of process procedures of the operation mode switching control in the CPU 201. The CPU 201 performs control according to the flowchart for each picture frame. However, in a case where the SEI is not inserted with the picture unit, for example, the SEI is inserted with the GOP unit (refer to Fig. 61), the CPU 201 maintains the current SEI information until the SEI information of the current GOP is replaced with the SEI information of the next GOP.

First, the CPU 201 starts a process in step ST41, and then proceeds to a process in step ST42. In step ST42, the CPU 201 determines whether or not SEI ("multiview_view_position SEI message") is inserted into the base video stream. When the SEI is inserted, the CPU 201 determines whether or not information in the SEI, that is, set content of "view_position[i]" indicates a 3D mode in step ST43.

When the set content of "view_position[i]" in the SEI indicates a 3D mode, that is, when a stereoscopic (3D) image is received, the CPU 201 proceeds to a process in step ST44. The CPU 201 manages the respective input buffers (coded buffers) of the base video stream and the additional video stream in step ST44, and decodes the base video stream and the additional video stream, respectively, by using the decoders (video decoders) in step ST45. Further, the CPU 201 performs control such that the receiver 200 performs other stereoscopic (3D) display processes in step ST46.

In addition, when the SEI is not inserted in step ST42, or when the set content of "view_position[i]" in the SEI does not indicate a 3D mode in step ST43, that is, when a two-dimensional (2D) image is received, the CPU 201 proceeds to a process in step ST47. The CPU 201 manages an input buffer (coded buffer) of the base video stream in step ST47, and decodes the base video stream by using the decoder (video decoder) in step ST48. Further, the CPU 201 performs control such that the receiver 200 performs other two-dimensional (2D) display processes in step ST49.

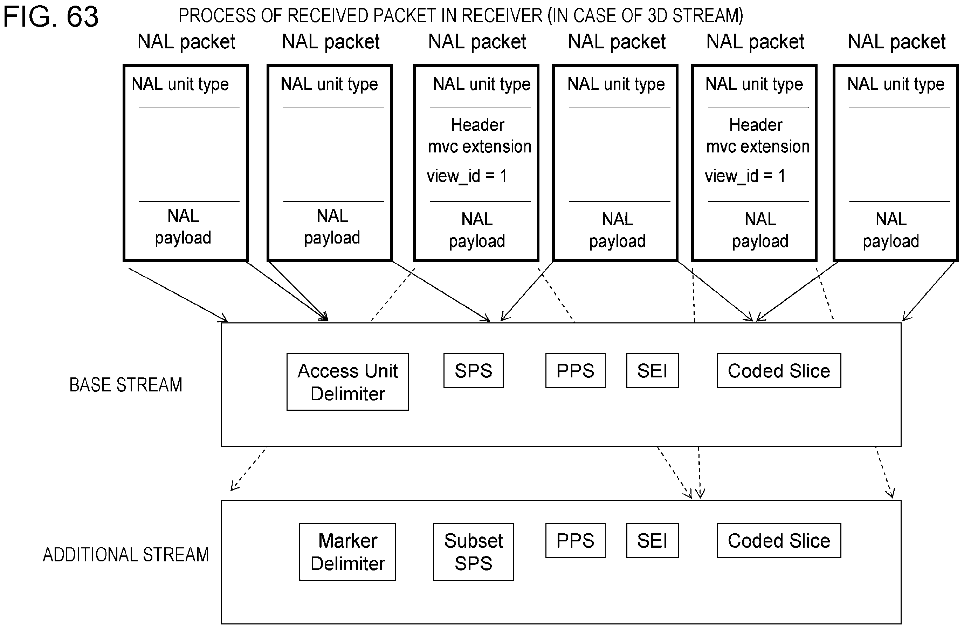

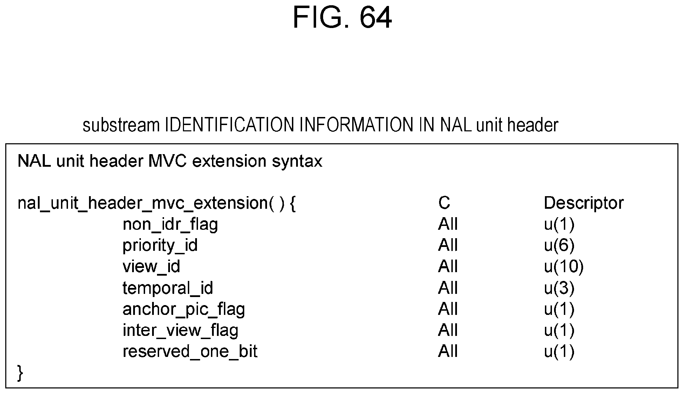

Fig. 63 shows an example of a reception packet process when a stereoscopic (3D) image is received in the receiver 200 shown in Fig. 27. NAL packets of a base video stream and an additional video stream are mixed and are transmitted. Fig. 64 shows a configuration example (Syntax) of a NAL unit header and MVC extension of the NAL unit header (NAL unit header MVC extension). The field of "view_id" indicates what number view is a corresponding view. As shown in Fig. 63, the receiver 200 assigns the NAL packets which are mixed and are transmitted to each stream and decodes each stream on the basis of a combination of a value of the NAL unit type and a view ID (view_id) of NAL unit header MVC extension (Headermvc extension).

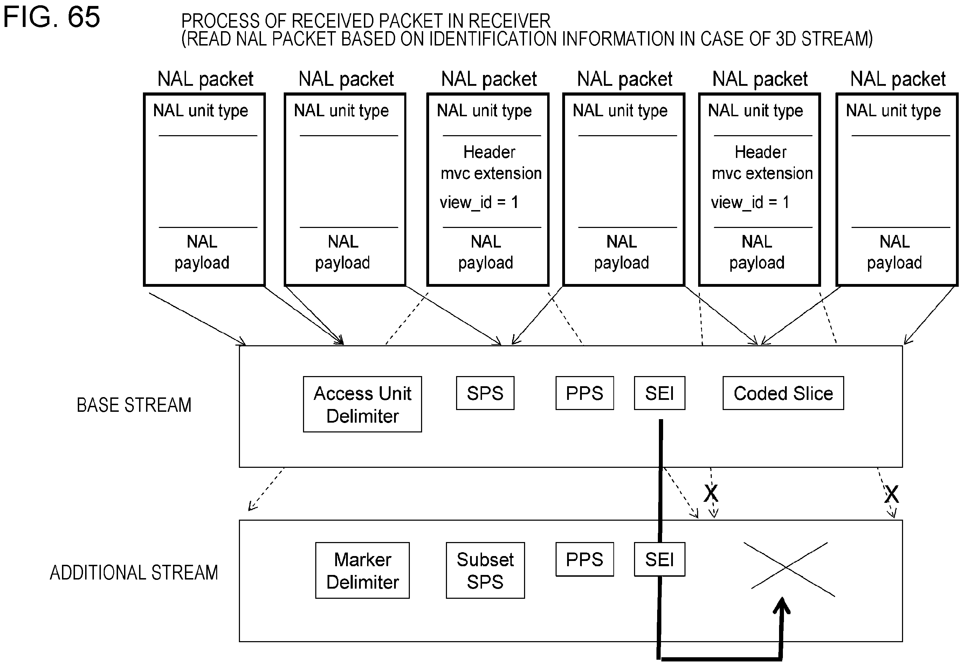

Fig. 65 shows an example of a reception packet process when a two-dimensional (2D) image is received in the receiver 200 shown in Fig. 27. NAL packets of a base video stream and an additional video stream are mixed and are transmitted. As shown in Fig. 65, the receiver 200 assigns the NAL packets which are mixed and are transmitted to each stream and decodes only the base video stream on the basis of a combination of a value of the NAL unit type and a view ID (view_id) of NAL unit header MVC extension (Headermvc extension).

In other words, also when a two-dimensional (2D) image is received, in the same manner as when a stereoscopic (3D) image is received, the receiver 200 receives a base video stream and an additional video stream but performs a two-dimensional (2D) image process without decoding a slice of the overall picture subsequent to the SEI unlike in the related art, on the basis of set content of "view_position[i]" of the multi-view view position SEI message.

As above, since identification can be performed at a packet (NAL packet) level without decoding coded data of an additional video stream, it is possible to perform a rapid transfer to a 2D display mode in the receiver 200. In addition, since layers equal to or lower than the slice layer are not decoded and can be discarded, memory consumption can be suppressed to that extent so as to save power or allocate a CPU budget of a system, a memory space bandwidth, or the like to other features (for example, high performance graphics), thereby achieving multiple functions.

In addition, when a two-dimensional (2D) image is received, in the same manner as when a stereoscopic (3D) image is received, the receiver 200 receives a base video stream and an additional video stream, but performs a two-dimensional (2D) image process without performing a stereoscopic (3D) image process. For this reason, it is possible to obtain display image quality equivalent to the related art type 2D display.

In other words, in a case of performing a stereoscopic (3D) image process when a two-dimensional (2D) image is received, image data obtained by decoding a base video stream is the same as image data obtained by decoding an additional video stream. For this reason, if display is performed in a 3D mode, the display is flat, that is, the display without a disparity is performed, and thereby there is a possibility that image quality may deteriorate as compared with performing the related art type 2D display. For example, if stereo stereoscopic image display is considered, this may occur in both passive type (using polarization glasses) and active type (using shutter glasses) 3D monitors.

In 3D display performed by many passive type monitors, data items of a left eye view (Left view) and a right eye view (Right view) are alternately displayed with the display line unit in a vertical direction, so as to realize 3D, but, in a case where image data items of two views are the same, a vertical resolution is just a half of 2D display in the related art. On the other hand, in 3D display performed by active type monitors, frames are alternately switched to a left eye view and a right eye view in a temporal direction and are displayed, but, in a case where image data items of two views are the same, a resolution in the temporal direction is a half of 2D display in the related art.

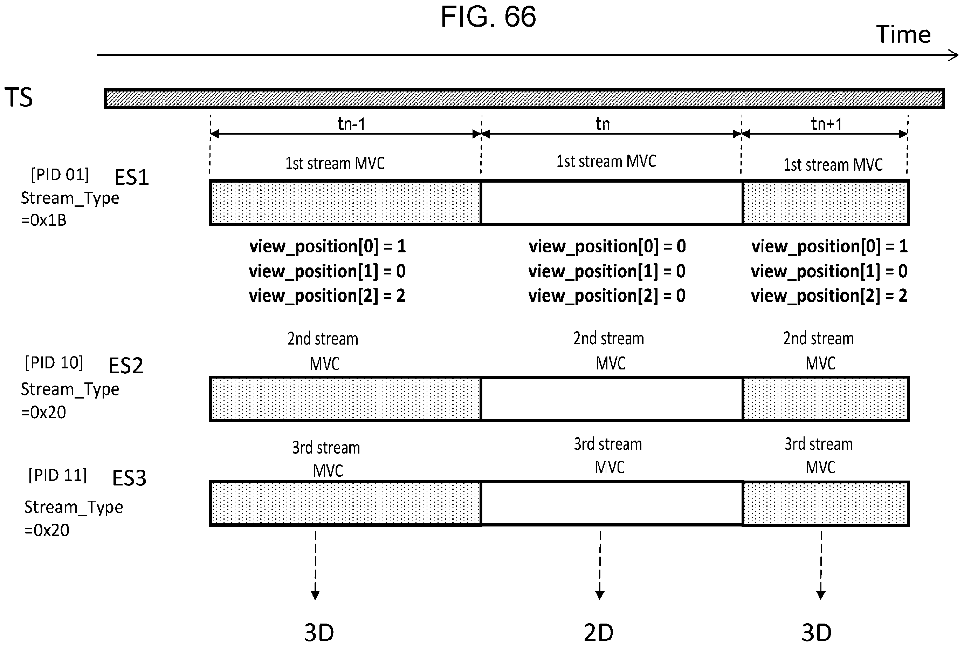

Fig. 66 shows an example of a case where a base video stream ES1 of an MVC base view of "Stream_Type=0x1B" and "PID=01" is continuously included in the transport stream TS, and MVC additional video streams ES2 and ES3 of "Stream_Type=0x20", "PID=10" and "PID=11" are also continuously included therein. In this case, the multi-view view position SEI is inserted into the stream ES1 in the 3D period and 2D period.

In periods tn-1 and tn+1, for example, there are "view_position[0]=1", "view_position[1]=0", and "view_position[2]=2", which indicate a 3D mode. For this reason, in these periods, the receiver 200 performs a stereoscopic (3D) display process. In other words, the streams ES2 and ES3 as well as the stream ES1 are also extracted and are decoded such that stereoscopic (3D) display is performed.

On the other hand, in the period tn, for example, there are "view_position[0]=0", "view_position[1]=0", and "view_position[2]=0", which indicate a 2D mode. For this reason, in this period, the receiver 200 performs a two-dimensional (2D) display process. In other words, only the stream ES1 is extracted and is decoded such that two-dimensional (2D) display is performed.

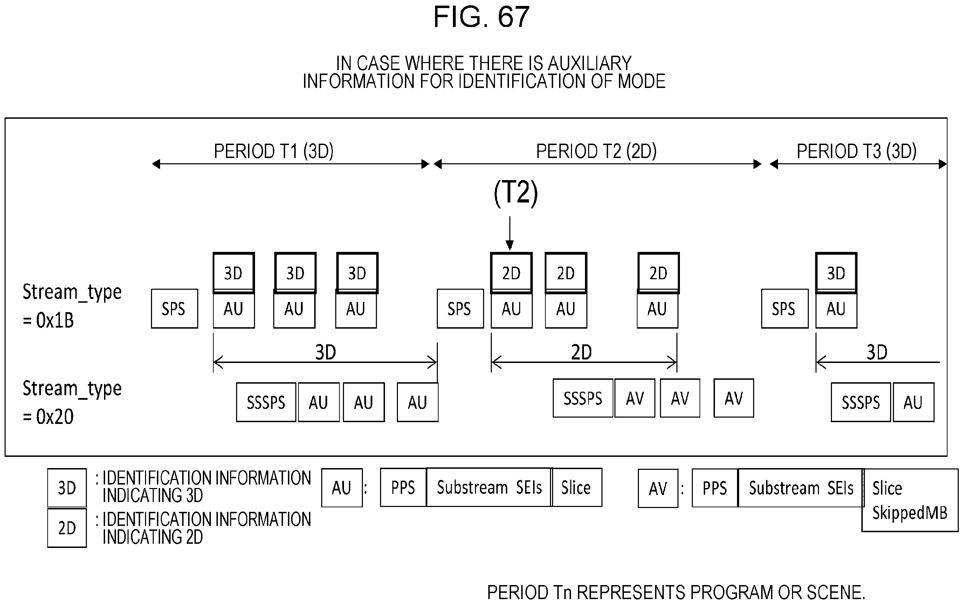

Fig. 67 shows an example of a case where a 3D period (3D mode period) and a 2D period (2D mode period) are alternately continued, and there is auxiliary information (multi-view view position SEI message) for identifying a mode. The periods T1 and T3 indicate a 3D period, and the period T2 indicates a 2D period. Each period represents, for example, the program unit or the scene unit.

In both the 3D period and the 2D period, a base video stream of an MVC base view of "Stream_Type=0x1B" is present, and an additional video stream of an MVC non-base view of "Stream_Type=0x20" is also present. Further, the base video stream has a configuration in which "SPS" is a head and a predetermined number of access units (AU) are continuously located.

Furthermore, the additional video stream has a configuration in which "SSSPS" is a head and a predetermined number of access units (AU) are continuously located. In addition, the access units (AU) are constituted by "PPS, Substream SEIs, and Coded Slice". However, the additional video stream in the 2D period is coded in a coding mode (Skipped Macro Block) in which a difference between views is zero as a result of referring to the base video stream. The additional video stream in this period has a configuration in which "SSSPS" is a head and a predetermined number of access units (AV) are continuously located. The access units (AV) are constituted by "PPS, Substream SEIs, and Slice Skipped MB".

The auxiliary information (multi-view view position SEI message) for identifying a mode is inserted for each access unit (AU). The auxiliary information inserted into the access unit in the 3D period is indicated by "3D", and "view_position[i]" is a value indicating a relative positional relationship of each view and indicates a 3D mode (stereoscopic image transmission mode). On the other hand, the auxiliary information inserted into the access unit in the 2D period is indicated by "2D", and "view_position[i]" is the same value in each view and indicates a 2D mode (two-dimensional image transmission mode). In other words, this case indicates that flat 3D display is performed when a reception side performs a 3D display process.

As above, in a case where there is auxiliary information (multi-view view position SEI message) for identifying a mode, the receiver checks the element "view_position[i]" of the auxiliary information, and can immediately discriminate whether the element indicates a 3D mode or a 2D mode, and thus it is possible to rapidly perform decoding and switching between display processes. In a case where the 3D period is switched to the 2D period, the receiver can determine that the 3D period is switched to the 2D period at the discrimination timing T2 when the element "view_position[i]" of the auxiliary information inserted into the first access unit indicates a 2D mode, and thus can rapidly perform mode switching from 3D to 2D.

In addition, in the above description, a description has been made of an example of using the multi-view view position SEI message as auxiliary information for identifying a mode. Detailed description is omitted, and, other auxiliary information, for example, a multi-view stream configuration SEI message (refer to Figs. 21 and 14) may be used.

[Another example of auxiliary information for identifying mode]

In the above description, a description has been made of an example in which auxiliary information for identifying a mode, for example, the multi-view view position SEI message is inserted in both a 3D period and a 2D period, and the receiver discriminates a 3D period or a 2D period with frame accuracy on the basis of set content thereof. However, auxiliary information indicating a 3D mode may be inserted only in a 3D period, and a 3D period or a 2D period may be discriminated with frame accuracy on the basis of the presence or the absence thereof. Also in this case, for example, the multi-view view position SEI message may be used as auxiliary information.

The transmission data generation unit 110 shown in Fig. 7 described above inserts the multi-view view position SEI message into a video stream (base video stream) which is obtained by coding image data of an intermediate view in a 3D mode (stereoscopic image transmission mode). The multi-view view position SEI message forms identification information indicating a 3D mode. In this case, the message is inserted at least with the program unit, the scene unit, the picture group unit, or the picture unit.

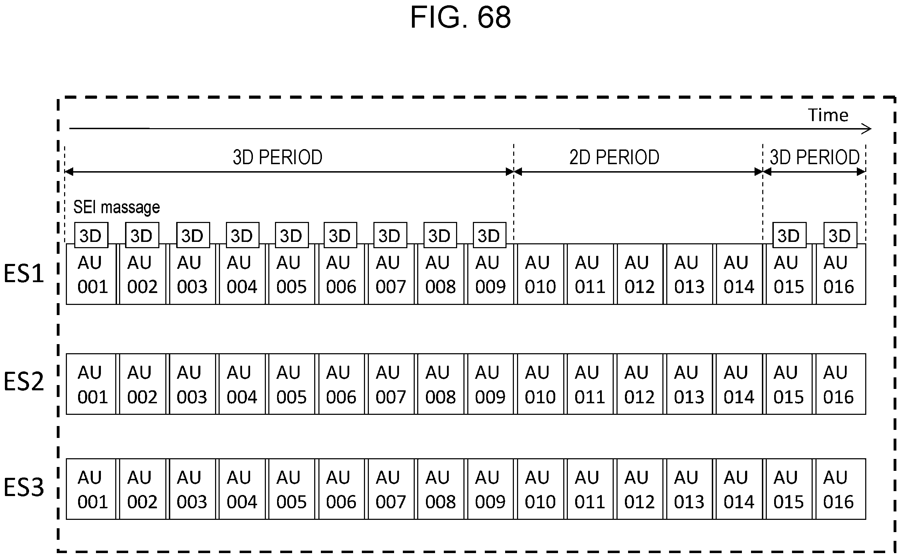

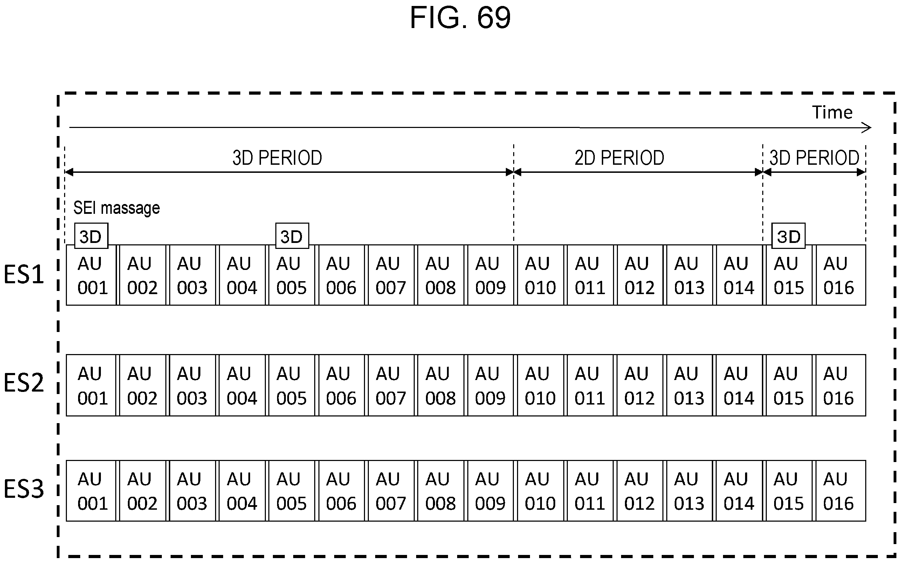

Figs. 68 and 69 show an example of a received stream in a case where a 3D period (when a stereoscopic image is received) and a 2D period (when a two-dimensional image is received) are alternately continued. Each period is, for example, the program unit or the scene unit. In both the 3D period and the 2D period, a video stream ES1 of a center view which is a base video stream is present, and two video streams ES2 and ES3 of a left end view and a right end view which are additional video streams are also present.

The example of Fig. 68 shows a case where the multi-view view position SEI message is inserted with the picture unit in the 3D period. In addition, the example of Fig. 69 shows a case where the multi-view view position SEI is inserted with the scene unit or the picture group unit (the GOP unit) in 3D period.

Detailed description is omitted, and process procedures of the operation mode switching control in the CPU 201 are also shown by the above-described flowchart of Fig. 41. The CPU 201 performs control according to the flowchart for each picture frame. However, in a case where the SEI is not inserted with the picture unit, for example, the SEI is inserted with the GOP unit (refer to Fig. 69), the CPU 201 maintains the current SEI information until the SEI information of the current GOP is replaced with information of the presence or the absence of the SEI of the next GOP.

As described above, also by inserting the multi-view view position SEI message only in a 3D period, a reception side can favorably perform switching between a stereoscopic (3D) display process and a two-dimensional (2D) display process on the basis of the presence of the absence of the SEI message. For this reason, it is possible to appropriately and accurately handle a dynamic variation in delivery content and to thereby receive a correct stream.

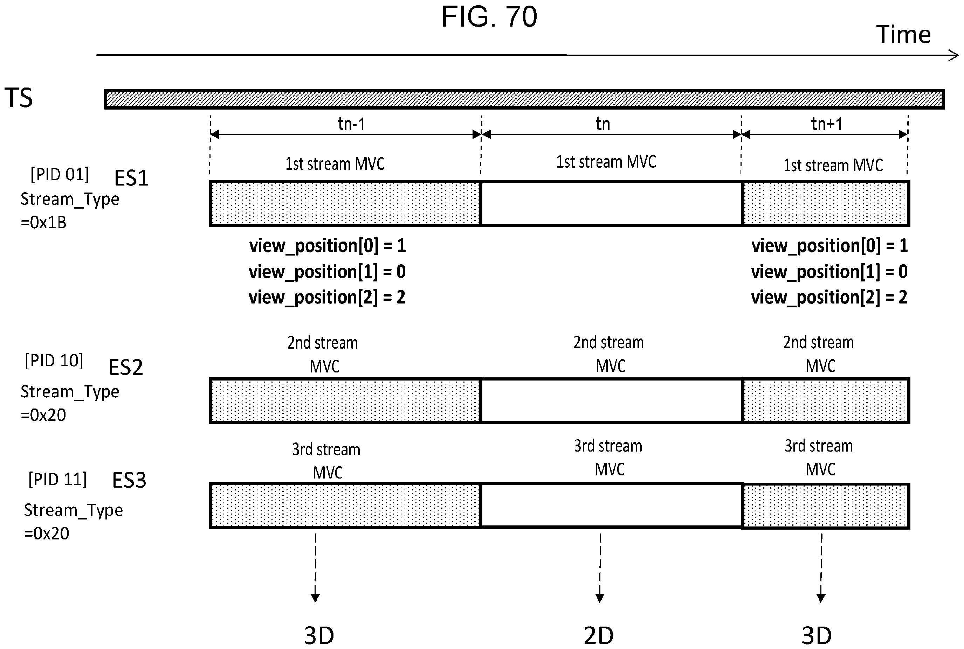

Fig. 70 shows an example of a case where a base video stream ES1 of an MVC base view of "Stream_Type=0x1B" and "PID=01" is continuously included in the transport stream TS, and MVC additional video streams ES2 and ES3 of "Stream_Type=0x20", "PID=10" and "PID=11" are continuously included therein. In this case, the multi-view view position SEI is inserted into the stream ES1 in the 3D period.

The multi-view view position SEI is present in periods tn-1 and tn+1. For this reason, in these periods, the receiver 200 performs a stereoscopic (3D) display process. In other words, the streams ES2 and ES3 as well as the stream ES1 are also extracted and are decoded such that stereoscopic (3D) display is performed. On the other hand, in the period tn, the multi-view view position SEI is not present. For this reason, in this period, the receiver 200 performs a two-dimensional (2D) display process. In other words, only the stream ES1 is extracted and is decoded such that two-dimensional (2D) display is performed.

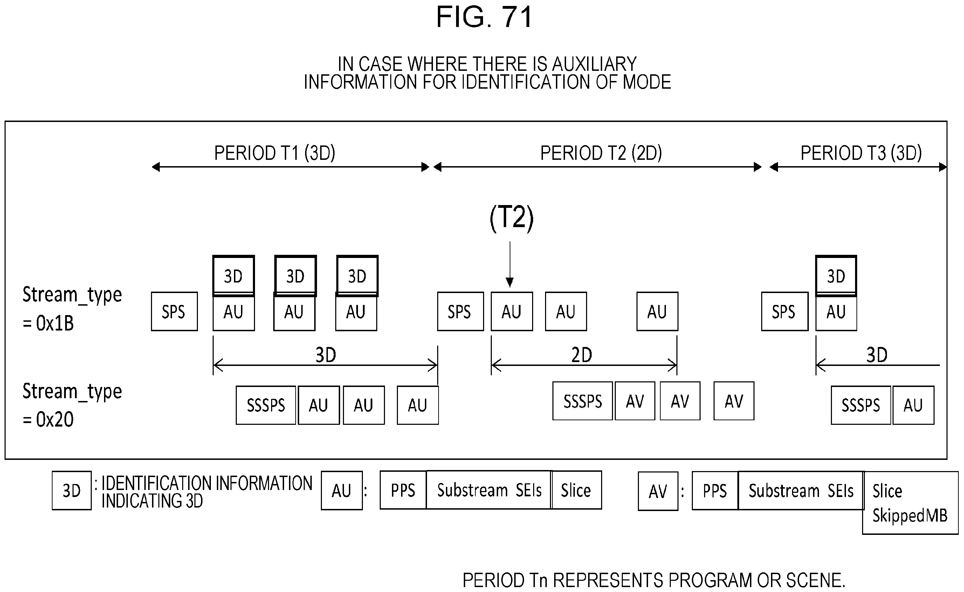

Fig. 71 shows an example of a case where a 3D period (3D mode period) and a 2D period (2D mode period) are alternately continued, and there is auxiliary information (multi-view view position SEI message) for identifying a mode. The periods T1 and T3 indicate a 3D period, and the period T2 indicates a 2D period. Each period represents, for example, the program unit or the scene unit. In the same manner as the above-described example of Fig. 67, in both the 3D period and the 2D period, a base video stream of an MVC base view of "Stream_Type=0x1B" is present, and an additional video stream of an MVC non-base view of "Stream_Type=0x20" is also present.

The auxiliary information (multi-view view position SEI message) for identifying a mode is inserted for each access unit (AU) in the 3D period. The auxiliary information indicates the 3D mode which is denoted by "3D". In addition, the auxiliary information is not inserted into each access unit (AU) in the 2D period.

As above, in a case where there is auxiliary information for identifying a mode as described above, the receiver can immediately discriminate whether a period is a 3D period or a 2D period on the basis of the presence or the absence of the auxiliary information, and thus it is possible to rapidly perform decoding and switching between display processes. In a case where the 3D period is switched to the 2D period, the receiver can determine that the 3D period is switched to the 2D period at the discrimination timing T2 when there is no auxiliary information in the first access unit and thus can rapidly perform mode switching from 3D to 2D.

[Still another example of auxiliary information for identifying mode]

In the above description, a description has been made of an example in which the multi-view view position SEI message is used as auxiliary information for identifying a mode, and the receiver discriminates a 3D period or a 2D period with frame accuracy on the basis of set content thereof or the presence or the absence thereof. As auxiliary information for identifying a mode, still another auxiliary information may be used. That is, auxiliary information indicating a 2D mode is used.

As identification information indicating a 2D mode, a SEI message which is newly defined may be used. In addition, in a case of an MPEG2 stream, existing frame packing arrangement data (frame_packing_arrangement_data()) may be used (refer to Figs. 45 and 46).

The transmission data generation unit 110 shown in Fig. 7 described above inserts auxiliary information indicating a 2D mode into a video stream (base video stream) which is obtained by coding image data of an intermediate view in a 2D mode (stereoscopic image transmission mode). For example, in a case where this stream is an MPEG2 stream, the above-described frame packing arrangement data (arrangement_type=0001000) is inserted into the user data region. In this case, the data is inserted at least with the program unit, the scene unit, the picture group unit, or the picture unit.

A description will be made of operation mode switching control between a stereoscopic (3D) display process and a two-dimensional (2D) display process in the receiver 200 shown in Fig. 27 in a case of using the auxiliary information indicating a 2D mode. This switching is performed by the CPU 201. When a two-dimensional (2D) image is received, the auxiliary information indicating a 2D mode is extracted by the video decoder 216-1 and is supplied to the CPU 201. However, when a stereoscopic (3D) image is received, the auxiliary information is not extracted by the video decoder 216-1 and thus is not supplied to the CPU 201. The CPU 201 controls switching between a stereoscopic (3D) display process and a two-dimensional (2D) display process on the basis of the presence or the absence of the auxiliary information.

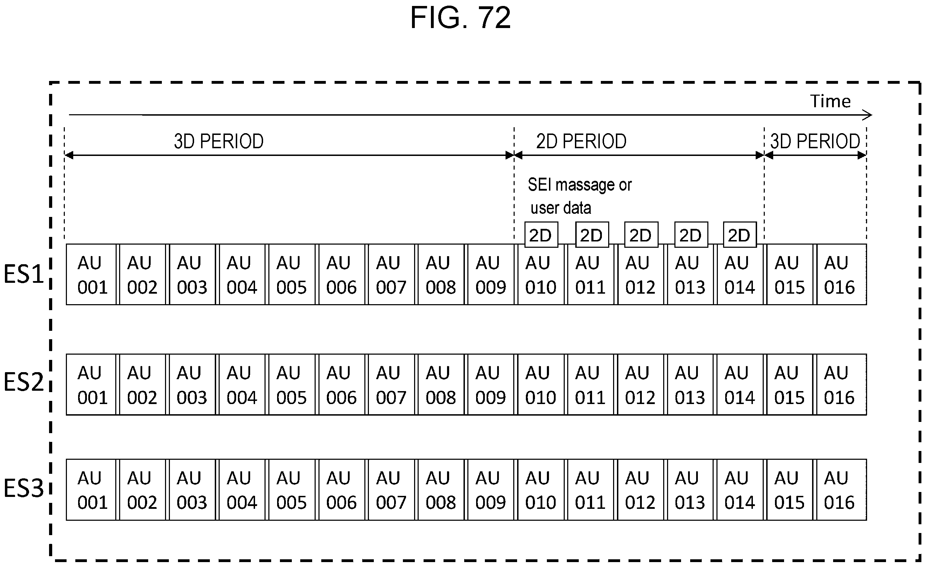

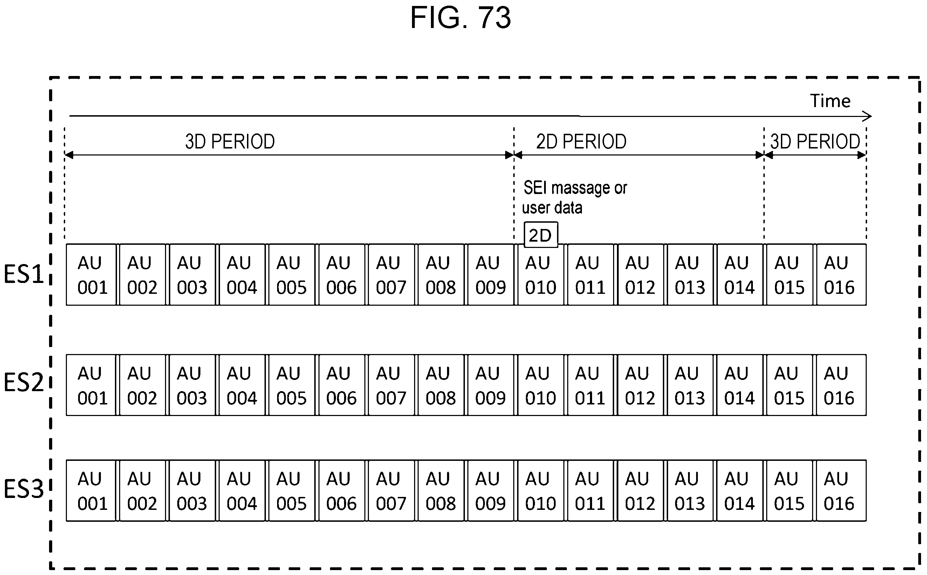

Figs. 72 and 73 show an example of a received stream in a case where a 3D period (when a stereoscopic image is received) and a 2D period (when a two-dimensional image is received) are alternately continued. Each period is, for example, the program unit or the scene unit. In both the 3D period and the 2D period, a video stream ES1 of an center view which is a base video stream is present, and two video streams ES2 and ES3 of a left end view and a right end view which are additional video streams are also present. The example of Fig. 72 shows a case where the auxiliary information indicating a 2D mode is inserted with the picture unit in the 2D period. In addition, the example of Fig. 73 shows a case where the auxiliary information indicating a 2D mode is inserted with the scene unit or the picture group unit (the GOP unit) in the 2D period.

Detailed description is omitted, and process procedures of the operation mode switching control in the CPU 201 in this case are also shown, for example, by the flowchart of Fig. 50. The CPU 201 performs control according to the flowchart for each picture frame. However, in a case where the SEI is not inserted with the picture unit, for example, the SEI is inserted with the GOP unit (refer to Fig. 73), the CPU 201 maintains the current SEI information until the SEI information of the current GOP is replaced with information of the presence or the absence of the SEI of the next GOP.

As described above, also by inserting the auxiliary information indicating a 2D mode only in a 2D period, it is possible to favorably perform switching between a stereoscopic (3D) display process and a two-dimensional (2D) display process on the basis of the presence or the absence of identification information thereof. For this reason, it is possible to appropriately and accurately handle a dynamic variation in delivery content and to thereby receive a correct stream.

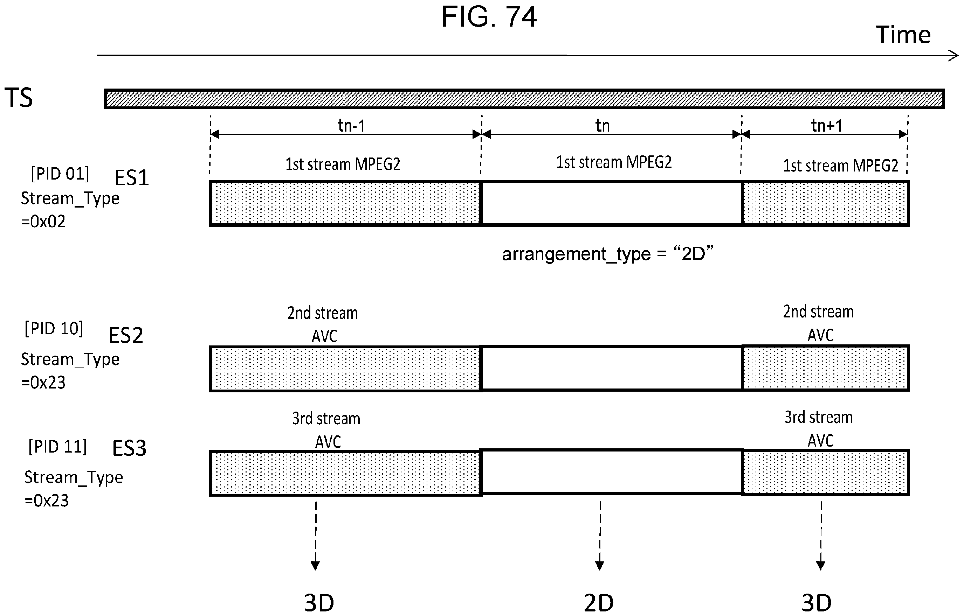

Fig. 74 shows an example of a case where a base video stream ES1 of an MPEG2 base view of "Stream_Type=0x02" and "PID=01" is continuously included in the transport stream TS, and AVC additional video streams ES2 and ES3 of "Stream_Type=0x23", "PID=10" and "PID=11" are continuously included therein.

The fram packing arrangement data (arrangement_type="2D") is not present in periods tn-1 and tn+1. For this reason, in these periods, the receiver 200 performs a stereoscopic (3D) display process. In other words, the streams ES2 and ES3 as well as the stream ES1 are also extracted and are decoded such that stereoscopic (3D) display is performed. On the other hand, in the period tn, the fram packing arrangement data (arrangement_type="2D") is present. For this reason, in this period, the receiver 200 performs a two-dimensional (2D) display process. In other words, only the stream ES1 is extracted and is decoded such that two-dimensional (2D) display is performed.

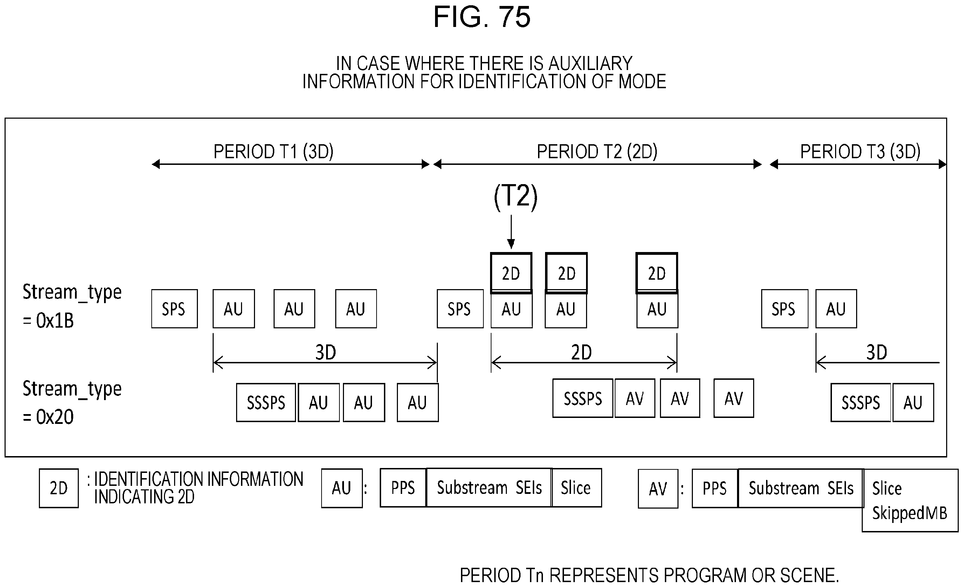

Fig. 75 shows an example of a case where a 3D period (3D mode period) and a 2D period (2D mode period) are alternately continued, and there is auxiliary information (a newly defined SEI message indicating a 2D mode) for identifying a mode. The periods T1 and T3 indicate a 3D period, and the period T2 indicates a 2D period. Each period represents, for example, the program unit or the scene unit. In the same manner as the above-described example of Fig. 67, in both the 3D period and the 2D period, a base video stream of an MVC base view of "Stream_Type=0x1B" is present, and an additional video stream of an MVC non-base view of "Stream_Type=0x20" is also present.

The auxiliary information for identifying a mode is inserted for each access unit (AU) in the 2D period. The auxiliary information indicates the 2D mode which is denoted by "2D". In addition, the auxiliary information is not inserted into each access unit (AU) in the 3D period.

As above, in a case where there is auxiliary information for identifying a mode as described above, the receiver can immediately discriminate whether a period is a 3D period or a 2D period on the basis of the presence or the absence of the auxiliary information, and thus it is possible to rapidly perform decoding and switching between display processes. In a case where the 3D period is switched to the 2D period, the receiver can determine that the 3D period is switched to the 2D period at the discrimination timing T2 when there is auxiliary information in the first access unit and thus can rapidly perform mode switching from 3D to 2D.

[Case of stereo stereoscopic image]

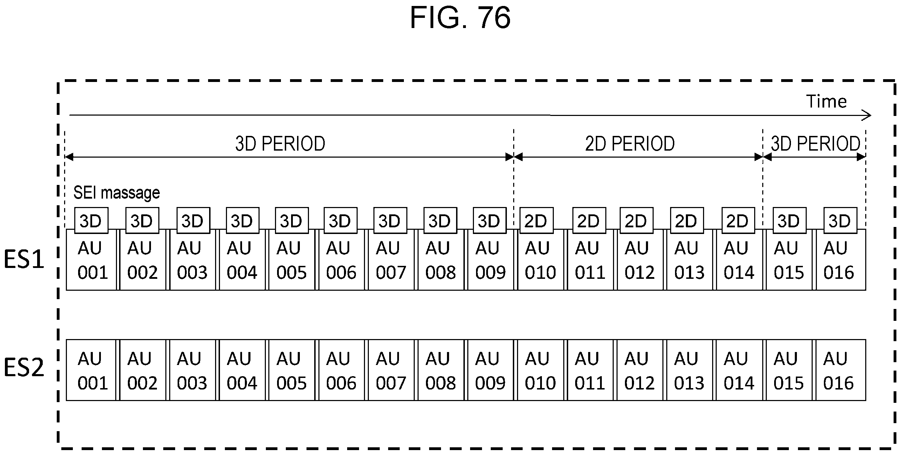

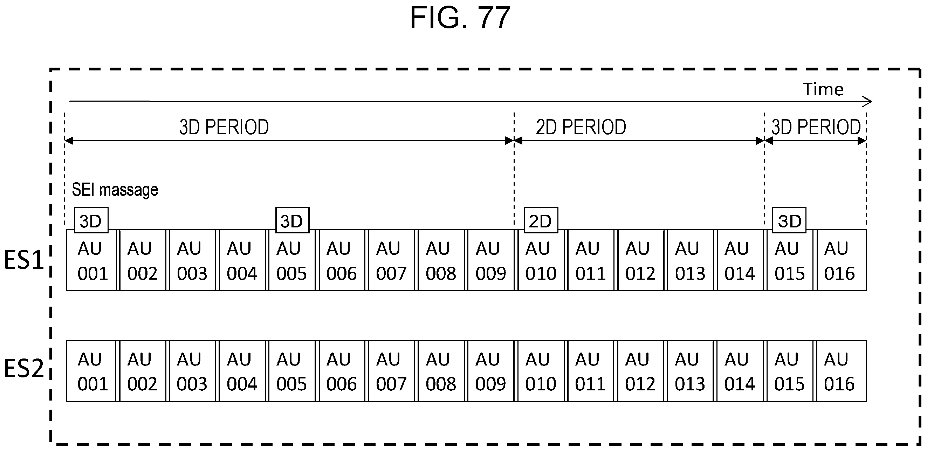

Figs. 76 and 77 show an example of a received stream in a case where a 3D period (when a stereoscopic image is received) and a 2D period (when a two-dimensional image is received) are alternately continued. However, this example is an example of a case where stereoscopic (3D) image display is stereo stereoscopic image display (refer to Figs. 54 and 55). Each period is, for example, the program unit or the scene unit. In both the 3D period and the 2D period, a video stream ES1 which is a base video stream and includes image data of a left eye view is present, and a video stream ES2 which is an additional video stream and includes image data of a right eye view is also present.

The example of Fig. 76 shows a case where the multi-view view position SEI message is inserted with the picture unit in the 3D period and the 2D period. In addition, the example of Fig. 77 shows a case where the multi-view view position SEI is inserted with the scene unit or the picture group unit (the GOP unit) in 3D period and the 2D period.

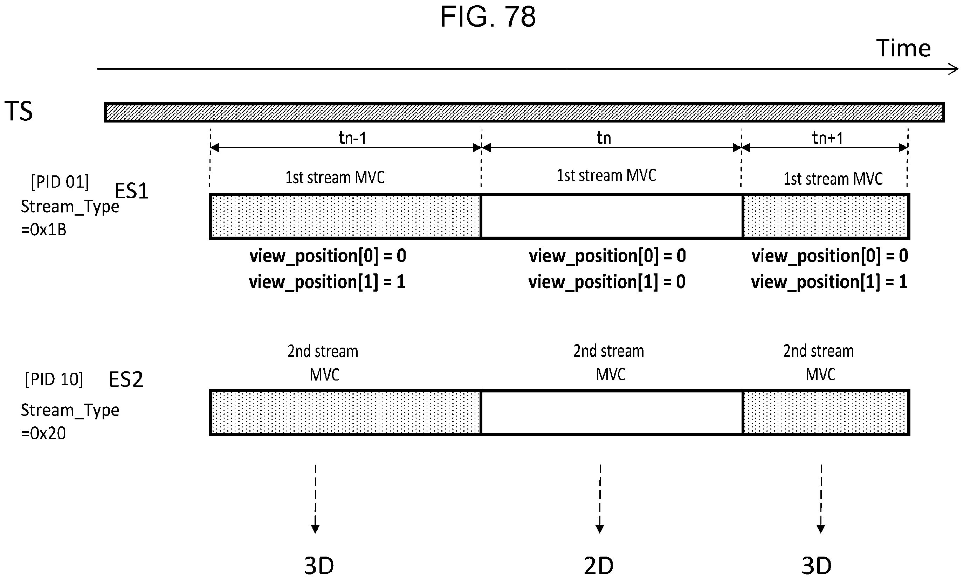

Fig. 78 shows an example of a case where a base video stream ES1 of an MVC base view of "Stream_Type=0x1B" and "PID=01" is continuously included in the transport stream TS, and an MVC additional video stream ES2 of "Stream_Type=0x20" and "PID=10" is also continuously included therein. In this case, the multi-view view position SEI is inserted into the stream ES1 in the 3D period and 2D period.

In periods tn-1 and tn+1, for example, there are "view_position[0]=0" and "view_position[1]=1" which indicate a 3D mode. For this reason, in these periods, the receiver 200 performs a stereoscopic (3D) display process. In other words, the stream ES2 as well as the stream ES1 is extracted and is decoded such that stereoscopic (3D) display is performed.

On the other hand, in the period tn, for example, there are "view_position[0]=0" and "view_position[1]=0" which indicate a 2D mode. For this reason, in this period, the receiver 200 performs a two-dimensional (2D) display process. In other words, only the stream ES1 is extracted and is decoded such that two-dimensional (2D) display is performed.

In the above-described example of stereo stereoscopic image display, the multi-view view position SEI is inserted in both a 3D period and a 2D period as auxiliary information for identifying a mode, and the receiver identifies the 3D period or the 2D period on the basis of set content thereof. Detailed description is omitted, and an example of inserting auxiliary information indicating a 3D mode only in the 3D period or an example of inserting auxiliary information indicating a 2D mode only in the 2D period can be treated in the same manner.

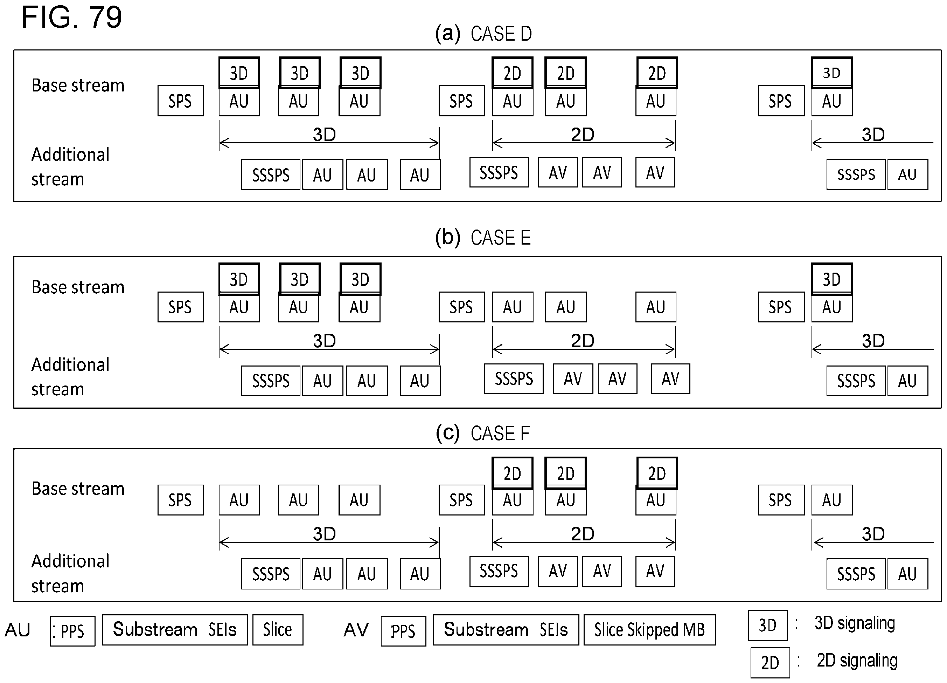

Fig. 79 collectively shows methods of a case D, a case E and a case F for identifying a 3D period and a 2D period in a case where a base stream and an additional stream are present in both the 3D period and the 2D period as described above.

The method of the case D shown in Fig. 79(a) is a method in which auxiliary information for identifying a mode is inserted into a base stream in both of the 3D period and the 2D period, and the 3D period and the 2D period can be identified based on set content of the auxiliary information. In the above description, a description has been made of an example of using, for example, multi-view view position SEI as auxiliary information.

The method of the case E shown in Fig. 79(b) is a method in which auxiliary information indicating a 3D mode is inserted into a base stream only in the 3D period, and the 3D period or the 2D period can be identified based on the presence or the absence of the auxiliary information. In the above description, a description has been made of an example of using, for example, multi-view view position SEI as auxiliary information.

The method of the case F shown in Fig. 79(c) is a method in which auxiliary information indicating a 2D mode is inserted into a base stream only in the 2D period, and the 3D period and the 2D period can be identified based on the presence or the absence of the auxiliary information. In the above description, a description has been made of an example of using, for example, newly defined SEI, frame packing arrangement data, or the like, as auxiliary information.

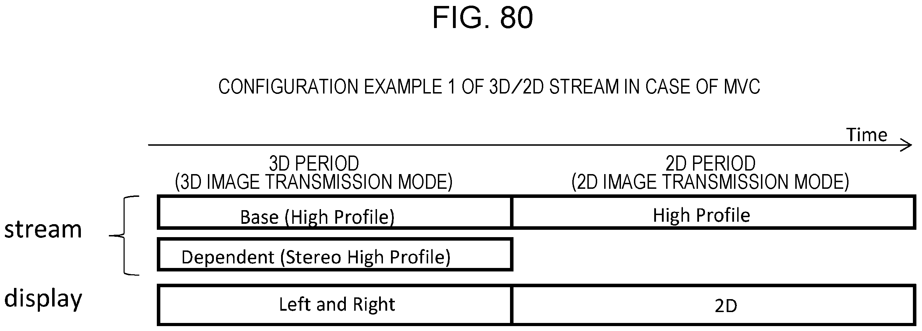

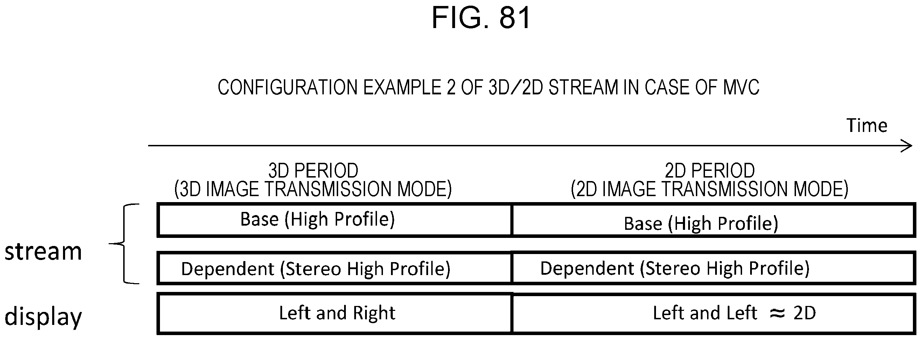

As described above, in the present technology, it is possible to rapidly identify whether a mode is a 3D image transmission mode or a 2D image transmission mode in a reception side in stream configurations as shown in Figs. 80 and 81.

Fig. 80 shows a stream configuration example 1 in which a base video stream and an additional video stream are transmitted in a 3D period (3D image transmission mode) and a single video stream (only a base video stream) is transmitted in a 2D period (2D image transmission mode). In addition, Fig. 81 shows a stream configuration example 2 in which a base video stream and an additional video stream are transmitted in both a 3D period (3D image transmission mode) and a 2D period (2D image transmission mode). However, the additional video stream in the 2D period is coded in a coding mode (Skipped Macro Block) in which a difference between views is zero as a result of referring to the base video stream. In the configuration examples 1 and 2, as described above, it is possible to identify the 3D period and the 2D period with frame accuracy by using the present technology.

[Signaling information of video layer and 3D and 2D identification information of system layer]

In the above description, a description has been made of an example in which a 3D period or a 2D period is determined with frame accuracy on the basis of auxiliary information inserted into a video stream, that is, auxiliary information (signaling information) of a video layer. In this case, the receiver is required to check a part corresponding to associated auxiliary information at all times.

It is considered that a 3D period or a 2D period is determined based on a combination of auxiliary information (signaling information) of the video layer and 3D and 2D identification information (signaling information) of the system layer. In this case, the receiver first detects identification information of the system layer and can check a part corresponding to auxiliary information of an associated video layer.

(Configuration Example 1)

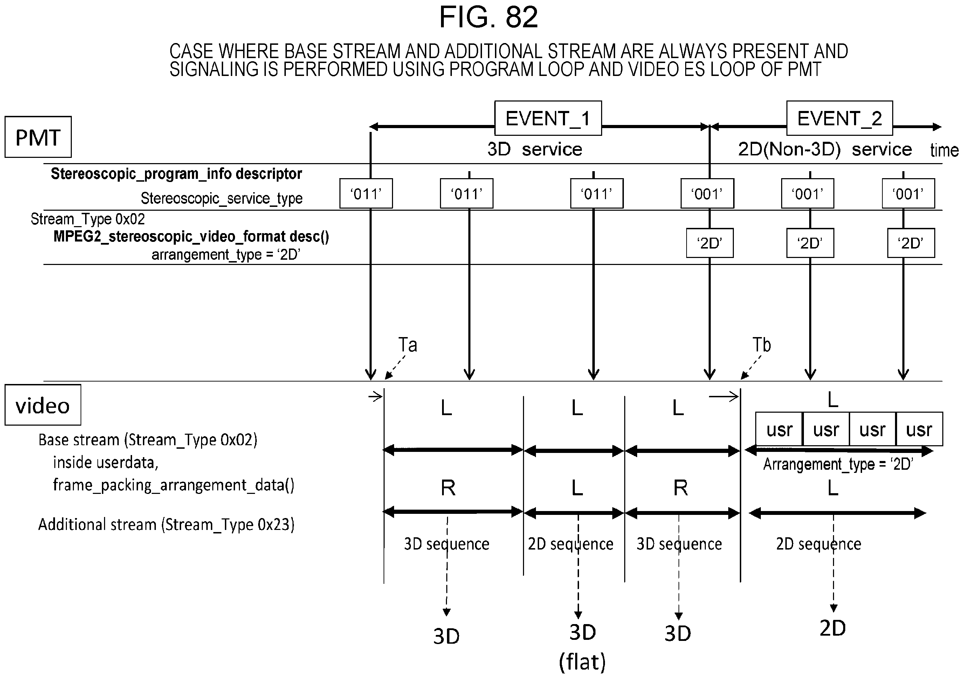

Fig. 82 shows an example in which a base video stream and an additional video stream are present in both a 3D period and a 2D period, and signaling is performed using both a program loop (Program_loop) and a video ES loop (video ES_loop) of a Program Map Table (PMT).

In this example, in both a 3D period (event 1) and a 3D period (event 2), there are present a base video stream of an MPEFG2 base view of "Stream_Type=0x02" and an AVC additional video stream of "Stream_Type=0x23. In this example, "L" indicates left eye image data, and "R" indicates right eye image data. When a base video stream is "L" and an additional video stream is "R", normal 3D display can be performed, and, when a base video stream is "L" and an additional video stream is "L", flat 3D display is performed.

In a case of this example, the transmission data generation unit 110B shown in Fig. 54 inserts frame packing arrangement data (arrangement_type="2D") indicating a 2D mode into the user data region of the base video stream with the picture unit in the 2D period. Thereby, the receiver can determine a 2D period or a 3D period with frame accuracy in the video layer.

In addition, in a case of this example, signaling is performed using both a program loop (Program_loop) and a video ES loop (Video ES_loop) of a Program Map Table (PMT). A stereoscopic program information descriptor (Stereoscopic_program_info_descriptor) is disposed in the program loop.

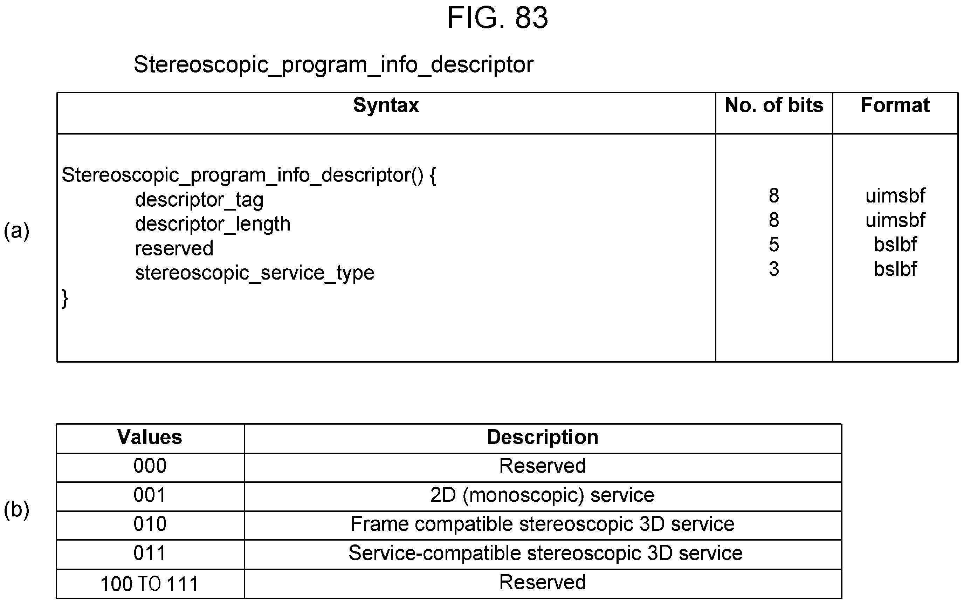

Fig. 83(a) shows a structural example (Syntax) of a stereoscopic program information descriptor. "descriptor_tag" is 8-bit data indicating a descriptor type, and, here, indicates a stereoscopic program information descriptor. "descriptor_length" is 8-bit data indicating a length (size) of the descriptor. This data is a length of the descriptor and indicates the number of subsequent bytes.

The 3-bit field of "stereoscopic_service_type" designates a service type. Fig. 83(b) shows a relationship a value of "stereoscopic_service_type" and a service type. For example, "011" indicates a service-compatible stereoscopic 3D service, and "001" indicates a 2D service.

Returning to the example of Fig. 82, a value of "stereoscopic_service_type" of the stereoscopic program information descriptor disposed in the program loop of the Program Map Table (PMT) is "011" in a 3D period and is "001" in a 2D period.

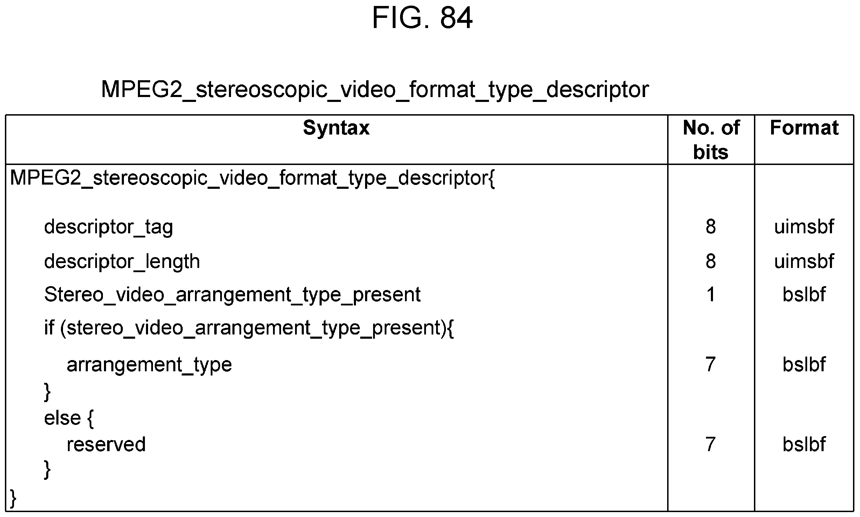

In addition, in a 2D period, an MPEG2 stereoscopic video descriptor (MPEG2_stereoscopic_video_format descriptor) is disposed in the video ES loop. Fig. 84 shows a structural example (Syntax) of the MPEG2 stereoscopic video descriptor. "descriptor_tag" is 8-bit data indicating a descriptor type, and, here, indicates an MPEG2 stereoscopic video descriptor. "descriptor_length" is 8-bit data indicating a length (size) of the descriptor. This data is a length of the descriptor and indicates the number of subsequent bytes.

If "Stereo_video_arrangement_type_present" is "1", this indicates that 7-bit "arrangement_type" subsequent thereto is "stereo_video_format_type". This is defined in the same manner as "arrangement_type" of frame packing arrangement data (frame_packing_arrangement_data()) which is inserted into the user region as described above (refer to Fig. 46). On the other hand, if "Stereo_video_arrangement_type_present" is "0", this indicates a reserved region in which there is no information in 7 bits subsequent thereto.

As described above, in the MPEG2 stereoscopic video descriptor disposed in the video ES loop in a 2D period, "Stereo_video_arrangement_type_present" is "1", and "arrangement_type" indicates "2D".

A description will be made of operation mode switching control between a stereoscopic (3D) display process and a two-dimensional (2D) display process in the receiver 200B shown in Fig. 55 In a case where signaling is performed using the video layer and the system layer as shown in Fig. 82,. This switching is performed by the CPU 201.

When a two-dimensional (2D) image is received, the stereoscopic program information descriptor (stereoscopic_service_type="001") and the MPEG2 stereoscopic video descriptor (arrangement_type="2D") are extracted by the demultiplexer 215 and are supplied to the CPU 201.

In addition, when the two-dimensional (2D) image is received, the frame packing arrangement data (arrangement_type="2D") is extracted by the video decoder 216-1 and is supplied to the CPU 201. On the other hand, when a stereoscopic (3D) image is received, the stereoscopic program information descriptor (stereoscopic_service_type="011") is extracted by the demultiplexer 215 and is supplied to the CPU 201.

The CPU 201 performs control for switching from a two-dimensional (2D) display process to a stereoscopic (3D) display process at the frame (picture) timing (indicated by "Ta") when the frame packing arrangement data (arrangement_type="2D") is not extracted after only the stereoscopic program information descriptor (stereoscopic_service_type="011") is extracted.

In addition, the CPU 201 performs control for switching from a stereoscopic (3D) display process to a two-dimensional (2D) display process at the frame (picture) timing (indicated by "Tb") when the frame packing arrangement data (arrangement_type="2D") is extracted after the stereoscopic program information descriptor (stereoscopic_service_type="001") and the MPEG2 stereoscopic video descriptor (arrangement_type="2D") is extracted.

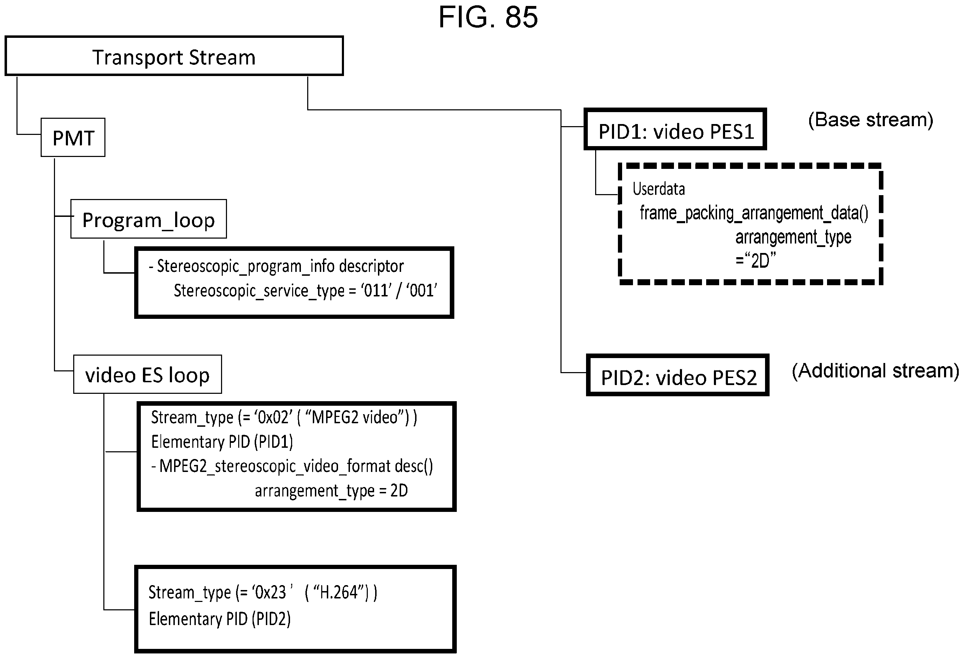

Fig. 85 shows a configuration example of the transport stream TS. In addition, in this configuration example, for simplification of the figure, disparity data, audio, graphics, and the like are not shown. The transport stream TS includes a PES packet "video PES1" of a base video stream (MPEG2 stream) of "PID1" and also includes a PES packet "video PES1" of an additional video stream (AVC stream) of "PID2". Only in the 2D period, frame packing arrangement data (arrangement_type="2D") indicating a 2D mode is inserted into the user data region of the base video stream with the picture unit.

In addition, stereoscopic program information descriptor (Stereoscopic_program_info_descriptor) is disposed in the program loop under the PMT. "stereoscopic_service_type" of the descriptor is "011" in the 3D period, which indicates a 3D service, and is "001" in the 2D period, which indicates a 2D service.

In addition, the MPEG2 stereoscopic video descriptor (MPEG2_stereoscopic_video_format descriptor) is disposed in the video ES loop under the PMT as information regarding a base video stream only in a case of the 2D period. "arrangement_type" of the descriptor is "2D". This indicates a 2D service. Conversely, if the descriptor is not present, this indicates a 3D service.

(Configuration Example 2)

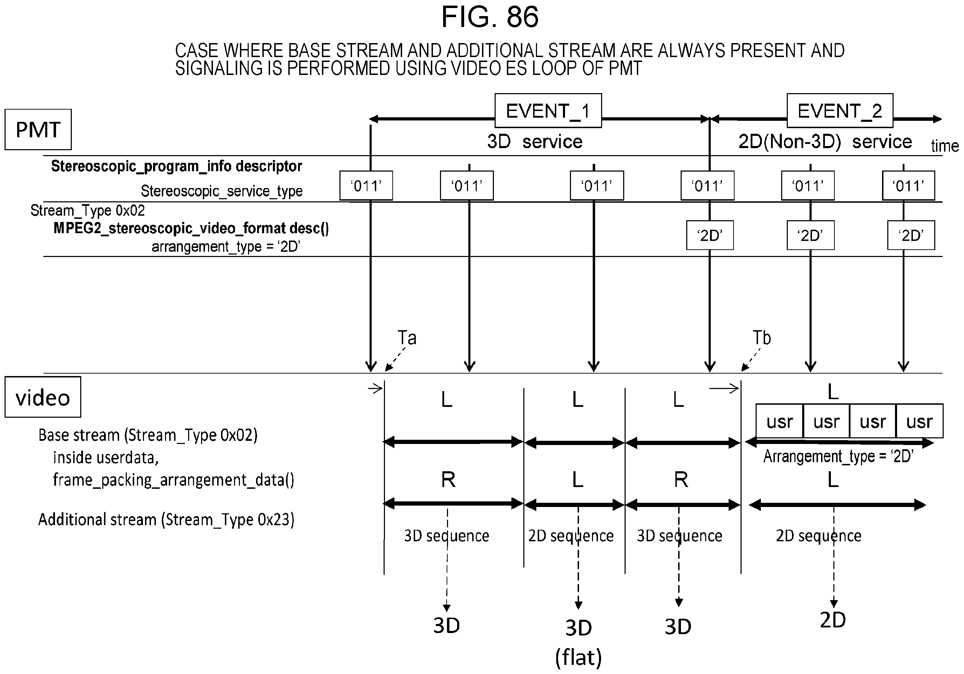

Fig. 86 shows an example in which a base video stream and an additional video stream are present in both a 3D period and a 2D period, and signaling is performed using a video ES loop (video ES_loop) of the PMT. In addition, in Fig. 86, description of a part corresponding to Fig. 82 will be appropriately omitted.

In a case of this example, the transmission data generation unit 110B shown in Fig. 54 inserts frame packing arrangement data (arrangement_type="2D") indicating a 2D mode into the user data region of the base video stream with the picture unit in the 2D period. Thereby, the receiver can determine a 2D period or a 3D period with frame accuracy in the video layer.

In addition, in a case of this example, a stereoscopic program information descriptor (Stereoscopic_program_info_descriptor) is disposed in the program loop of the PMT. A value of "stereoscopic_service_type" of the descriptor is "011" in both a 3D period and a 2D period. In addition, in a case of this example, in the 2D period, an MPEG2 stereoscopic video descriptor (MPEG2_stereoscopic_video_format descriptor) is disposed in the video ES loop. In this descriptor, "arrangement_type" indicates "2D".

A description will be made of operation mode switching control between a stereoscopic (3D) display process and a two-dimensional (2D) display process in the receiver 200B shown in Fig. 55 in a case where signaling is performed using the video layer and the system layer as shown in Fig. 86. This switching is performed by the CPU 201.

When a two-dimensional (2D) image is received, the stereoscopic program information descriptor (stereoscopic_service_type="011") and the MPEG2 stereoscopic video descriptor (arrangement_type="2D") are extracted by the demultiplexer 215 and are supplied to the CPU 201. In addition, when the two-dimensional (2D) image is received, the frame packing arrangement data (arrangement_type="2D") is extracted by the video decoder 216-1 and is supplied to the CPU 201. On the other hand, when a stereoscopic (3D) image is received, only the stereoscopic program information descriptor (stereoscopic_service_type="011") is extracted by the demultiplexer 215 and is supplied to the CPU 201.

The CPU 201 performs control for switching from a two-dimensional (2D) display process to a stereoscopic (3D) display process at the frame (picture) timing (indicated by "Ta") when the frame packing arrangement data (arrangement_type="2D") is not extracted after only the stereoscopic program information descriptor (stereoscopic_service_type="011") is extracted.

In addition, the CPU 201 performs control for switching from a stereoscopic (3D) display process to a two-dimensional (2D) display process at the frame (picture) timing (indicated by "Tb") when the frame packing arrangement data (arrangement_type="2D") is extracted after the stereoscopic program information descriptor (stereoscopic_service_type="001") and the MPEG2 stereoscopic video descriptor (arrangement_type="2D") are extracted.

(Configuration Example 3)

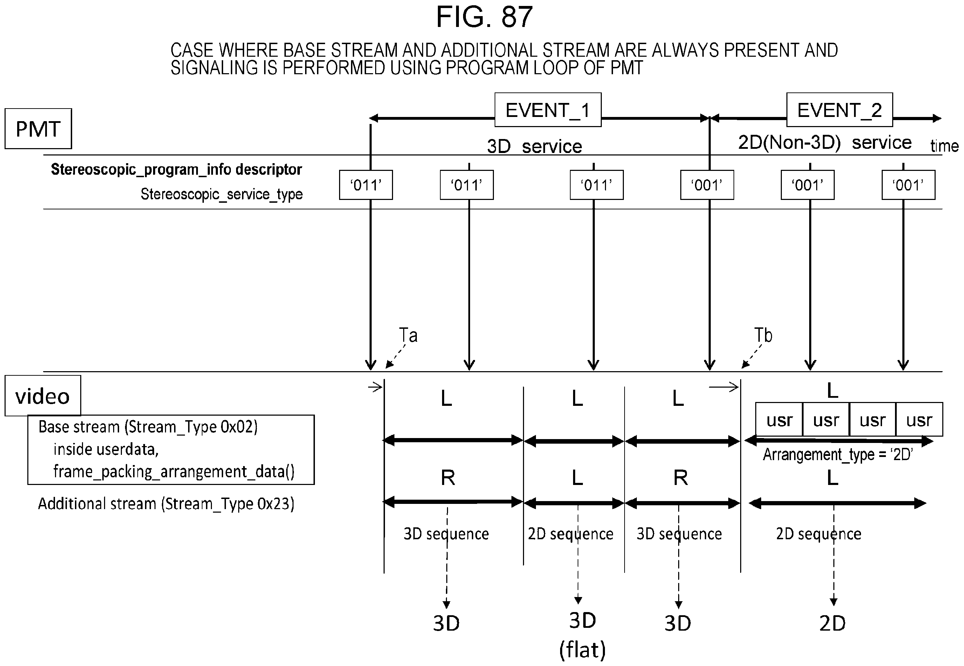

Fig. 87 shows an example in which a base video stream and an additional video stream are present in both a 3D period and a 2D period, and signaling is performed using a program loop (Program_loop) of the PMT. In addition, in Fig. 87, description of a part corresponding to Fig. 82 will be appropriately omitted.

In a case of this example, the transmission data generation unit 110B shown in Fig. 54 inserts frame packing arrangement data (arrangement_type="2D") indicating a 2D mode into the user data region of the base video stream with the picture unit in the 2D period. Thereby, the receiver can determine a 2D period or a 3D period with frame accuracy in the video layer.

In addition, in a case of this example, a stereoscopic program information descriptor (Stereoscopic_program_info_descriptor) is disposed in the program loop of the PMT. A value of the descriptor is "011" in a 3D period and is "001" in a 2D period.

A description will be made of operation mode switching control between a stereoscopic (3D) display process and a two-dimensional (2D) display process in the receiver 200B shown in Fig. 55 in a case where signaling is performed using the video layer and the system layer as shown in Fig. 87. This switching is performed by the CPU 201.

When a two-dimensional (2D) image is received, the stereoscopic program information descriptor (stereoscopic_service_type="001") is extracted by the demultiplexer 215 and is supplied to the CPU 201. In addition, when the two-dimensional (2D) image is received, the frame packing arrangement data (arrangement_type="2D") is extracted by the video decoder 216-1 and is supplied to the CPU 201. On the other hand, when a stereoscopic (3D) image is received, the stereoscopic program information descriptor (stereoscopic_service_type="011") is extracted by the demultiplexer 215 and is supplied to the CPU 201.

The CPU 201 performs control for switching from a two-dimensional (2D) display process to a stereoscopic (3D) display process at the frame (picture) timing (indicated by "Ta") when the frame packing arrangement data (arrangement_type="2D") is not extracted after the stereoscopic program information descriptor (stereoscopic_service_type="011") is extracted.

In addition, the CPU 201 performs control for switching from a stereoscopic (3D) display process to a two-dimensional (2D) display process at the frame (picture) timing (indicated by "Tb") when the frame packing arrangement data (arrangement_type="2D") is extracted after the stereoscopic program information descriptor (stereoscopic_service_type="001") is extracted.

(Configuration Example 4)

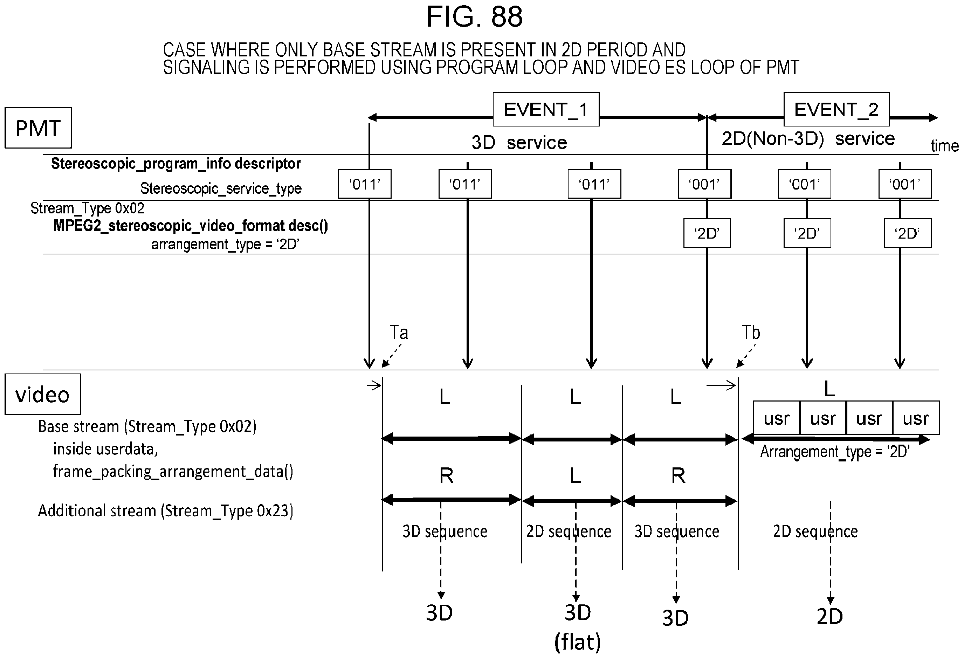

Fig. 88 shows an example in which a base video stream and an additional video stream are present in a 3D period, only a base video stream is present in a 2D period, and signaling is performed using both a program loop (Program_loop) and a video ES loop (video ES_loop) of the PMT. In addition, in Fig. 88, description of a part corresponding to Fig. 82 will be appropriately omitted.

In a case of this example, the transmission data generation unit 110B shown in Fig. 54 inserts frame packing arrangement data (arrangement_type="2D") indicating a 2D mode into the user data region of the base video stream with the picture unit in the 2D period. Thereby, the receiver can determine a 2D period or a 3D period with frame accuracy in the video layer.

In addition, in a case of this example, a stereoscopic program information descriptor (Stereoscopic_program_info_descriptor) is disposed in the program loop of the PMT. A value of "stereoscopic_service_type" of the descriptor is "011" in a 3D period and is "001" in a 2D period. Further, in a case of this example, the MPEG2 stereoscopic video descriptor (MPEG2_stereoscopic_video_format descriptor) is disposed in the video ES loop in the 2D period. In the descriptor, "arrangement_type" indicates "2D".

A description will be made of operation mode switching control between a stereoscopic (3D) display process and a two-dimensional (2D) display process in the receiver 200B shown in Fig. 55 in a case where signaling is performed using the video layer and the system layer as shown in Fig. 88,. This switching is performed by the CPU 201.

When a two-dimensional (2D) image is received, the stereoscopic program information descriptor (stereoscopic_service_type="001") and the MPEG2 stereoscopic video descriptor (arrangement_type="2D") are extracted by the demultiplexer 215 and are supplied to the CPU 201. In addition, when the two-dimensional (2D) image is received, the frame packing arrangement data (arrangement_type="2D") is extracted by the video decoder 216-1 and is supplied to the CPU 201. On the other hand, when a stereoscopic (3D) image is received, the stereoscopic program information descriptor (stereoscopic_service_type="011") is extracted by the demultiplexer 215 and is supplied to the CPU 201.

The CPU 201 performs control for switching from a two-dimensional (2D) display process to a stereoscopic (3D) display process at the frame (picture) timing (indicated by "Ta") when the frame packing arrangement data (arrangement_type="2D") is not extracted after only the stereoscopic program information descriptor (stereoscopic_service_type="011") is extracted.

In addition, the CPU 201 performs control for switching from a stereoscopic (3D) display process to a two-dimensional (2D) display process at the frame (picture) timing (indicated by "Tb") when the frame packing arrangement data (arrangement_type="2D") is extracted after the stereoscopic program information descriptor (stereoscopic_service_type="001") and the MPEG2 stereoscopic video descriptor (arrangement_type="2D") are extracted.

(Configuration Example 5)

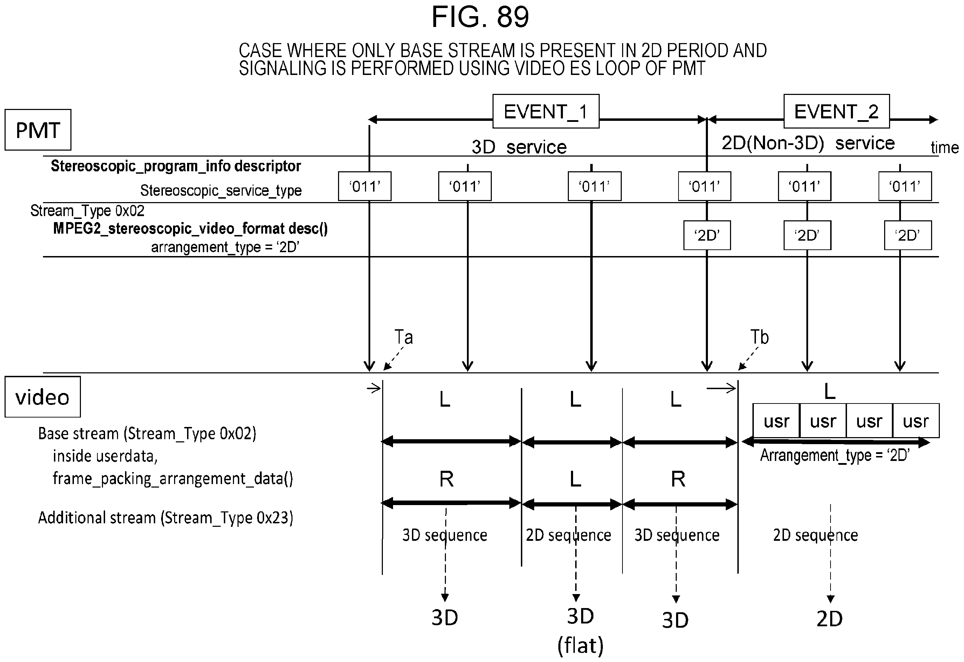

Fig. 89 shows an example in which a base video stream and an additional video stream are present in a 3D period, only a base video stream is present in a 2D period, and signaling is performed using a video ES loop (video ES_loop). In addition, in Fig. 89, description of a part corresponding to Fig. 82 will be appropriately omitted.

In a case of this example, the transmission data generation unit 110B shown in Fig. 54 inserts frame packing arrangement data (arrangement_type="2D") indicating a 2D mode into the user data region of the base video stream with the picture unit in the 2D period. Thereby, the receiver can determine a 2D period or a 3D period with frame accuracy in the video layer.

In addition, in a case of this example, a stereoscopic program information descriptor (Stereoscopic_program_info_descriptor) is disposed in the program loop of the PMT. A value of "stereoscopic_service_type" of the descriptor is "011" in both a 3D period and a 2D period. Further, in a case of this example, the MPEG2 stereoscopic video descriptor (MPEG2_stereoscopic_video_format descriptor) is disposed in the video ES loop in the 2D period. In the descriptor, "arrangement_type" indicates "2D".

A description will be made of operation mode switching control between a stereoscopic (3D) display process and a two-dimensional (2D) display process in the receiver 200B shown in Fig. 55 In a case where signaling is performed using the video layer and the system layer as shown in Fig. 89. This switching is performed by the CPU 201.

When a two-dimensional (2D) image is received, the stereoscopic program information descriptor (stereoscopic_service_type="001") and the MPEG2 stereoscopic video descriptor (arrangement_type="2D") are extracted by the demultiplexer 215 and are supplied to the CPU 201. In addition, when the two-dimensional (2D) image is received, the frame packing arrangement data (arrangement_type="2D") is extracted by the video decoder 216-1 and is supplied to the CPU 201. On the other hand, when a stereoscopic (3D) image is received, only the stereoscopic program information descriptor (stereoscopic_service_type="011") is extracted by the demultiplexer 215 and is supplied to the CPU 201.

The CPU 201 performs control for switching from a two-dimensional (2D) display process to a stereoscopic (3D) display process at the frame (picture) timing (indicated by "Ta") when the frame packing arrangement data (arrangement_type="2D") is not extracted after only the stereoscopic program information descriptor (stereoscopic_service_type="011") is extracted.

In addition, the CPU 201 performs control for switching from a stereoscopic (3D) display process to a two-dimensional (2D) display process at the frame (picture) timing (indicated by "Tb") when the frame packing arrangement data (arrangement_type="2D") is extracted after the stereoscopic program information descriptor (stereoscopic_service_type="011") and the MPEG2 stereoscopic video descriptor (arrangement_type="2D") are extracted.

(Configuration Example 6)

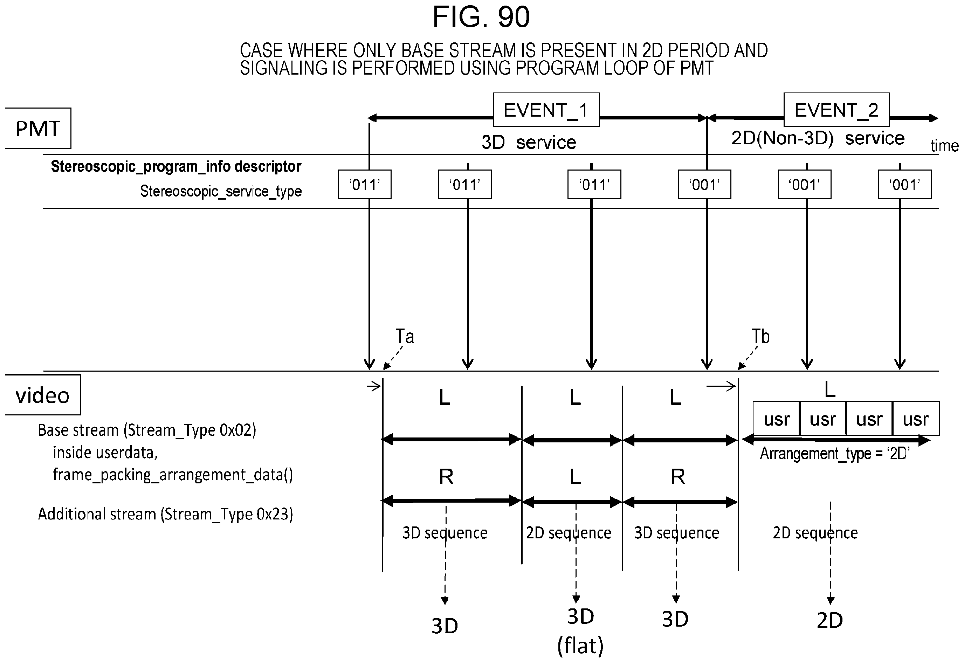

Fig. 90 shows an example in which a base video stream and an additional video stream are present in a 3D period, only a base video stream is present in a 2D period, and signaling is performed using a program loop (Program_loop) of the PMT. In addition, in Fig. 90, description of a part corresponding to Fig. 82 will be appropriately omitted.

In a case of this example, the transmission data generation unit 110B shown in Fig. 54 inserts frame packing arrangement data (arrangement_type="2D") indicating a 2D mode into the user data region of the base video stream with the picture unit in the 2D period. Thereby, the receiver can determine a 2D period or a 3D period with frame accuracy in the video layer.

In addition, in a case of this example, a stereoscopic program information descriptor (Stereoscopic_program_info_descriptor) is disposed in the program loop of the PMT. A value of the descriptor is "011" in a 3D period and is "001" in a 2D period.

In a case where signaling is performed using the video layer and the system layer as shown in Fig. 90, a description will be made of operation mode switching control between a stereoscopic (3D) display process and a two-dimensional (2D) display process in the receiver 200B shown in Fig. 55. This switching is performed by the CPU 201.

When a two-dimensional (2D) image is received, the stereoscopic program information descriptor (stereoscopic_service_type="001") is extracted by the demultiplexer 215 and is supplied to the CPU 201. In addition, when the two-dimensional (2D) image is received, the frame packing arrangement data (arrangement_type="2D") is extracted by the video encoder 216-1 and is supplied to the CPU 201. On the other hand, when a stereoscopic (3D) image is received, the stereoscopic program information descriptor (stereoscopic_service_type="011") is extracted by the demultiplexer 215 and is supplied to the CPU 201.

The CPU 201 performs control for switching from a two-dimensional (2D) display process to a stereoscopic (3D) display process at the frame (picture) timing (indicated by "Ta") when the frame packing arrangement data (arrangement_type="2D") is not extracted after the stereoscopic program information descriptor (stereoscopic_service_type="011") is extracted.

In addition, the CPU 201 performs control for switching from a stereoscopic (3D) display process to a two-dimensional (2D) display process at the frame (picture) timing (indicated by "Tb") when the frame packing arrangement data (arrangement_type="2D") is extracted after the stereoscopic program information descriptor (stereoscopic_service_type="001") is extracted.

(Other configuration examples)

In the above-described Configuration Examples 1 to 6, a description has been made of an example in which auxiliary information (for example, frame packing arrangement data) indicating a 2D mode is inserted into each picture of a video stream in a 2D period. Detailed description is omitted, and, in a case where auxiliary information for identifying a mode is inserted into each picture of video streams in a 2D period and a 3D period, and in a case where auxiliary information indicating a 3D mode is inserted into each picture of a video stream in a 3D period, the same configuration may be employed.

<2. Modification example>

[SVC stream]

In addition, in the above-described embodiment, a description has been made of an example in which the present technology is applied to an MVC stream. In other words, the example is an example in which a first transmission mode is the stereoscopic image transmission mode for transmitting base view image data and non-base view image data used along with the base view image data in order to display a stereoscopic image, and a second transmission mode is the two-dimensional image transmission mode for transmitting two-dimensional image data.

However, the present technology may be applied to an SVC stream in the same manner. The SVC stream includes a video elementary stream of image data of the lowest layer forming scalable coded image data. In addition, the SVC stream includes a predetermined number of video elementary streams of image data of the higher layers other than the lowest layer forming the scalable coded image data.

In a case of the SVC stream, a first transmission mode is an extension image transmission mode for transmitting image data of the lowest layer forming scalable coded image data and image data of layers other than the lowest layer, and a second transmission mode is a base image transmission mode for transmitting base image data. Also in a case of the SVC stream, a reception side can rapidly identify a mode in the same manner as in the above-described MVC stream.

In a case of the SVC stream, a stream configuration example 1 is considered in which a base video stream and an additional video stream are transmitted in the extension image transmission mode and a single video stream (only a base video stream) is transmitted in the base image transmission mode (refer to Fig. 80). In this case, it is possible to identify a mode in the same manner as in a case of the above-described MVC stream.

In addition, in a case of the SVC stream, a stream configuration example 2 is considered in which a base video stream and an additional video stream are transmitted in both the extension image transmission mode and the base image transmission mode (refer to Fig. 81). However, in the base image transmission mode, the additional video stream is coded in a coding mode (Skipped Macro Block) in which a difference between views is zero as a result of referring to the base video stream. Also in this case, it is possible to identify a mode in the same manner as in a case of the above-described MVC stream.

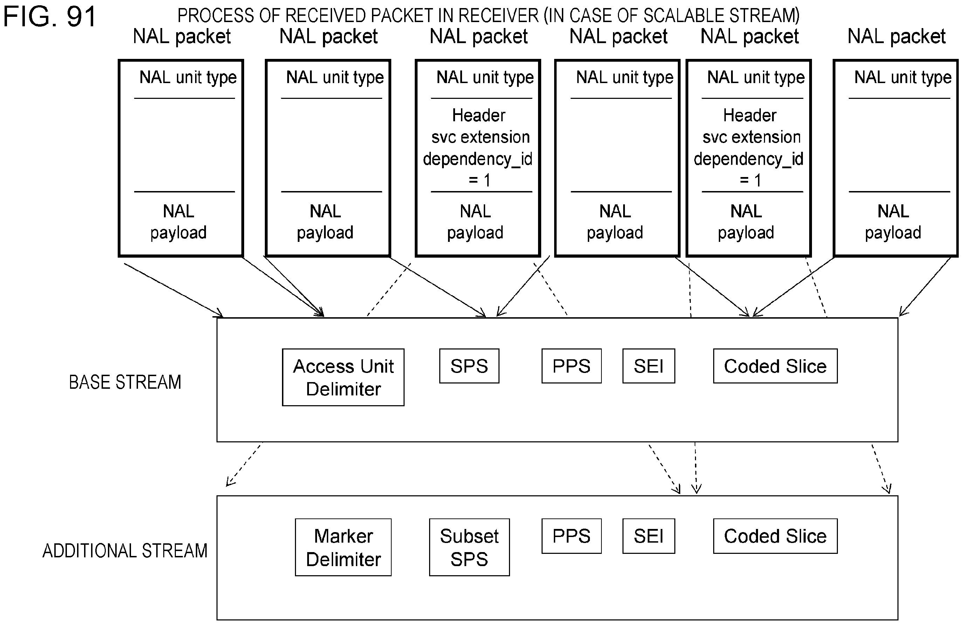

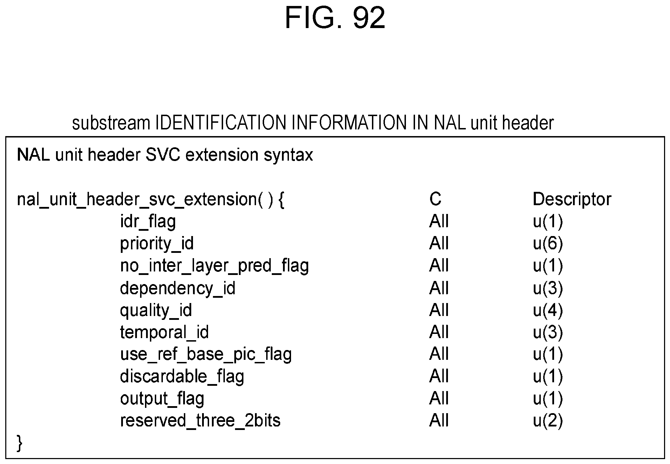

Fig. 91 shows an example of a reception packet process when an extension image is received. NAL packets of a base video stream and an additional video stream are mixed and are transmitted. Fig. 92 shows a configuration example (Syntax) of a NAL unit header and SVC extension of the NAL unit header (NAL unit header SVC extension). The field of "dependency_id" indicates what number layer is a corresponding layer. As shown in Fig. 91, a receiver assigns the NAL packets which are mixed and are transmitted to each stream and decodes each stream on the basis of a combination of a value of the NAL unit type and a dependency ID (dependency_id) of NAL unit header SVC extension (Header svc extension).

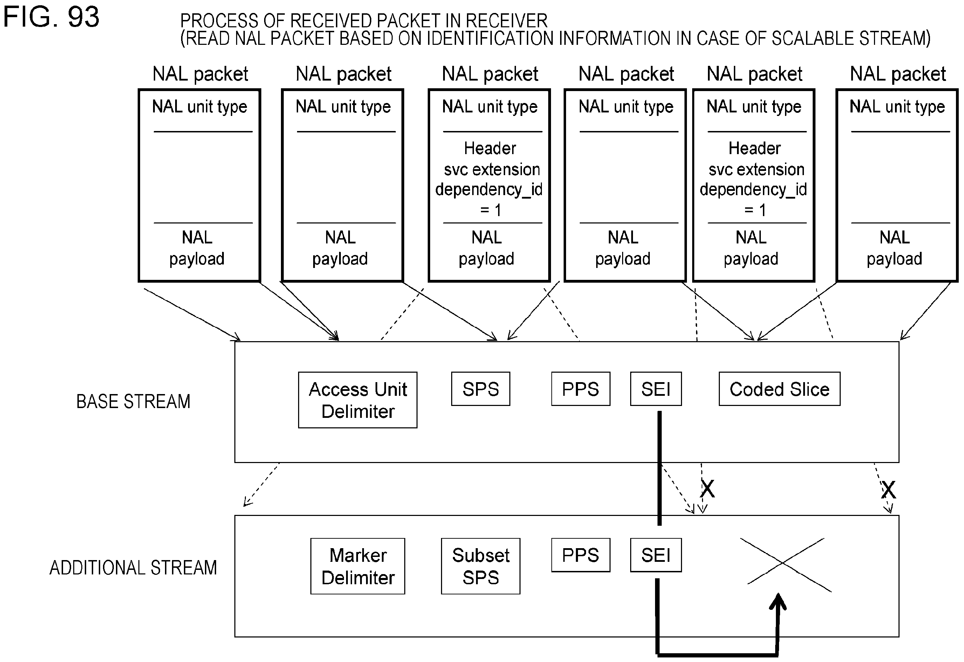

Fig. 93 shows an example of a reception packet process in the base image transmission mode. NAL packets of a base video stream and an additional video stream are mixed and are transmitted. As shown in Fig. 93, the receiver assigns the NAL packets which are mixed and are transmitted to each stream and decodes only the base video stream on the basis of a combination of a value of the NAL unit type and a dependency ID (dependency_id) of NAL unit header SVC extension (Header svc extension).

In other words, also in the base image transmission mode, in the same manner as in the extension image transmission mode, the receiver receives a base video stream and an additional video stream but performs a base image reception process without performing an extension image reception process, on the basis of information of an ID value of the same type as "view_position[i]" of the multi-view view position SEI message, that is, set content in which dependencies of a plurality of streams have the same value.

As above, since identification can be performed at a packet (NAL packet) level without decoding coded data of an additional video stream, it is possible to perform rapid transfer from an extension image transmission mode to a base image transmission mode in the receiver. In addition, since layers equal to or lower than the slice layer are not decoded and can be discarded, memory consumption can be suppressed to that extent so as to save power or allocate a CPU budget of a system, a memory space bandwidth, or the like to other features (for example, high performance graphics), thereby achieving multiple functions.

[Others]

In addition, although the image transmission and reception system 10 including the broadcast station 100 and the receiver 200 has been described in the above-described embodiment, a configuration of an image transmission and reception system to which the present technology is applicable is not limited thereto. For example, the receiver 200 part may be configured to include a set-top box and a monitor which are connected via a digital interface such as, for example, High-Definition Multimedia Interface (HDMI).

In addition, in the above-described embodiment, a description has been made of an example in which a container is a transport stream (MPEG-2 TS). However, the present technology is similarly applicable to a system with a configuration in which image data delivery to a reception terminal is performed using a network such as the Internet. In the Internet delivery, the delivery is frequently performed using MP4 or containers of other formats. In other words, the containers correspond to containers of various formats such as a transport stream (MPEG-2 TS) employed in the digital broadcast standards and MP4 used in the Internet delivery.

In addition, the present technology may have the following configuration.

(1) An image data transmission device including a transmission unit that transmits one or a plurality of video streams including a predetermined number of image data items; and an information inserting unit that inserts auxiliary information for identifying a first transmission mode in which a plurality of image data items are transmitted and a second transmission mode in which a single image data item is transmitted, into the video stream.

(2) The image data transmission device set forth in (1), wherein the information inserting unit inserts auxiliary information indicating the first transmission mode into the video stream in the first transmission mode and inserts auxiliary information indicating the second transmission mode into the video stream in the second transmission mode.

(3) The image data transmission device set forth in (1), wherein the information inserting unit inserts auxiliary information indicating the first transmission mode into the video stream in the first transmission mode and does not insert the auxiliary information into the video stream in the second transmission mode.

(4) The image data transmission device set forth in (1), wherein the information inserting unit does not insert the auxiliary information into the video stream in the first transmission mode and inserts auxiliary information indicating the second transmission mode into the video stream in the second transmission mode.

(5) The image data transmission device set forth in any one of (1) to (4), wherein the information inserting unit inserts the auxiliary information into the video stream, at least with the program unit, the scene unit, the picture group unit, or the picture unit.

(6) The image data transmission device set forth in any one of (1) to (5), wherein the transmission unit transmits a base video stream including first image data and a predetermined number of additional video streams including second image data used along with the first image data in the first transmission mode, and transmits a single video stream including the first image data in the second transmission mode.

(7) The image data transmission device set forth in any one of (1) to (5), wherein the transmission unit transmits a base video stream including first image data and a predetermined number of additional video streams including second image data used along with the first image data in the first transmission mode, and transmits a base video stream including first image data and a predetermined number of additional video streams substantially including image data which is the same as the first image data in the second transmission mode.

(8) The image data transmission device set forth in any one of (1) to (7), wherein the first transmission mode is a stereoscopic image transmission mode in which base view image data and non-base view image data used along with the base view image data are transmitted so as to display a stereoscopic image, and the second transmission mode is a two-dimensional image transmission mode in which two-dimensional image data is transmitted.

(9) The image data transmission device set forth in (8), wherein the auxiliary information indicating the stereoscopic image transmission mode includes information indicating a relative positional relationship of each view.

(10) The image data transmission device set forth in any one of (1) to (7), wherein the first transmission mode is an extension image transmission mode in which image data of the lowest layer forming scalable coded image data and image data of layers other than the lowest layer are transmitted, and the second transmission mode is a base image transmission mode in which base image data is transmitted.

(11) The image data transmission device set forth in any one of (1) to (10), wherein the transmission unit transmits a container of a predetermined format including the video stream, and wherein the image data transmission device further includes identification information inserting unit that inserts identification information for identifying whether to be in the first transmission mode or in the second transmission mode, into a layer of the container.

(12) An image data transmission method including a transmission step of transmitting one or a plurality of video streams including a predetermined number of image data items; and an information inserting step of inserting auxiliary information for identifying a first transmission mode in which a plurality of image data items are transmitted and a second transmission mode in which a single image data item is transmitted, into the video stream.

(13) An image data reception device including a reception unit that receives one or a plurality of video streams including a predetermined number of image data items; a transmission mode identifying unit that identifies a first transmission mode in which a plurality of image data items are transmitted and a second transmission mode in which a single image data item is transmitted on the basis of auxiliary information which is inserted into the received video stream; and a processing unit that performs a process corresponding to each mode on the received video stream on the basis of the mode identification result, so as to acquire the predetermined number of image data items.

(14) The image data reception device set forth in (13), wherein the transmission mode identifying unit identifies the first transmission mode when auxiliary information indicating the first transmission mode is inserted into the received video stream, and identifies the second transmission mode when auxiliary information indicating the second transmission mode is inserted into the received video stream.

(15) The image data reception device set forth in (13), wherein the transmission mode identifying unit identifies the first transmission mode when auxiliary information indicating the first transmission mode is inserted into the received video stream, and identifies the second transmission mode when the auxiliary information is not inserted into the received video stream.

(16) The image data reception device set forth in (13), wherein the transmission mode identifying unit identifies the first transmission mode when the auxiliary information is not inserted into the received video stream, and identifies the second transmission mode when auxiliary information indicating the second transmission mode is inserted into the received video stream.

(17) The image data reception device set forth in any one of (13) to (16), wherein the reception unit receives a base video stream including first image data and a predetermined number of additional video streams including second image data used along with the first image data in the first transmission mode, and receives a single video stream including the first image data in the second transmission mode, and wherein the processing unit processes the base video stream and the predetermined number of additional video streams so as to acquire the first image data and the second image data in the first transmission mode, and processes the single video stream so as to acquire the first image data in the second transmission mode.

(18) The image data reception device set forth in any one of (13) to (16), wherein the reception unit receives a base video stream including first image data and a predetermined number of additional video streams including second image data used along with the first image data in the first transmission mode, and receives a base video stream including first image data and a predetermined number of additional video streams substantially including image data which is the same as the first image data in the second transmission mode, and wherein the processing unit processes the base video stream and the predetermined number of additional video streams so as to acquire the first image data and the second image data in the first transmission mode, and processes the base video stream so as to acquire the first image data without performing a process of acquiring the second image data from the predetermined number of additional video streams in the second transmission mode.

(19) The image data reception device set forth in any one of (13) to (18), wherein the reception unit receives a container of a predetermined format including the video stream, wherein identification information for identifying whether to be in the first transmission mode or in the second transmission mode is inserted into a layer of the container in the container, and wherein the transmission mode identifying unit identifies the first transmission mode in which a plurality of image data items are transmitted and the second transmission mode in which a single image data item is transmitted on the basis of auxiliary information which is inserted into the received video stream and identification information which is inserted into the layer of the container.

(20) The image data reception device set forth in any one of (13) to (19), wherein the first transmission mode is a stereoscopic image transmission mode in which base view image data and non-base view image data used along with the base view image data are transmitted so as to display a stereoscopic image, and the second transmission mode is a two-dimensional image transmission mode in which two-dimensional image data is transmitted.

A main feature of the present technology is that a reception side can identify a 3D period or a 2D period with frame accuracy on the basis of auxiliary information (a SEI message, user data, or the like) which is inserted into a transmission video stream in the 3D period and the 2D period, only in the 3D period, or only in the 2D period, and thus it is possible to appropriately and accurately handle a dynamic variation in delivery content and to thereby receive a correct stream (refer to Figs. 59 and 79).

Reference Signs List

10 IMAGE TRANSMISSION AND RECEPTION SYSTEM
100 BROADCAST STATION
110 TRANSMISSION DATA GENERATION UNIT
111-1 TO 111-N IMAGE DATA OUTPUT PORTION
112 VIEW SELECTOR
113-1, 113-2, AND 113-3 SCALER
114-1, 114-2, AND 114-3 VIDEO ENCODER
115 MULTIPLEXER
116 DISPARITY DATA GENERATION PORTION
117 DISPARITY ENCODER
118 GRAPHICS DATA OUTPUT PORTION
119 GRAPHICS ENCODER
120 AUDIO DATA OUTPUT PORTION
121 AUDIO ENCODER
200 AND 200A RECEIVER
201 CPU
211 ANTENNA TERMINAL
212 DIGITAL TUNER
213 TRANSPORT STREAM BUFFER (TS BUFFER)
214 DEMULTIPLEXER
215-1, 215-2, 215-3, 221, 225, AND 230 CODED BUFFER
216-1, 216-2, AND 216-3 VIDEO DECODER
217-1, 217-2, AND 217-3 VIEW BUFFER
218-1, 218-2, 218-3 AND 228 SCALER
219 VIEW INTERPOLATION UNIT
220 PIXEL INTERLEAVING/SUPERIMPOSING UNIT
222 DISPARITY DECODER
223 DISPARITY BUFFER
224 DISPARITY DATA CONVERSION UNIT
226 GRAPHICS DECODER
227 PIXEL BUFFER
229 GRAPHICS SHIFTER
231 AUDIO DECODER
232 CHANNEL MIXING UNIT
233 DISPARITY DATA GENERATION UNIT

**Claims**

1. An image data transmission device comprising:

   image data output portions (111-1 to 111-N) configured to output image data of a number of N views;
   a view selector (112) adapted to receive image data of N views from the N image data output portions (111-1 to 111-N) and to extract at least image data of a left end view, a right end view and an intermediate view;
   a transmission unit that transmits one or a plurality of video elementary streams including image data of the extracted image views; and
   an information inserting unit that inserts auxiliary information for identifying a first transmission mode in which image data of a plurality of image views are transmitted and a second transmission mode in which image data of a single image view is transmitted, into the video elementary stream, wherein the auxiliary information comprises view configuration information including information indicating the number of views received by the view selector (112) and information indicating a relative positional relationship of each view.

2. The image data transmission device according to claim 1,
   wherein the information inserting unit inserts auxiliary information indicating the first transmission mode into the video stream in the first transmission mode and inserts auxiliary information indicating the second transmission mode into the video stream in the second transmission mode.

3. The image data transmission device according to claim 1,

wherein the information inserting unit inserts auxiliary information indicating the first transmission mode into the video stream in the first transmission mode and does not insert the auxiliary information into the video stream in the second transmission mode.

4. The image data transmission device according to claim 1,
wherein the information inserting unit does not insert the auxiliary information into the video stream in the first transmission mode and inserts auxiliary information indicating the second transmission mode into the video stream in the second transmission mode.

5. The image data transmission device according to claim 1,
wherein the transmission unit transmits a base video stream including first image data and a predetermined number of additional video streams including second image data used along with the first image data in the first transmission mode, and transmits a single video stream including the first image data in the second transmission mode.

6. The image data transmission device according to claim 1,
wherein the transmission unit transmits a base video stream including first image data and a predetermined number of additional video streams including second image data used along with the first image data in the first transmission mode, and transmits a base video stream including first image data and a predetermined number of additional video streams substantially including image data which is the same as the first image data in the second transmission mode.

7. An image data transmission method comprising:

outputting image data of a number of N views;
extracting from the number of N views at least image data of a left end view, a right end view and an intermediate view;
a transmission step of transmitting one or a plurality of video elementary streams including image data of the extracted image views; and
an information inserting step of inserting auxiliary information for identifying a first transmission mode in which image data of a plurality of image views are transmitted and a second transmission mode in which image data of a single image view is transmitted, into the video elementary stream, wherein the auxiliary information comprises view configuration information including information indicating the number N of views and information indicating a relative positional relationship of each view.

8. An image data reception device comprising:

a reception unit that receives one or a plurality of video elementary streams including image data of a predetermined number of image views selected from a number N of views;
a transmission mode identifying unit that identifies a first transmission mode in which image data of a plurality of image views are transmitted and a second transmission mode in which image data of a single image view is transmitted on the basis of identification information inserted into a layer of a video transport stream identifying whether or not view configuration information is inserted and on the basis of the view configuration information which includes information indicating the number N of views and information indicating a relative positional relationship of each view and which is inserted into the received video elementary stream; a processing unit that performs a process corresponding to each mode on the received video stream on the basis of the mode identification result, so as to acquire the image data of the predetermined number of image views, and
a view interpolation unit (219) configured to interpolate and generate image data of a number of views which are not transmitted from the image data of the received predetermined number of views.

9. The image data reception device according to claim 8,
wherein the transmission mode identifying unit identifies the first transmission mode when auxiliary information indicating the first transmission mode is inserted into the received video stream, and identifies the second transmission mode when auxiliary information indicating the second transmission mode is inserted into the received video stream.

10. The image data reception device according to claim 8,
wherein the transmission mode identifying unit identifies the first transmission mode when auxiliary information indicating the first transmission mode is inserted into the received video stream, and identifies the second transmission mode when the auxiliary information is not inserted into the received video stream.

11. The image data reception device according to claim 8,
wherein the transmission mode identifying unit identifies the first transmission mode when the auxiliary information is not inserted into the received video stream, and identifies the second transmission mode when auxiliary information indicating the second transmission mode is inserted into the received video stream.

12. The image data reception device according to claim 8,
wherein the reception unit receives a base video stream including first image data and a predetermined number of additional video streams including second image data used along with the first image data in the first transmission mode, and receives a single video stream including the first image data in the second transmission mode, and
wherein the processing unit processes the base video stream and the predetermined number of additional video streams so as to acquire the first image data and the second image data in the first transmission mode, and processes the single video stream so as to acquire the first image data in the second transmission mode.

13. The image data reception device according to claim 8,
wherein the reception unit receives a base video stream including first image data and a predetermined number of additional video streams including second image data used along with the first image data in the first transmission mode, and receives a base video stream including first image data and a predetermined number of additional video streams substantially including image data which is the same as the first image data in the second transmission mode, and
wherein the processing unit processes the base video stream and the predetermined number of additional video streams so as to acquire the first image data and the second image data in the first transmission mode, and processes the base video stream so as to acquire the first image data without performing a process of acquiring the second image data from the predetermined number of additional video streams in the second transmission mode.

14. An image data reception method comprising:

receiving one or a plurality of video elementary streams including image data of a predetermined number of image views selected from a number N of views;

identifying a first transmission mode in which image data of a plurality of image views are transmitted and a second transmission mode in which image data of a single image view is transmitted on the basis of identification information inserted into a layer of a video transport stream identifying whether or not view configuration information is inserted and on the basis of the view configuration information which includes information indicating the number N of views and information indicating a relative positional relationship of each view and which is inserted into the received video elementary stream;

performing a process corresponding to each mode on the received video stream on the basis of the mode identification result, so as to acquire the image data of the predetermined number of image views, and

interpolating and generating image data of a number of views which are not transmitted from the image data of the received predetermined number of views.

**Patentansprüche**

1. Bilddatenübertragungsvorrichtung, umfassend:

die Bilddatenausgabeabschnitte (111-1 bis 111-N), die konfiguriert sind, um Bilddaten einer Anzahl von N Ansichten auszugeben;

eine Ansichtsauswahl (112), die dazu ausgelegt ist, Bilddaten von N Ansichten von den N Bilddatenausgabeabschnitten (111-1 bis 111-N) zu empfangen und zumindest Bilddaten einer Ansicht des linken Endes, einer Ansicht des rechten Endes und einer Zwischenansicht zu extrahieren;

eine Übertragungseinheit, die einen oder eine Vielzahl von elementaren Videoströmen einschließlich der Bilddaten der extrahierten Bildansichten überträgt; und

eine Informationseinfügeeinheit, die Zusatzinformationen zum Identifizieren eines ersten Übertragungsmodus, in dem Bilddaten einer Vielzahl von Bildansichten übertragen werden, und eines zweiten Übertragungsmodus, in dem Bilddaten einer einzelnen Bildansicht übertragen werden, in den elementaren Videostrom einfügt, wobei die Zusatzinformationen Ansichtskonfigurationsinformationen einschließlich der Informationen, welche die Anzahl von Ansichten anzeigen, die von der Ansichtsauswahl (112) empfangen werden, und der Informationen, die eine relative Positionsbeziehung jeder Ansicht anzeigen, umfassen.

**2.** Bilddatenübertragungsvorrichtung nach Anspruch 1,
wobei die Informationseinfügeeinheit Zusatzinformationen, die den ersten Übertragungsmodus angeben, in den Videostrom in dem ersten Übertragungsmodus einfügt und Zusatzinformationen, die den zweiten Übertragungsmodus angeben, in den Videostrom in dem zweiten Übertragungsmodus einfügt.

**3.** Bilddatenübertragungsvorrichtung nach Anspruch 1,
wobei die Informationseinfügeeinheit Zusatzinformationen, die den ersten Übertragungsmodus angeben, in den Videostrom in dem ersten Übertragungsmodus einfügt und keine Zusatzinformationen in den Videostrom in dem zweiten Übertragungsmodus einfügt.

**4.** Bilddatenübertragungsvorrichtung nach Anspruch 1,
wobei die Informationseinfügeeinheit keine Zusatzinformationen in den Videostrom in dem ersten Übertragungsmodus einfügt und Zusatzinformationen, die den zweiten Übertragungsmodus angeben, in den Videostrom in dem zweiten Übertragungsmodus einfügt.

**5.** Bilddatenübertragungsvorrichtung nach Anspruch 1,
wobei die Übertragungseinheit einen Basisvideostrom einschließlich der ersten Bilddaten und einer vorbestimmten Anzahl zusätzlicher Videoströme einschließlich der zweiten Bilddaten, die zusammen mit den ersten Bilddaten in dem ersten Übertragungsmodus verwendet werden, überträgt und einen einzelnen Videostrom einschließlich der ersten Bilddaten in dem zweiten Übertragungsmodus überträgt.

**6.** Bilddatenübertragungsvorrichtung nach Anspruch 1,
wobei die Übertragungseinheit einen Basisvideostrom einschließlich der ersten Bilddaten und einer vorbestimmten Anzahl zusätzlicher Videoströme einschließlich der zweiten Bilddaten, die zusammen mit den ersten Bilddaten in dem ersten Übertragungsmodus verwendet werden, überträgt und einen Basisvideostrom einschließlich der ersten Bilddaten und einer vorbestimmten Anzahl zusätzlicher Videoströme im Wesentlichen einschließlich Bilddaten überträgt, die dieselben sind wie die ersten Bilddaten in dem zweiten Übertragungsmodus.

**7.** Bilddatenübertragungsverfahren, umfassend:

Ausgeben von Bilddaten einer Anzahl von N Ansichten;
Extrahieren aus der Anzahl von N Ansichten von zumindest den Bilddaten einer Ansicht des linken Endes, einer Ansicht des rechten Endes und einer Zwischenansicht;
einen Übertragungsschritt des Übertragens von einer oder einer Vielzahl von elementaren Videoströmen einschließlich der Bilddaten der extrahierten Bildansichten; und
einen Informationseinfügeschritt des Einfügens von Zusatzinformationen zum Identifizieren eines ersten Übertragungsmodus, in dem Bilddaten einer Vielzahl von Bildansichten übertragen werden, und eines zweiten Übertragungsmodus, in dem Bilddaten einer einzelnen Bildansicht übertragen werden, in den elementaren Videostrom, wobei die Zusatzinformationen Ansichtskonfigurationsinformationen einschließlich der Informationen, welche die Anzahl von N Ansichten angeben, und der Informationen, die eine relative Positionsbeziehung jeder Ansicht angeben, umfassen.

**8.** Bilddatenempfangsvorrichtung, umfassend:

eine Empfangseinheit, die einen oder mehrere Videoelementarströme einschließlich der Bilddaten einer vorbestimmten Anzahl von Bildansichten empfängt, die aus einer Anzahl N von Ansichten ausgewählt sind;
eine Übertragungsmodusidentifizierungseinheit, die einen ersten Übertragungsmodus, in dem Bilddaten von einer Vielzahl von Bildansichten übertragen werden, und einen zweiten Übertragungsmodus identifiziert, in dem Bilddaten einer einzelnen Bildansicht basierend auf in eine Schicht eines Videotransportstroms eingefügte Identifizierungsinformationen übertragen werden, die identifizieren, ob Ansichtskonfigurationsinformationen eingefügt sind oder nicht, und basierend auf den Ansichtskonfigurationsinformation, die Informationen, welche die Anzahl N von Ansichten angeben, und Informationen einschließen, die eine relative Positionsbeziehung jeder Ansicht angeben, und die in den empfangenen Videoelementarstrom eingefügt werden; eine Verarbeitungseinheit, die einen Prozess durchführt, der jedem Modus des empfangenen Videostroms basierend auf dem Modusidentifikationsergebnis entspricht, um so die Bilddaten der vorbestimmten Anzahl von Bildansichten zu erfassen, und eine Ansichtsinterpolationseinheit (219), die konfiguriert ist, um Bilddaten einer Anzahl von Ansichten zu interpolieren und zu generieren, die nicht von den Bilddaten der empfangenen vorbestimmten Anzahl von Ansichten übertragen werden.

9. Bilddatenempfangsvorrichtung nach Anspruch 8,
wobei die Übertragungsmodusidentifizierungseinheit den ersten Übertragungsmodus identifiziert, wenn Zusatzinformationen, die den ersten Übertragungsmodus angeben, in den empfangenen Videostrom eingefügt werden, und den zweiten Übertragungsmodus identifiziert, wenn Zusatzinformationen, die den zweiten Übertragungsmodus angeben, in den empfangenen Videostrom eingefügt werden.

10. Bilddatenempfangsvorrichtung nach Anspruch 8,
wobei die Übertragungsmodusidentifizierungseinheit den ersten Übertragungsmodus identifiziert, wenn Zusatzinformationen, die den ersten Übertragungsmodus angeben, in den empfangenen Videostrom eingefügt werden, und den zweiten Übertragungsmodus identifiziert, wenn die Zusatzinformationen nicht in den empfangenen Videostrom eingefügt werden.

11. Bilddatenempfangsvorrichtung nach Anspruch 8,
wobei die Übertragungsmodusidentifizierungseinheit den ersten Übertragungsmodus identifiziert, wenn die Zusatzinformationen nicht in den empfangenen Videostrom eingefügt werden, und den zweiten Übertragungsmodus identifiziert, wenn Zusatzinformationen, die den zweiten Übertragungsmodus anzeigen, in den empfangenen Videostrom eingefügt werden.

12. Bilddatenempfangsvorrichtung nach Anspruch 8,
wobei die Empfangseinheit einen Basisvideostrom einschließlich der ersten Bilddaten und einer vorbestimmten Anzahl zusätzlicher Videoströme einschließlich der zweiten Bilddaten, die zusammen mit den ersten Bilddaten in dem ersten Übertragungsmodus verwendet werden, empfängt und einen einzelnen Videostrom einschließlich der ersten Bilddaten in dem zweiten Übertragungsmodus empfängt, und
wobei die Verarbeitungseinheit den Basisvideostrom und die vorbestimmte Anzahl von zusätzlichen Videoströmen verarbeitet, um so die ersten Bilddaten und die zweiten Bilddaten in dem ersten Übertragungsmodus zu erfassen, und den einzelnen Videostrom verarbeitet, um so die ersten Bilddaten in dem zweiten Übertragungsmodus zu erfassen.

13. Bilddatenempfangsvorrichtung nach Anspruch 8,
wobei die Empfangseinheit einen Basisvideostrom einschließlich der ersten Bilddaten und einer vorbestimmten Anzahl zusätzlicher Videoströme einschließlich der zweiten Bilddaten, die zusammen mit den ersten Bilddaten in dem ersten Übertragungsmodus verwendet werden, empfängt und einen Basisvideostrom einschließlich der ersten Bilddaten und einer vorbestimmten Anzahl zusätzlicher Videoströme im Wesentlichen einschließlich Bilddaten empfängt, die dieselben sind wie die ersten Bilddaten in dem zweiten Übertragungsmodus, und
wobei die Verarbeitungseinheit den Basisvideostrom und die vorbestimmte Anzahl zusätzlicher Videoströme verarbeitet, um so die ersten Bilddaten und die zweiten Bilddaten in dem ersten Übertragungsmodus zu erfassen, und den Basisvideostrom verarbeitet, um so die ersten Bilddaten zu erfassen, ohne einen Prozess zum Erfassen der zweiten Bilddaten aus der vorbestimmten Anzahl von zusätzlichen Videoströmen in dem zweiten Übertragungsmodus durchzuführen.

14. Bilddatenempfangsverfahren, umfassend:

Empfangen eines oder mehrerer Videoelementarströme einschließlich der Bilddaten einer vorbestimmten Anzahl von Bildansichten, die aus einer Anzahl N von Ansichten ausgewählt sind;
Identifizieren eines ersten Übertragungsmodus, in dem Bilddaten von einer Vielzahl von Bildansichten übertragen werden, und eines zweiten Übertragungsmodus, in dem Bilddaten einer einzelnen Bildansicht basierend auf in eine Schicht eines Videotransportstroms eingefügte Identifizierungsinformationen übertragen werden, die identifizieren, ob Ansichtskonfigurationsinformationen eingefügt sind oder nicht, und basierend auf den Ansichtskonfigurationsinformation, die Informationen, welche die Anzahl N von Ansichten angeben, und Informationen einschließen, die eine relative Positionsbeziehung jeder Ansicht angeben und die in den empfangenen Videoelementarstrom eingefügt werden;
Durchführen eines Prozesses, der jedem Modus in dem empfangenen Videostrom basierend auf dem Modusidentifikationsergebnis entspricht, um so die Bilddaten der vorbestimmten Anzahl von Bildansichten zu erhalten, und
Interpolieren und Erzeugen von Bilddaten einer Anzahl von Ansichten, die nicht aus den Bilddaten der empfangenen vorbestimmten Anzahl von Ansichten übertragen werden.

**Revendications**

1. Dispositif de transmission de données d'image, comprenant :

des parties d'émission de données d'image (111-1 à 111-N) conçues pour émettre des données d'image d'un nombre de N vues ;
un sélecteur de vue (112) conçu pour recevoir des données d'image de N vues en provenance des N parties d'émission de données d'image (111-1 à 111-N) et pour extraire au moins des données d'image d'une vue d'extrémité gauche, d'une vue d'extrémité droite et d'une vue intermédiaire ;
une unité de transmission qui transmet un ou plusieurs flux vidéo élémentaires comprenant des données d'image des vues d'image extraites ; et
une unité d'insertion d'information qui insère, dans le flux vidéo élémentaire, une information auxiliaire pour identifier un premier mode de transmission dans lequel des données d'image de plusieurs vues d'image sont transmises, et un second mode de transmission dans lequel des données d'image d'une seule vue d'image sont transmises, l'information auxiliaire comprenant une information de configuration de vue incluant une information indiquant le nombre de vues reçues par le sélecteur de vue (112) et une information indiquant une relation de position relative de chaque vue.

2. Dispositif de transmission de données d'image selon la revendication 1,
dans lequel l'unité d'insertion d'information insère, dans le flux vidéo dans le premier mode de transmission, une information auxiliaire indiquant le premier mode de transmission, et insère, dans le flux vidéo dans le second mode de transmission, une information auxiliaire indiquant le second mode de transmission.

3. Dispositif de transmission de données d'image selon la revendication 1,
dans lequel l'unité d'insertion d'information insère, dans le flux vidéo dans le premier mode de transmission, une information auxiliaire indiquant le premier mode de transmission, et n'insère pas l'information auxiliaire dans le flux vidéo dans le second mode de transmission.

4. Dispositif de transmission de données d'image selon la revendication 1,
dans lequel l'unité d'insertion d'information n'insère pas l'information auxiliaire dans le flux vidéo dans le premier mode de transmission, et insère, dans le flux vidéo dans le second mode de transmission, une information auxiliaire indiquant le second mode de transmission.

5. Dispositif de transmission de données d'image selon la revendication 1,
dans lequel l'unité de transmission transmet un flux vidéo de base incluant des premières données d'image et un nombre prédéterminé de flux vidéo supplémentaires incluant des secondes données d'image utilisées conjointement avec les premières données d'image dans le premier mode de transmission, et transmet un seul flux vidéo incluant les premières données d'image dans le second mode de transmission.

6. Dispositif de transmission de données d'image selon la revendication 1,
dans lequel l'unité de transmission transmet un flux vidéo de base incluant des premières données d'image et un nombre prédéterminé de flux vidéo supplémentaires incluant des secondes données d'image utilisées conjointement avec les premières données d'image dans le premier mode de transmission, et transmet un flux vidéo de base incluant des premières données d'image et un nombre prédéterminé de flux vidéo supplémentaires incluant sensiblement des données d'image qui sont identiques aux premières données d'image dans le second mode de transmission.

7. Procédé de transmission de données d'image, comprenant :

émettre des données d'image d'un nombre de N vues ;
extraire du nombre de N vues au moins des données d'image d'une vue d'extrémité gauche, d'une vue d'extrémité droite et d'une vue intermédiaire ;
une étape de transmission consistant à transmettre un ou plusieurs flux vidéo élémentaires comprenant des données d'image des vues d'image extraites ; et
une étape d'insertion consistant à insérer, dans le flux vidéo élémentaire, une information auxiliaire pour identifier un premier mode de transmission dans lequel des données d'image de plusieurs vues d'image sont transmises, et un second mode de transmission dans lequel des données d'image d'une seule vue d'image sont transmises, l'information auxiliaire comprenant une information de configuration de vue incluant une information indiquant le nombre N de vues et une information indiquant une relation de position relative de chaque vue.

8. Dispositif de réception de données d'image, comprenant :

une unité de réception qui reçoit un ou plusieurs flux vidéo élémentaires comprenant des données d'image d'un nombre prédéterminé de vues d'image sélectionnées parmi un nombre N de vues ;
une unité d'identification de mode de transmission qui identifie un premier mode de transmission, dans lequel des données d'image de plusieurs vues d'image sont transmises, et un second mode de transmission, dans lequel des données d'image d'une seule vue d'image sont transmises, sur la base d'une information d'identification insérée dans une couche d'un flux vidéo de transport identifiant si une information de configuration de vue est insérée ou non, et sur la base de l'information de configuration de vue qui inclut une information indiquant le nombre N de vues et une information indiquant une relation de position relative de chaque vue, et qui est insérée dans le flux vidéo élémentaire reçu ; une unité de traitement qui réalise un processus correspondant à chaque mode sur le flux vidéo reçu sur la base du résultat d'identification de mode, de manière à acquérir les données d'image du nombre prédéterminé de vues d'image, et une unité d'interpolation de vue (219) conçue pour interpoler et générer des données d'image d'un nombre de vues qui ne sont pas transmises, à partir des données d'image du nombre prédéterminé reçu de vues.

9. Dispositif de réception de données d'image selon la revendication 8,
dans lequel l'unité d'identification de mode de transmission identifie le premier mode de transmission quand une information auxiliaire indiquant le premier mode de transmission est insérée dans le flux vidéo reçu, et identifie le second mode de transmission quand une information auxiliaire indiquant le second mode de transmission est insérée dans le flux vidéo reçu.

10. Dispositif de réception de données d'image selon la revendication 8,
dans lequel l'unité d'identification de mode de transmission identifie le premier mode de transmission quand une information auxiliaire indiquant le premier mode de transmission est insérée dans le flux vidéo reçu, et identifie le second mode de transmission quand l'information auxiliaire n'est pas insérée dans le flux vidéo reçu.

11. Dispositif de réception de données d'image selon la revendication 8,
dans lequel l'unité d'identification de mode de transmission identifie le premier mode de transmission quand l'information auxiliaire n'est pas insérée dans le flux vidéo reçu, et identifie le second mode de transmission quand une information auxiliaire indiquant le second mode de transmission est insérée dans le flux vidéo reçu.

12. Dispositif de réception de données d'image selon la revendication 8,
dans lequel l'unité de réception reçoit un flux vidéo de base incluant des premières données d'image et un nombre prédéterminé de flux vidéo supplémentaires incluant des secondes données d'image utilisées conjointement avec les premières données d'image dans le premier mode de transmission, et reçoit un seul flux vidéo incluant les premières données d'image dans le second mode de transmission,
et
dans lequel l'unité de traitement traite le flux vidéo de base et le nombre prédéterminé de flux vidéo supplémentaires de manière à acquérir les premières données d'image et les secondes données d'image dans le premier mode de transmission, et traite le seul flux vidéo de manière à acquérir les premières données d'image dans le second mode de transmission.

13. Dispositif de réception de données d'image selon la revendication 8,
dans lequel l'unité de réception reçoit un flux vidéo de base incluant des premières données d'image et un nombre prédéterminé de flux vidéo supplémentaires incluant des secondes données d'image utilisées conjointement avec les premières données d'image dans le premier mode de transmission, et reçoit un flux vidéo de base incluant des premières données d'image et un nombre prédéterminé de flux vidéo supplémentaires incluant sensiblement des données d'image qui sont identiques aux premières données d'image dans le second mode de transmission, et
dans lequel l'unité de traitement traite le flux vidéo de base et le nombre prédéterminé de flux vidéo supplémentaires de manière à acquérir les premières données d'image et les secondes données d'image dans le premier mode de transmission, et traite le flux vidéo de base de manière à acquérir les premières données d'image sans réaliser de processus d'acquisition des secondes données d'image à partir du nombre prédéterminé de flux vidéo supplémentaires dans le second mode de transmission.

14. Procédé de réception de données d'image, comprenant :

recevoir un ou plusieurs flux vidéo élémentaires comprenant des données d'image d'un nombre prédéterminé de vues d'image sélectionnées parmi un nombre N de vues ;

identifier un premier mode de transmission, dans lequel des données d'image de plusieurs vues d'image sont transmises, et un second mode de transmission, dans lequel des données d'image d'une seule vue d'image sont transmises, sur la base d'une information d'identification insérée dans une couche d'un flux vidéo de transport identifiant si une information de configuration de vue est insérée ou non, et sur la base de l'information de configuration de vue qui inclut une information indiquant le nombre N de vues et une information indiquant une relation de position relative de chaque vue, et qui est insérée dans le flux vidéo élémentaire reçu ;

réaliser un processus correspondant à chaque mode sur le flux vidéo reçu sur la base du résultat d'identification de mode, de manière à acquérir les données d'image du nombre prédéterminé de vues d'image ; et

interpoler et générer des données d'image d'un nombre de vues qui ne sont pas transmises, à partir des données d'image du nombre prédéterminé reçu de vues.

# FIG. 1

# FIG. 2

# FIG. 3

# FIG. 4

## (a)

| AUD (0x09) | SPS (0x07) | PPS (0x08) | SEI (0x06) | Coded Slice (0x05 TO 0x01) | Subset SPS (0x0f) | PPS (0x08) | SEI (0x06) | Coded Slice (0x05 TO 0x01) | - - - |

HEXADECIMAL DIGIT INDICATES NAL unit type

1 access unit

## (b)

| AUD (0x09) | SPS (0x07) | PPS (0x08) | SEI (0x06) | Coded Slice (0x05 TO 0x01) | View Separation Marker (0x23) | Subset SPS (0x0f) | PPS (0x08) | SEI (0x06) | Coded Slice (0x05 TO 0x01) | - - - |

1 access unit

EP 2 645 725 B1

# FIG. 5

## (a) LEADING ACCESS UNIT OF GOP

| AUD | SPS 1st sub stream | PPS 1st sub stream | SEI 1st sub stream | Coded Slice st1 sub stream | View Separation Marker | Subset SPS 2nd Sub stream | PPS 2nd Sub stream | SEI 2nd sub stream | Coded Slice 2nd sub Stream | View Separation Marker | Subset SPS 3rd Sub stream | PPS 3rd Sub stream |
|---|---|---|---|---|---|---|---|---|---|---|---|---|

| SEI 3rd sub stream | Coded Slice 3rd sub Stream |
|---|---|

1 access unit

EP 2 645 725 B1

## (b) ACCESS UNIT OTHER THAN LEADING ACCESS UNIT OF GOP

| AUD | PPS 1st sub stream | SEI 1st sub stream | Coded Slice 1st sub stream | View Separation Marker | PPS 2nd Sub stream | SEI 2nd sub stream | Coded Slice 2nd sub Stream | View Separation Marker | PPS 3rd Sub stream | SEI 3rd sub stream | Coded Slice 3rd sub Stream |
|---|---|---|---|---|---|---|---|---|---|---|---|

1 access unit

# FIG. 6

# FIG. 7

110

EP 2 645 725 B1

# FIG. 8

# FIG. 9

DISPARITY DATA (FOR EACH BLOCK)

BLOCK

# FIG. 10

EP 2 645 725 B1

Disparity N-th Block  DPn

$$DPn = \min \left( \sum abs( differ (Dj - Di)) \right)$$

BLOCK

i-th Viewdata picture

j-th Viewdata picture

# FIG. 11

(a)

DISPARITY DATA OF
BLOCK UNIT

(b)

X(A,B) = median ( X,A,B)
X(A,C) = median ( X,A,C)
X(B,D) = median ( X,B,D)
X(C,D) = median ( X,C,D)

# FIG. 12

Multiview_stream_configuration_descriptor

| Syntax | No. of Bits | Format |
|---|---|---|
| multiview_stream_configuration_descriptor() { | | |
| multiview_stream_configuration_tag | 8 | uimslbf |
| multiview_stream_configuration_length | 8 | uimslbf |
| multiview_stream_checkflag | 1 | bslbf |
| reserved | 7 | bslbf |
| } | | |

# FIG. 13

Semantics of multiview_stream_configuration_descriptor

| | |
|---|---|
| **multiview_stream_checkflag** (1) | Specifying if the 3D service is made of multiple streams and the information is embedded in video stream. If multiview_stream_checkflag is set to '1', decoder is supposed to check userdata_for_multiview_stream_configuration in video stream. If multiview_stream_checkflag is reset to '0', no guidance is noted. |

EP 2 645 725 B1

# FIG. 14

SYNTAX OF Multiview_stream_configuration_info()

| Syntax | No. of Bits | Format |
|---|---|---|
| multiview_stream_configuration_info() { | | |
|   reserved | 7 | bslbf |
|   3D_flag | 1 | bslbf |
|   if (3D_flag){ | | |
|     view_count | 4 | bslbf |
|     single_view_es_flag | 1 | bslbf |
|     view_interleaving_flag | 1 | bslbf |
|     if( !view_interleaving_flag) { | | |
|       reserved | 4 | bslbf |
|       view_allocation | 4 | bslbf |
|     } | | |
|     else { | | |
|       reserved | 4 | bslbf |
|       view_pair_position_id | 3 | bslbf |
|       view_interleaving_type | 1 | bslbf |
|     } | | |
|     indication_of_picture_size_scaling_horizontal | 4 | bslbf |
|     indication_of_picture_size_scaling_vertical | 4 | bslbf |
|   display_flag | 1 | bslbf |
|   reserved | 1 | bslbf |
|   } | | |
| } | | |

EP 2 645 725 B1

# FIG. 15    multiview_stream_configuration_info  semantics

**3D_flag**    (1)

INDICATES WHETHER CODED VIDEO FORMS 3D.

'1'    PORTION OF 3D

'0'    NOT PORTION OF 3D

**View_count**    (4)

INDICATES NUMBER OF views FORMING 3D SERVICE.  MINIMUM VALUE 1, MAXIMUM VALUE 15.

**single_view_es_flag**    (1)

INDICATES WHETHER A PLURALITY OF pictures FORMED BY DIFFERENT views IN 1 AU ARE CODED IN 1 ES.

"1" IN CASE WHERE views_interleaved AND ONLY ONE picture IS PRESENT IN 1 AU.

'1'    ONLY ONE view IS CODED IN 1 ES.

'0'    TWO OR MORE views ARE CODED IN 1 ES.

"0" IN CASE WHERE base AND dependent streams OF MVC ARE CODED IN 1 ES.

**View_interleaving_flag**    (1)

INDICATES WHETHER A PLURALITY OF view data ITEMS ARE INTERLEAVED IN SINGLE picture.

'1'    INDICATES THAT interleaved TWO views FORM SCREEN SPLIT.

'0'    interleaving IS NOT PERFORMED

**view_allocation**    (4)

INDICATES view ALLOCATION OF CORRESPONDING view STREAM.

| | |
|---|---|
| 0000 | center view |
| 0001 | 1st left view next to center |
| 0010 | 1st right view next to center |
| 0011 | 2nd left view next to center |
| 0100 | 2nd  right view next to center |
| 0101 | 3rd left  view  next to center |
| 0110 | 3rd right view next to center |
| 0111 | 4th left view next to center |
| 1000 | 4th right view next to center |
| other values | reserved |

EP 2 645 725 B1

# FIG. 16

## multiview_stream_configuration_info  semantics

EP 2 645 725 B1

**view_pair_position_id**  (3)

INDICATES RELATIVE view POSITIONS OF TWO views IN OVERALL views.

(IN SCANNING ORDER, EARLIER POSITION IS SET TO Left AND LATER POSITION IS SET TO right)

| | |
|---|---|
| 000 | INDICATES PAIR OF TWO views AT BOTH ENDS |
| 001 | INDICATES PAIR OF TWO views INWARD BY ONE FROM BOTH ENDS |
| 010 | INDICATES PAIR OF TWO views INWARD BY TWO FROM BOTH ENDS |
| 011 | INDICATES PAIR OF TWO views INWARD BY THREE FROM BOTH ENDS |
| 100 | INDICATES PAIR OF TWO views INWARD BY FOUR FROM BOTH ENDS |
| others | reserved |

**view_interleaving_type**  (1)

| | |
|---|---|
| | INDICATES INTERLEAVING type. |
| '1' | Side-by-Side |
| '0' | Top&Bottom |

# FIG. 17

```
display_flag  (1)
        INDICATES WHETHER CORRESPONDING view IS ESSENTIALLY DISPLAYED WHEN IMAGE IS DISPLAYED.
                '1'             ESSENTIALLY DISPLAYED
                '0'             NOT ESSENTIALLY DISPLAYED


indication_of_picture_size_scaling _horizontal (4)
        INDICATES HORIZONTAL PIXEL RATIO OF DECODED IMAGE RELATIVE TO FULL HD(1920).
                '0000'          100 %
                '0001'          80 %
                '0010'          75 %
                '0011'          66 %
                '0100'          50 %
                '0101'          33 %
                '0110'          25 %
                '0111'          20 %
                others          reserved


indication_of_picture_size_scaling _vertical (4)
        INDICATES VERTICAL PIXEL RATIO OF DECODED IMAGE RELATIVE TO FULL HD(1080).
                '0000'          100 %
                '0001'          80 %
                '0010'          75 %
                '0011'          66 %
                '0100'          50 %
                '0101'          33 %
                '0110'          25 %
                '0111'          20 %
                others          reserved
```

EP 2 645 725 B1

# FIG. 18

View position various example

| Description | Parameters |
|---|---|
| **(1)** NUMBER OF views IS 2, AND view pair ARE LOCATED ONLY AT BOTH ENDS<br><br>View 1  View 2 | view_count=2<br>view_pair_position_id= 000 |
| **(2)** NUMBER OF views IS 4, AND view pair ARE LOCATED AT BOTH ENDS<br><br>View 1          View 2 | view_count=4<br>view_pair_position_id= 000 |
| **(3)** NUMBER OF views IS 4, AND view pair ARE LOCATED INWARD BY ONE FROM BOTH ENDS (*)<br><br>View 1  View 2 | view_count=4<br>view_pair_position_id= 001 |
| **(4)** NUMBER OF views IS 5, AND view pair ARE LOCATED AT BOTH ENDS<br><br>View 1          View 2 | view_count=5<br>view_pair_position_id= 000 |
| **(5)** NUMBER OF views IS 9, AND view pair ARE LOCATED AT BOTH ENDS<br><br>View 1                    View 2 | view_count=9<br>view_pair_position_id= 000 |
| **(6)** NUMBER OF views IS 9, AND view pair ARE LOCATED INWARD BY ONE FROM BOTH ENDS (*)<br><br>View 1          View 2 | view_count=9<br>view_pair_position_id= 010 |

EP 2 645 725 B1

# FIG. 19

Substream 1 , view_pair_position_id= 000

View 1                     View 2

Substream 2 , view_pair_position_id= 010

View 3             View 4

1         2        3

## FIG. 20

Substream 1 view_pair_position_id= 000

Substream 2 view_pair_position_id= 010

POSITIONAL RELATIONSHIP
OF VIEWS TO BE GENERATED

View 1   View 2   View 3   View 4   View_A   View_C   View_E   View_D   View_B

# FIG. 21

LEADING ACCESS UNIT OF GOP

| AU Delimiter (ONE) | SPS (ONE) | PPS (ONE) | SEIs | Slices(Primary Coded Picture) (ONE OR MORE) | Filler data (ONE) | End of sequence (ONE) |
|---|---|---|---|---|---|---|

(a)

| Buffering period SEI message (ONE) | Recovery point SEI message (ESSENTIAL ONLY IN CASE OF open GOP, ONE) | Picture timing SEI message (ONE) | Pan-scan rectangle SEI message (ONE) | Decoded reference Picture marking SEI message (ONE) | Multiview Stream configuration SEI message (ONE) |
|---|---|---|---|---|---|

ACCESS UNITS OTHER THAN LEADING ACCESS UNIT OF GOP

| AU Delimiter (ONE) | PPS (ONE) | SEIs | Slices(Primary Coded Picture) (ONE OR MORE) | Filler data (ONE) | End of sequence (ONE) |
|---|---|---|---|---|---|

(b)

| Picture timing SEI message (ONE) | Pan-scan rectangle SEI message (ONE) | Decoded reference Picture marking SEI message (ONE) | Multiview Stream configuration SEI message (ONE) |
|---|---|---|---|

☐ : ESSENTIAL

⊡ : NOT ESSENTIAL

EP 2 645 725 B1

## FIG. 22

(a)

| Syntax | No. of Bits | Format |
|---|---|---|
| user_data_unregistered (size) { | | |
| uuid_iso_iec_11578 | 128 | uimslbf |
| for( i = 16; i < payloadSize; i++ ) | | |
| **user_data_payload_byte** | 8 | bslbf |
| } | | |

(b)

| Syntax | No. of Bits | Format |
|---|---|---|
| userdata_for_multiview_stream_configuration( ) { | | |
| userdata_id | 16 | uimslbf |
| Multiview_stream_configuration_length | 8 | bslbf |
| Multiview_stream_configuration_info( ) | | |
| } | | |

# FIG. 23

(a)

```
user_data() {
        user_data_start_code                                          32
        Stereo_Video_Format_Signaling_identifier                      32
        while( nextbits() != '0000 0000 0000 0000 0000 0001' ) {
                Multiview_stream_configuration()
        }
        next_start_code()
}
```

(b)

| Syntax | No. of Bits | Identifier |
|---|---|---|
| Multiview_stream_configuration() {<br>        Multiview_stream_configuration_Length<br>        Multiview_stream_configuration_info()<br>} | 8 | uimsbf |

# FIG. 24

Transport Stream

PMT

EIT

Multivew_stream_configuration descriptor **multiview_stream_checkflag = 1**

video ES loop

Elementary PID (PID1)
Multiview_stream_configuration descriptor **multiview_stream_checkflag= 1**

Elementary PID (PID2)
Multiview_stream_configuration descriptor **multiview_stream_checkflag= 1**

Elementary PID (PID3)
Multiview_stream_configuration descriptor **multiview_stream_checkflag= 1**

PID1: video PES1
Userdata
Multiview_stream_configuration_info
3D_flag = 1,
View_count= 5
single_view_es_flag = 1
View_interleaving_flag= 0
view_allocation = 0000

PID2: video PES2
Userdata
Multiview_stream_configuration_info
3D_flag = 1,
View_count= 5
single_view_es_flag = 1
View_interleaving_flag= 0
view_allocation = 0011

PID3: video PES3
Userdata
Multiview_stream_configuration_info
3D_flag = 1,
View_count= 5
single_view_es_flag = 1
View_interleaving_flag= 0
view_allocation = 0100

# FIG. 25

Transport Stream

PMT

EIT

Multivew_stream_configuration descriptor
**multiview_stream_checkflag 1**

video ES loop

Elementary PID (PID1)
Multiview_stream_configuration descriptor
**multiview_stream_checkflag 1**

Elementary PID (PID2)
Multiview_stream_configuration descriptor
**multiview_stream_checkflag 1**

PID1: video PES1

Userdata
Multiview_stream_configuration_info
3D_flag = 1,

| | |
|---|---|
| View_count= | 5 |
| single_view_es_flag = | 1 |
| View_interleaving_flag= | 0 |
| view_allocation = | 0000 |

PID2: video PES2

Userdata
Multiview_stream_configuration_info
3D_flag = 1,

| | |
|---|---|
| View_count= | 5 |
| single_view_es_flag = | 1 |
| View_interleaving_flag= | 1 |
| View_pair_position_id= | 000 |
| view_interleaving_type= | 1 |

# FIG. 26

Transport Stream

PMT

EIT

Multiview_stream_configuration descriptor
**multiview_stream_checkflag = 1**

video ES loop

Elementary PID (PID1)
Multiview_stream_configuration descriptor
**multiview_stream_checkflag= 1**

PID1: video PES1

Userdata
Multiview_stream_configuration_info
3D_flag = 1,

| View_count= | 5 |
| single_view_es_flag = | 0 |
| View_interleaving_flag= | 0 |
| view_allocation = | 0000 |

Userdata
Multiview_stream_configuration_info
3D_flag = 1,

| View_count= | 5 |
| single_view_es_flag = | 0 |
| View_interleaving_flag= | 0 |
| view_allocation = | 0011 |

Userdata
Multiview_stream_configuration_info
3D_flag = 1,

| View_count= | 5 |
| single_view_es_flag = | 0 |
| View_interleaving_flag= | 0 |
| view_allocation = | 0100 |

EP 2 645 725 B1

FIG. 27

EP 2 645 725 B1

# FIG. 28

| RESOLUTION OF DECODED IMAGE DATA | 960 * 1080 | 1920 * 1080 | 1920 * 2160 |
|---|---|---|---|
| MONITOR RESOLUTION | 1920 * 1080 | 1920 * 1080 | 3840 * 2160 |
| NUMBER OF DISPLAYED VIEWS | 4 | 4 | 8 |
| SCALING RATIO | 1/2 | 1/4 | 1/4 |

# FIG. 29

Current view = center view
Target view1 = left view
Target view2 = right view

Target occluded

Target view1

views TO BE INTERPOLATED
AND GENERATED

Current view

Target overlapped

views TO BE INTERPOLATED
AND GENERATED

Target view2

Target occluded

# FIG. 30

# FIG. 31

EP 2 645 725 B1

# FIG. 32

START —— ST1

ST2
IS THERE
SEI IN BASE STREAM? —— NO

YES

ST3
DOES
INFORMATION
IN SEI INDICATE
3D MODE? —— NO

YES

ST4
MANAGE RESPECTIVE
INPUT BUFFERS OF
BASE STREAM AND
ADDITIONAL STREAM

ST7
IT IS DETERMINED THAT
THERE IS NO ADDITIONAL
STREAM, AND MANAGE
ONLY INPUT BUFFER OF
BASE STREAM

ST5
DECODE BASE STREAM
AND ADDITIONAL STREAM,
RESPECTIVELY

ST8
DECODE
ONLY BASE STREAM

ST6
PERFORM
3D DISPLAY PROCESS

ST9
PERFORM
2D DISPLAY PROCESS

# FIG. 33

Time →

**TS**

**[PID 01]  ES1**
Stream_Type
=0x1B

tn-1 | tn | tn+1

1st stream AVC | 1st stream AVC | 1st stream AVC

3D_flag= 1 | 3D_flag= 0 | 3D_flag= 1

**[PID 10]  ES2**
Stream_Type
=0x20

2nd stream MVC

2nd stream MVC

**[PID 11]  ES3**
Stream_Type
=0x20

3rd stream MVC

3rd stream MVC

3D | 2D | 3D

EP 2 645 725 B1

# FIG. 34

IN CASE WHERE THERE IS NO AUXILIARY
INFORMATION FOR IDENTIFICATION OF MODE

AU : | PPS | Substream SEIs | Slice |

PERIOD Tn REPRESENTS PROGRAM OR SCENE.

EP 2 645 725 B1

# FIG. 35

IN CASE WHERE THERE IS AUXILIARY
INFORMATION FOR IDENTIFICATION OF MODE

PERIOD Tn REPRESENTS PROGRAM OR SCENE.

EP 2 645 725 B1

FIG. 36

200A

# FIG. 37

| multiview_view_position( payloadSize ) { | |
|---|---|
| num_views_minus1 | ue(v) |
| for( i = 0; i <= num_views_minus1; i++) { | |
| view_position[ i ] | ue(v) |
| additional_extension_flag | u(1) |
| } | |
| } | |

# FIG. 38

LEADING ACCESS UNIT OF GOP

| AU Delimiter (ONE) | SPS (ONE) | PPS (ONE) | SEIs | Slices(Primary Coded Picture) (ONE OR MORE) | Filler data (ONE) | End of sequence (ONE) |
|---|---|---|---|---|---|---|

(a)

| Buffering period SEI message (ONE) | Recovery point SEI message (ESSENTIAL ONLY IN CASE OF open GOP, ONE) | Picture timing SEI message (ONE) | Pan-scan rectangle SEI message (ONE) | Decoded reference Picture marking SEI message (ONE) | Multiview view Position SEI message (ONE) |
|---|---|---|---|---|---|

ACCESS UNITS OTHER THAN LEADING ACCESS UNIT OF GOP

| AU Delimiter (ONE) | PPS (ONE) | SEIs | Slices(Primary Coded Picture) (ONE OR MORE) | Filler data (ONE) | End of sequence (ONE) |
|---|---|---|---|---|---|

(b)

| Picture timing SEI message (ONE) | Pan-scan rectangle SEI message (ONE) | Decoded reference Picture marking SEI message (ONE) | Multiview view Position SEI message (ONE) |
|---|---|---|---|

☐ : ESSENTIAL

[ ] : NOT ESSENTIAL

EP 2 645 725 B1

FIG. 39

# FIG. 40

# FIG. 41

START — ST11

ST12

IS THERE
SEI IN BASE STREAM?

NO

YES

ST13

MANAGE RESPECTIVE
INPUT BUFFERS OF
BASE STREAM AND
ADDITIONAL STREAM

ST16

IT IS DETERMINED THAT
THERE IS NO ADDITIONAL
STREAM, AND MANAGE
ONLY INPUT BUFFER OF
BASE STREAM

ST14

DECODE BASE STREAM
AND ADDITIONAL STREAM,
RESPECTIVELY

ST17

DECODE
ONLY BASE STREAM

ST15

PERFORM
3D DISPLAY PROCESS

ST18

PERFORM
2D DISPLAY PROCESS

# FIG. 42

Time →

TS

|  | tn-1 | tn | tn+1 |

**[PID 01]** **ES1**
Stream_Type
=0x1B

1st stream AVC | 1st stream AVC | 1st stream AVC

**view_position[0] = 1**
**view_position[1] = 0**
**view_position[2] = 2**

**view_position[0] = 1**
**view_position[1] = 0**
**view_position[2] = 2**

**[PID 10]** **ES2**
Stream_Type
=0x20

2nd stream
MVC

2nd stream
MVC

**[PID 11]** **ES3**
Stream_Type
=0x20

3rd stream
MVC

3rd stream
MVC

3D | 2D | 3D

EP 2 645 725 B1

# FIG. 43

IN CASE WHERE THERE IS AUXILIARY
INFORMATION FOR IDENTIFICATION OF MODE

| PERIOD T1 (3D) | PERIOD T2 (2D) | PERIOD T3 (3D) |

Stream_type = 0x1B

Stream_type = 0x20

SPS

SPS

SPS

3D | AU    3D | AU    3D | AU

SSSPS | AU    AU    AU

AU    AU    AU

SSSPS | AU

3D

(T2)

2D

3D

AU : PPS | Substream SEIs | Slice

3D : AUXILIARY INFORMATION
INDICATING 3D

PERIOD Tn REPRESENTS PROGRAM OR SCENE.

# FIG. 44

START — ST21

ST22
IS THERE A TYPE SEI IN BASE STREAM? — NO

YES

ST23
DOES INFORMATION IN A TYPE SEI INDICATE 3D MODE? — NO

YES

ST27
IS THERE B TYPE SEI IN BASE STREAM? — NO

YES

ST24
MANAGE RESPECTIVE INPUT BUFFERS OF BASE STREAM AND ADDITIONAL STREAM

ST28
IT IS DETERMINED THAT THERE IS NO ADDITIONAL STREAM, AND MANAGE ONLY INPUT BUFFER OF BASE STREAM

ST25
DECODE BASE STREAM AND ADDITIONAL STREAM, RESPECTIVELY

ST29
DECODE ONLY BASE STREAM

ST26
PERFORM 3D DISPLAY PROCESS

ST30
PERFORM 2D DISPLAY PROCESS

# FIG. 45

frame_packing_arrangement_data()  in video userdata

| Syntax | No. of bits | Format |
|---|---|---|
| frame_packing_arrangement_data() { | | |
|     frame_packing_user_data_identifier | 32 | bslbf |
|     remaining_data_length | 8 | uimsbf |
|   reserved_bit | 1 | uimsbf |
|    arrangement_type | 7 | bslbf |
|   reserved_data | 16 | bSlbf |
|   for ( i = 3; i < remaining_data_length; i + + ) | | |
|     additional_reserved_data_byte | 8 | bslbf |
| } | | |

EP 2 645 725 B1

# FIG. 46

| arrangement_type | Meaning |
|---|---|
| 0000011 | stereo side by side |
| 0000100 | stereo top and bottom |
| 0001000 | 2D video |
| other values | reserved for possible future extensions defined by ITU-T \| ISO/IEC |

# FIG. 47

```
user_data() {
        user_data_start_code                          32        bslbf
        frame_packing_arrangement_data()
}
```

# FIG. 48

EP 2 645 725 B1

# FIG. 49

# FIG. 50

START — ST31

ST32

IS AUXILIARY INFORMATION INDICATING 2D MODE INSERTED INTO BASE STREAM?

YES

NO

ST33

MANAGE RESPECTIVE INPUT BUFFERS OF BASE STREAM AND ADDITIONAL STREAM

ST34

DECODE BASE STREAM AND ADDITIONAL STREAM, RESPECTIVELY

ST35

PERFORM 3D DISPLAY PROCESS

ST36

IT IS DETERMINED THAT THERE IS NO ADDITIONAL STREAM, AND MANAGE ONLY INPUT BUFFER OF BASE STREAM

ST37

DECODE ONLY BASE STREAM

ST38

PERFORM 2D DISPLAY PROCESS

# FIG. 51

Time →

TS

tn-1 | tn | tn+1

[PID 01] **ES1**
Stream_Type
=0x02

1st stream MPEG2 | 1st stream MPEG2 | 1st stream MPEG2

arrangement_type = "2D"

[PID 10] **ES2**
Stream_Type
=0x23

2nd stream
AVC

2nd stream
AVC

[PID 11] **ES3**
Stream_Type
=0x23

3rd stream
AVC

3rd stream
AVC

3D | 2D | 3D

EP 2 645 725 B1

# FIG. 52

IN CASE WHERE THERE IS AUXILIARY
INFORMATION FOR IDENTIFICATION OF MODE

PERIOD Tn REPRESENTS PROGRAM OR SCENE.

EP 2 645 725 B1

# FIG. 53

1920                1920

1080

**Left**                    **Right**

FIG. 54

110B

# FIG. 55

# FIG. 56

EP 2 645 725 B1

# FIG. 57

Time

3D PERIOD       2D PERIOD    3D PERIOD

ES1

SEI massage

3D

3D

3D

AU 001 | AU 002 | AU 003 | AU 004 | AU 005 | AU 006 | AU 007 | AU 008 | AU 009 | AU 010 | AU 011 | AU 012 | AU 013 | AU 014 | AU 015 | AU 016

ES2

AU 001 | AU 002 | AU 003 | AU 004 | AU 005 | AU 006 | AU 007 | AU 008 | AU 009 | AU 015 | AU 016

EP 2 645 725 B1

# FIG. 58

Time →

TS

| tn-1 | tn | tn+1 |

[PID 01] ES1
Stream_Type
=0x1B

1st stream AVC | 1st stream AVC | 1st stream AVC

view_position[0] = 0
view_position[1] = 1

view_position[0] = 0
view_position[1] = 1

[PID 11] ES2

Stream_Type
=0x20

2nd stream
MVC

2nd stream
MVC

3D       2D       3D

# FIG. 59

## (a) CASE A

## (b) CASE B

## (c) CASE C

AU | : PPS | Substream SEIs | Slice          3D : 3D signaling          2D : 2D signaling

EP 2 645 725 B1

# FIG. 60

Time →

| 3D PERIOD | 2D PERIOD | 3D PERIOD |

SEI massage

**ES1**
| 3D | 3D | 3D | 3D | 3D | 3D | 3D | 3D | 3D | 2D | 2D | 2D | 2D | 2D | 3D | 3D |
| AU 001 | AU 002 | AU 003 | AU 004 | AU 005 | AU 006 | AU 007 | AU 008 | AU 009 | AU 010 | AU 011 | AU 012 | AU 013 | AU 014 | AU 015 | AU 016 |

**ES2**
| AU 001 | AU 002 | AU 003 | AU 004 | AU 005 | AU 006 | AU 007 | AU 008 | AU 009 | AU 010 | AU 011 | AU 012 | AU 013 | AU 014 | AU 015 | AU 016 |

**ES3**
| AU 001 | AU 002 | AU 003 | AU 004 | AU 005 | AU 006 | AU 007 | AU 008 | AU 009 | AU 010 | AU 011 | AU 012 | AU 013 | AU 014 | AU 015 | AU 016 |

EP 2 645 725 B1

# FIG. 61

# FIG. 62

```
                    ┌─────────────┐ ST41
                    │    START    │
                    └─────────────┘
                           │
                           ▼
                      ╱ IS THERE ╲        ST42
                   ╱   SEI IN      ╲  NO
                   ╲  BASE STREAM? ╱──────────────────┐
                      ╲         ╱                      │
                           │ YES                       │
                           ▼                           │
                      ╱   DOES    ╲      ST43           │
                   ╱  INFORMATION  ╲  NO                │
                   ╲  IN SEI INDICATE ╱────────────┐   │
                      ╲  3D MODE? ╱                 │   │
                           │ YES                    │   │
                           ▼                        ▼   ▼
```

|  |  |
|---|---|
| ST44 | ST47 |
| MANAGE RESPECTIVE INPUT BUFFERS OF BASE STREAM AND ADDITIONAL STREAM | IT IS DETERMINED THAT THERE IS NO ADDITIONAL STREAM, AND MANAGE ONLY INPUT BUFFER OF BASE STREAM |
| ST34 | ST48 |
| DECODE BASE STREAM AND ADDITIONAL STREAM, RESPECTIVELY | DECODE ONLY BASE STREAM |
| ST46 | ST49 |
| PERFORM 3D DISPLAY PROCESS | PERFORM 2D DISPLAY PROCESS |

# FIG. 63 PROCESS OF RECEIVED PACKET IN RECEIVER (IN CASE OF 3D STREAM)

| NAL packet | NAL packet | NAL packet | NAL packet | NAL packet | NAL packet |
|---|---|---|---|---|---|
| NAL unit type | NAL unit type | NAL unit type | NAL unit type | NAL unit type | NAL unit type |
| | | Header mvc extension view_id = 1 | | Header mvc extension view_id = 1 | |
| NAL payload | NAL payload | NAL payload | NAL payload | NAL payload | NAL payload |

**BASE STREAM**

Access Unit Delimiter  |  SPS  |  PPS  |  SEI  |  Coded Slice

**ADDITIONAL STREAM**

Marker Delimiter  |  Subset SPS  |  PPS  |  SEI  |  Coded Slice

EP 2 645 725 B1

# FIG. 64

substream IDENTIFICATION INFORMATION IN NAL unit header

| NAL unit header MVC extension syntax | | |
|---|---|---|
| nal_unit_header_mvc_extension( ) { | C | Descriptor |
| non_idr_flag | All | u(1) |
| priority_id | All | u(6) |
| view_id | All | u(10) |
| temporal_id | All | u(3) |
| anchor_pic_flag | All | u(1) |
| inter_view_flag | All | u(1) |
| reserved_one_bit | All | u(1) |
| } | | |

# FIG. 65

PROCESS OF RECEIVED PACKET IN RECEIVER
(READ NAL PACKET BASED ON IDENTIFICATION INFORMATION IN CASE OF 3D STREAM)

| NAL packet | NAL packet | NAL packet | NAL packet | NAL packet | NAL packet |
|---|---|---|---|---|---|
| NAL unit type | NAL unit type | NAL unit type | NAL unit type | NAL unit type | NAL unit type |
| | | Header mvc extension view_id = 1 | | Header mvc extension view_id = 1 | |
| NAL payload | NAL payload | NAL payload | NAL payload | NAL payload | NAL payload |

**BASE STREAM**

| Access Unit Delimiter | SPS | PPS | SEI | Coded Slice |
|---|---|---|---|---|

X          X

**ADDITIONAL STREAM**

| Marker Delimiter | Subset SPS | PPS | SEI | ✕ |
|---|---|---|---|---|

EP 2 645 725 B1

# FIG. 66

Time →

**TS**

[PID 01] **ES1**
Stream_Type
=0x1B

| tn-1 | tn | tn+1 |
|---|---|---|
| 1st stream MVC | 1st stream MVC | 1st stream MVC |

| view_position[0] = 1 | view_position[0] = 0 | view_position[0] = 1 |
| view_position[1] = 0 | view_position[1] = 0 | view_position[1] = 0 |
| view_position[2] = 2 | view_position[2] = 0 | view_position[2] = 2 |

[PID 10] **ES2**
Stream_Type
=0x20

| 2nd stream MVC | 2nd stream MVC | 2nd stream MVC |

[PID 11] **ES3**
Stream_Type
=0x20

| 3rd stream MVC | 3rd stream MVC | 3rd stream MVC |

3D            2D            3D

EP 2 645 725 B1

# FIG. 67

IN CASE WHERE THERE IS AUXILIARY
INFORMATION FOR IDENTIFICATION OF MODE

PERIOD Tn REPRESENTS PROGRAM OR SCENE.

EP 2 645 725 B1

FIG. 68

# FIG. 69

EP 2 645 725 B1

# FIG. 70

Time

**TS**

[PID 01]  ES1
Stream_Type
=0x1B

1st stream MVC — tn-1

view_position[0] = 1
view_position[1] = 0
view_position[2] = 2

1st stream MVC — tn

1st stream MVC — tn+1

view_position[0] = 1
view_position[1] = 0
view_position[2] = 2

[PID 10]  ES2
Stream_Type
=0x20

2nd stream MVC

2nd stream MVC

2nd stream MVC

[PID 11]  ES3
Stream_Type
=0x20

3rd stream MVC

3rd stream MVC

3rd stream MVC

3D          2D          3D

120

## FIG. 71

IN CASE WHERE THERE IS AUXILIARY
INFORMATION FOR IDENTIFICATION OF MODE

PERIOD Tn REPRESENTS PROGRAM OR SCENE.

EP 2 645 725 B1

## FIG. 72

Time →

3D PERIOD | 2D PERIOD | 3D PERIOD

SEI massage or user data

| | 2D | 2D | 2D | 2D | 2D | | |

ES1: AU 001 | AU 002 | AU 003 | AU 004 | AU 005 | AU 006 | AU 007 | AU 008 | AU 009 | AU 010 | AU 011 | AU 012 | AU 013 | AU 014 | AU 015 | AU 016

ES2: AU 001 | AU 002 | AU 003 | AU 004 | AU 005 | AU 006 | AU 007 | AU 008 | AU 009 | AU 010 | AU 011 | AU 012 | AU 013 | AU 014 | AU 015 | AU 016

ES3: AU 001 | AU 002 | AU 003 | AU 004 | AU 005 | AU 006 | AU 007 | AU 008 | AU 009 | AU 010 | AU 011 | AU 012 | AU 013 | AU 014 | AU 015 | AU 016

EP 2 645 725 B1

# FIG. 73

Time

3D PERIOD | 2D PERIOD | 3D PERIOD

SEI massage or
user data

2D

**ES1**

| AU 001 | AU 002 | AU 003 | AU 004 | AU 005 | AU 006 | AU 007 | AU 008 | AU 009 | AU 010 | AU 011 | AU 012 | AU 013 | AU 014 | AU 015 | AU 016 |

**ES2**

| AU 001 | AU 002 | AU 003 | AU 004 | AU 005 | AU 006 | AU 007 | AU 008 | AU 009 | AU 010 | AU 011 | AU 012 | AU 013 | AU 014 | AU 015 | AU 016 |

**ES3**

| AU 001 | AU 002 | AU 003 | AU 004 | AU 005 | AU 006 | AU 007 | AU 008 | AU 009 | AU 010 | AU 011 | AU 012 | AU 013 | AU 014 | AU 015 | AU 016 |

EP 2 645 725 B1

# FIG. 74

Time →

TS

tn-1 | tn | tn+1

**[PID 01] ES1**
Stream_Type =0x02

1st stream MPEG2 | 1st stream MPEG2 | 1st stream MPEG2

arrangement_type = "2D"

**[PID 10] ES2**
Stream_Type =0x23

2nd stream AVC | | 2nd stream AVC

**[PID 11] ES3**
Stream_Type =0x23

3rd stream AVC | | 3rd stream AVC

3D | 2D | 3D

EP 2 645 725 B1

# FIG. 75

IN CASE WHERE THERE IS AUXILIARY
INFORMATION FOR IDENTIFICATION OF MODE

PERIOD Tn REPRESENTS PROGRAM OR SCENE.

## FIG. 76

Time →

| 3D PERIOD | 2D PERIOD | 3D PERIOD |

SEI massage

ES1:
| 3D | 3D | 3D | 3D | 3D | 3D | 3D | 3D | 3D | 2D | 2D | 2D | 2D | 2D | 3D | 3D |

| AU 001 | AU 002 | AU 003 | AU 004 | AU 005 | AU 006 | AU 007 | AU 008 | AU 009 | AU 010 | AU 011 | AU 012 | AU 013 | AU 014 | AU 015 | AU 016 |

ES2:
| AU 001 | AU 002 | AU 003 | AU 004 | AU 005 | AU 006 | AU 007 | AU 008 | AU 009 | AU 010 | AU 011 | AU 012 | AU 013 | AU 014 | AU 015 | AU 016 |

EP 2 645 725 B1

# FIG. 77

FIG. 78

Time

TS

tn-1 | tn | tn+1

[PID 01] ES1
Stream_Type
=0x1B

1st stream MVC | 1st stream MVC | 1st stream MVC

view_position[0] = 0
view_position[1] = 1

view_position[0] = 0
view_position[1] = 0

view_position[0] = 0
view_position[1] = 1

[PID 10] ES2
Stream_Type
=0x20

2nd stream
MVC

2nd stream
MVC

2nd stream
MVC

3D | 2D | 3D

EP 2 645 725 B1

# FIG. 79

(a) CASE D

(b) CASE E

(c) CASE F

AU | : PPS | Substream SEIs | Slice |    AV | PPS | Substream SEIs | Slice Skipped MB    3D : 3D signaling    2D : 2D signaling

EP 2 645 725 B1

# FIG. 80

CONFIGURATION EXAMPLE 1 OF 3D/2D STREAM IN CASE OF MVC

EP 2 645 725 B1

# FIG. 81

CONFIGURATION EXAMPLE 2 OF 3D/2D STREAM IN CASE OF MVC

# FIG. 82

CASE WHERE BASE STREAM AND ADDITIONAL STREAM ARE ALWAYS PRESENT AND
SIGNALING IS PERFORMED USING PROGRAM LOOP AND VIDEO ES LOOP OF PMT

**PMT**

EVENT_1 | EVENT_2

3D service | 2D(Non-3D) service    time

**Stereoscopic_program_info descriptor**
Stereoscopic_service_type   '011'  '011'  '011'  '001'  '001'  '001'

Stream_Type 0x02
  **MPEG2_stereoscopic_video_format desc()**
  arrangement_type = '2D'   '2D'  '2D'  '2D'

Ta   Tb

**video**

Base stream (Stream_Type 0x02)
  inside userdata,
  frame_packing_arrangement_data()

Additional stream (Stream_Type 0x23)

L | L | L | L
| | | usr | usr | usr | usr
| | | Arrangement_type = '2D'

R | L | R | L

3D sequence | 2D sequence | 3D sequence | 2D sequence

3D | 3D (flat) | 3D | 2D

# FIG. 83

## Stereoscopic_program_info_descriptor

(a)

| Syntax | No. of bits | Format |
|---|---|---|
| Stereoscopic_program_info_descriptor() {<br>        descriptor_tag<br>        descriptor_length<br>        reserved<br>        stereoscopic_service_type<br>} | <br>8<br>8<br>5<br>3 | <br>uimsbf<br>uimsbf<br>bslbf<br>bslbf |

(b)

| Values | Description |
|---|---|
| 000 | Reserved |
| 001 | 2D (monoscopic) service |
| 010 | Frame compatible stereoscopic 3D service |
| 011 | Service-compatible stereoscopic 3D service |
| 100 TO 111 | Reserved |

EP 2 645 725 B1

# FIG. 84

MPEG2_stereoscopic_video_format_type_descriptor

| Syntax | No. of bits | Format |
|---|---|---|
| MPEG2_stereoscopic_video_format_type_descriptor{ | | |
| descriptor_tag | 8 | uimsbf |
| descriptor_length | 8 | uimsbf |
| Stereo_video_arrangement_type_present | 1 | bslbf |
| if (stereo_video_arrangement_type_present){ | | |
| arrangement_type | 7 | bslbf |
| } | | |
| else { | | |
| reserved | 7 | bslbf |
| } | | |
| } | | |

EP 2 645 725 B1

# FIG. 85

Transport Stream

PMT

Program_loop

- Stereoscopic_program_info descriptor
  Stereoscopic_service_type = '011' / '001'

video ES loop

Stream_type (= '0x02' ( "MPEG2 video") )
Elementary PID (PID1)
- MPEG2_stereoscopic_video_format desc()
  arrangement_type = 2D

Stream_type (= '0x23' ( "H.264") )
Elementary PID (PID2)

PID1: video PES1          (Base stream)

Userdata
frame_packing_arrangement_data()
arrangement_type
="2D"

PID2: video PES2          (Additional stream)

EP 2 645 725 B1

# FIG. 86

CASE WHERE BASE STREAM AND ADDITIONAL STREAM ARE ALWAYS PRESENT AND
SIGNALING IS PERFORMED USING VIDEO ES LOOP OF PMT

**PMT**

EVENT_1

EVENT_2

3D service

2D(Non-3D) service    time

**Stereoscopic_program_info descriptor**

Stereoscopic_service_type

'011'   '011'   '011'   '011'   '011'   '011'

Stream_Type 0x02

**MPEG2_stereoscopic_video_format desc()**

arrangement_type = '2D'

'2D'   '2D'   '2D'

Ta                                          Tb

**video**

L   L   L   L

usr | usr | usr | usr

Base stream (Stream_Type 0x02)
  inside userdata,
  frame_packing_arrangement_data()

Arrangement_type = '2D'

R   L   R   L

Additional stream (Stream_Type 0x23)

3D sequence   2D sequence   3D sequence   2D sequence

3D   3D   3D   2D

(flat)

EP 2 645 725 B1

## FIG. 87

CASE WHERE BASE STREAM AND ADDITIONAL STREAM ARE ALWAYS PRESENT AND
SIGNALING IS PERFORMED USING PROGRAM LOOP OF PMT

EP 2 645 725 B1

# FIG. 88

CASE WHERE ONLY BASE STREAM IS PRESENT IN 2D PERIOD AND
SIGNALING IS PERFORMED USING PROGRAM LOOP AND VIDEO ES LOOP OF PMT

**PMT**

EVENT_1 — 3D service
EVENT_2 — 2D(Non-3D) service
time

**Stereoscopic_program_info descriptor**
Stereoscopic_service_type
'011'  '011'  '011'  '001'  '001'  '001'

Stream_Type 0x02
**MPEG2_stereoscopic_video_format desc()**
arrangement_type = '2D'
'2D'  '2D'  '2D'

Ta                                        Tb

**video**

Base stream (Stream_Type 0x02)
inside userdata,
frame_packing_arrangement_data()

Additional stream (Stream_Type 0x23)

L  L  L  L
usr  usr  usr  usr
Arrangement_type = '2D'

R  L  R

3D sequence    2D sequence    3D sequence    2D sequence

3D    3D    3D    2D
(flat)

EP 2 645 725 B1

# FIG. 89

CASE WHERE ONLY BASE STREAM IS PRESENT IN 2D PERIOD AND
SIGNALING IS PERFORMED USING VIDEO ES LOOP OF PMT

## FIG. 90

CASE WHERE ONLY BASE STREAM IS PRESENT IN 2D PERIOD AND
SIGNALING IS PERFORMED USING PROGRAM LOOP OF PMT

PMT

EVENT_1

EVENT_2

3D  service

2D(Non-3D)  service

time

**Stereoscopic_program_info descriptor**

Stereoscopic_service_type

'011' '011' '011' '001' '001' '001'

Ta

Tb

video

Base stream (Stream_Type 0x02)
    inside userdata,
    frame_packing_arrangement_data()

Additional stream (Stream_Type 0x23)

L L L L

usr usr usr usr

Arrangement_type = '2D'

R L R

3D sequence  2D sequence  3D sequence  2D sequence

3D  3D
(flat)  3D  2D

EP 2 645 725 B1

## FIG. 91

PROCESS OF RECEIVED PACKET IN RECEIVER (IN CASE OF SCALABLE STREAM)

| NAL packet | NAL packet | NAL packet | NAL packet | NAL packet | NAL packet |
|---|---|---|---|---|---|
| NAL unit type ... NAL payload | NAL unit type ... NAL payload | NAL unit type — Header svc extension dependency_id = 1 — NAL payload | NAL unit type ... NAL payload | NAL unit type — Header svc extension dependency_id = 1 — NAL payload | NAL unit type ... NAL payload |

BASE STREAM

| Access Unit Delimiter | SPS | PPS | SEI | Coded Slice |

ADDITIONAL STREAM

| Marker Delimiter | Subset SPS | PPS | SEI | Coded Slice |

EP 2 645 725 B1

# FIG. 92

substream IDENTIFICATION INFORMATION IN NAL unit header

| NAL unit header SVC extension syntax | | |
| --- | --- | --- |
| nal_unit_header_svc_extension( ) { | C | Descriptor |
| idr_flag | All | u(1) |
| priority_id | All | u(6) |
| no_inter_layer_pred_flag | All | u(1) |
| dependency_id | All | u(3) |
| quality_id | All | u(4) |
| temporal_id | All | u(3) |
| use_ref_base_pic_flag | All | u(1) |
| discardable_flag | All | u(1) |
| output_flag | All | u(1) |
| reserved_three_2bits | All | u(2) |
| } | | |

# FIG. 93

PROCESS OF RECEIVED PACKET IN RECEIVER
(READ NAL PACKET BASED ON IDENTIFICATION INFORMATION IN CASE OF SCALABLE STREAM)

| NAL packet | NAL packet | NAL packet | NAL packet | NAL packet | NAL packet |
|---|---|---|---|---|---|
| NAL unit type | NAL unit type | NAL unit type | NAL unit type | NAL unit type | NAL unit type |
| | | Header svc extension dependency_id = 1 | | Header svc extension dependency_id = 1 | |
| NAL payload | NAL payload | NAL payload | NAL payload | NAL payload | NAL payload |

**BASE STREAM**

| Access Unit Delimiter | SPS | PPS | SEI | Coded Slice |
|---|---|---|---|---|

X            X

**ADDITIONAL STREAM**

| Marker Delimiter | Subset SPS | PPS | SEI | ✕ |
|---|---|---|---|---|

EP 2 645 725 B1

# FIG. 94

OVERALL TS

Time

PMT (ES x 2)  PMT (ES x 1)  PMT (ES x 2)

PERIOD OF 2 ES | PERIOD OF 1 ES | PERIOD OF 2 ES

ES1 | AU 001 | AU 002 | AU 003 | AU 004 | AU 005 | AU 006 | AU 007 | AU 008 | AU 009 | AU 010 | AU 011 | AU 012 | AU 013 | AU 014 | AU 015 | AU 016

ES2 | AU 001 | AU 002 | AU 003 | AU 004 | AU 005 | AU 006 | AU 007 | AU 008 | AU 009 | AU 015 | AU 016

AU : Access Unit

EP 2 645 725 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20030095177 A
- WO 2009119955 A
- EP 1501316 A

### Non-patent literature cited in the description

- **THOMAS WIEGAND et al.** Draft Errata List with Revision-Marked Corrections for H.264/AVC. *Joint Video Team (JVT) of ISO/IEC MPEG & ITU-T VCEG,* 2003
- Joint Draft 4.0 on Multiview Video Coding. *Joint Video Team of ISO/IEC MPEG & ITU-T VCEG, JVT-X209,* July 2007
- **HEIKO SCHWARZ ; DETLEV MARPE ; THOMAS WIEGAND.** Overview of the Scalable Video Coding Extension of the H.264/AVC Standard. *IEEE TRANSACTIONS ON CIRCUITS AND SYSTEMS FOR VIDEO TECHNOLOGY,* September 2007, vol. 17 (9), 1103-1120